# EUROPEAN PATENT APPLICATION

(11) **EP 4 654 508 A1**
(43) Date of publication of application: **26.11.2025**
(21) Application number: 23916774.5
(22) Date of filing: 19.01.2023
(51) Int. Cl.: H04L 5/00, H04W 76/15, H04W 36/08

(54) **WIRELESS COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); LUO, Chaoming, Dongguan, Guangdong 523860 (CN); LU, Liuming, Dongguan, Guangdong 523860 (CN)
(74) Representative: Mewburn Ellis LLP
(86) International application number: PCT/CN2023/073103
(87) International publication number: WO 2024/152292

(57) **Abstract**

Embodiments of the present disclosure provide a method for wireless communication and a device, which are designed with discovery of multi-access point (AP) multiple link device (MLD) coordination capabilities, setup of a multi-AP MLD candidate set, and a frame structure and network architecture used therefor, such that multi-AP MLD coordinated transmission can be implemented. The method for wireless communication includes receiving, by a first AP MLD, an association request frame sent by a first non-AP MLD. The association request frame is used to request association with a target multi-AP MLD candidate set, and the association request frame contains first multi-link information, where the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

## Description

### TECHNICAL FIELD

Embodiments of the present disclosure relates to the field of communications, and in particularly, to a method for wireless communication and a device.

### BACKGROUND

With the evolution of technology, the capabilities of access point multi-link devices (AP MLDs) are insufficient to meet transmission requirements. How to enhance the capabilities of the AP MLD to satisfy transmission requirements is a problem that needs to be addressed.

### SUMMARY

Embodiments of the present disclosure provide a method for wireless communication and a device, which are designed with discovery of multi-AP MLD coordination capabilities, setup of a multi-AP MLD candidate set, and a frame structure and network architecture used therefor, such that multi-AP MLD coordinated transmission can be implemented.

According to a first aspect, a method for wireless communication is provided. The method includes receiving, by a first AP MLD, an association request frame sent by a first non-AP MLD. The association request frame is used to request association with a target multi-AP MLD candidate set, and the association request frame contains first multi-link information, where the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

According to a second aspect, a method for wireless communication is provided. The method includes sending, by a first non-AP MLD, an association request frame to a first AP MLD. The association request frame is used to request association with a target multi-AP MLD candidate set, and the association request frame contains first multi-link information, where the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

In a third aspect, a method for wireless communication is provided. The method includes receiving, by a second AP MLD, a multi-AP MLD candidate set request frame sent by a first AP MLD. The multi-AP MLD candidate set request frame contains coordination capabilities and multi-link information of a multi-AP MLD candidate set that the first AP MLD requests to set up.

In a fourth aspect, an AP MLD is provided, where the AP MLD is configured to execute the method in the first aspect. Specifically, the AP MLD includes a functional module(s) configured to execute the method in the first aspect.

In a fifth aspect, a non-AP MLD is provided, where the non-AP MLD is configured to execute the method in the second aspect. Specifically, the AP MLD includes a functional module(s) configured to execute the method in the second aspect.

In a sixth aspect, an AP MLD is provided, where the AP MLD is configured to execute the method in the third aspect. Specifically, the AP MLD includes a functional module(s) configured to execute the method in the third aspect.

In a seventh aspect, an AP MLD is provided, where the AP MLD includes a processor and a memory. The memory is configured to store a computer program, and the processor is configured to call and execute the computer program stored in the memory, such that the AP MLD performs the method in the first aspect.

In an eighth aspect, a non-AP MLD is provided, where the non-AP MLD includes a processor and a memory. The memory is configured to store a computer program, and the processor is configured to call and execute the computer program stored in the memory, such that the non-AP MLD performs the method in the second aspect.

In a ninth aspect, an AP MLD is provided, where the AP MLD includes a processor and a memory. The memory is configured to store a computer program, and the processor is configured to call and execute the computer program stored in the memory, such that the AP MLD performs the method in the third aspect.

In a tenth aspect, an apparatus is provided, where the apparatus is configured to implement any one of the methods in the first to third aspects. Specifically, the apparatus includes a processor configured to call and execute a computer program from a memory, such that a device equipped with the apparatus performs any one of the methods in the first to third aspects.

In an eleventh aspect, a computer-readable storage medium is provided. The computer-readable storage medium is configured to store a computer program, where the computer program enables a computer to perform any one of the methods in the first to third aspects.

In a twelfth aspect, a computer program product is provided. The computer program product includes computer program instructions, where the computer program instructions enable a computer to perform any one of the methods in the first to third aspects.

In a thirteenth aspect, a computer program is provided. The computer program, when executed on a computer, enables the computer to perform any one of the methods in the first to third aspects.

By means of the foregoing technical solutions, the discovery of multi-AP MLD coordination capabilities, the setup of a multi-AP MLD candidate set, and the frame structure and network architecture used thereby are designed, thereby enabling multi-AP MLD coordinated transmission.

### BRIEF DESCRIPTION OF THE DRAWINGS

FIG. 1 is a schematic diagram of a communication system architecture to which embodiments of the present disclosure are applied.
FIG. 2 is a schematic diagram illustrating setup of multiple links between an access point (AP) multiple link device (MLD) and a non-AP MLD according to the present disclosure.
FIG. 3 is a schematic diagram illustrating multi-AP coordinated transmission according to the present disclosure.
FIG. 4 is a schematic diagram illustrating joint transmission (J-TX) according to the present disclosure.
FIG. 5 is a schematic diagram illustrating multiple non-collocated APs forming an AP MLD according to the present disclosure.
FIG. 6 is a schematic flow chart of a method for wireless communication according to embodiments of the present disclosure.
FIG. 7 is a schematic diagram of a frame body of an association request frame according to embodiments of the present disclosure.
FIG. 8 is a schematic diagram of a frame body of an association response frame according to embodiments of the present disclosure.
FIG. 9 is a schematic diagram of a multi-AP MLD candidate set info field according to embodiments of the present disclosure.
FIG. 10 is a schematic flow chart illustrating association of a non-AP MLD with a multi-AP MLD candidate set and setup of multiple links according to embodiments of the present disclosure.
FIG. 11 is a schematic diagram of a first virtual AP MLD according to embodiments of the present disclosure.
FIG. 12 is a schematic diagram of another first virtual AP MLD according to embodiments of the present disclosure.
FIG. 13 is a schematic diagram of a second virtual AP MLD according to embodiments of the present disclosure.
FIG. 14 is a schematic diagram of another second virtual AP MLD according to embodiments of the present disclosure.
FIG. 15 is a schematic diagram of yet another second virtual AP MLD according to embodiments of the present disclosure.
FIG. 16 is a schematic diagram of a multi-AP MLD candidate set info element according to embodiments of the present disclosure.
FIG. 17 is a schematic flow chart illustrating a non-AP MLD discovering a multi-AP MLD candidate set according to n embodiments of the present disclosure.
FIG. 18 is a schematic diagram of a beacon frame carrying a multi-AP MLD candidate set info element according to embodiments of the present disclosure.
FIG. 19 is a schematic diagram of a probe request frame carrying a multi-AP MLD candidate set info request element according to embodiments of the present disclosure.
FIG. 20 is a schematic diagram of a probe response frame carrying a multi-AP MLD candidate set information element according to embodiments of the present disclosure.
FIG. 21 is a schematic diagram of a multi-link (ML) probe request frame carrying a multi-AP MLD candidate set info request element according to embodiments of the present disclosure.
FIG. 22 is a schematic diagram of a frame structure of a multi-AP MLD candidate set request frame according to embodiments of the present disclosure.
FIG. 23 is a schematic diagram of a frame structure of a multi-AP MLD candidate set response frame according to embodiments of the present disclosure.
FIG. 24 is a schematic diagram of a frame structure of a multi-AP MLD candidate set confirmation frame according to embodiments of the present disclosure.
FIG. 25 is a schematic flow chart illustrating setup of a multi-AP MLD candidate set according to embodiments of the present disclosure.
FIG. 26 is a schematic diagram of a frame body structure of a beacon frame carrying a multi-link element and multi-AP MLD coordination capabilities information according to embodiments of the present disclosure.
FIG. 27 is a schematic diagram of a frame body structure of a broadcast probe response frame carrying a multi-link element and multi-AP MLD coordination capabilities information according to embodiments of the present disclosure.
FIG. 28 is a schematic diagram of a frame body structure of a directional multi-gigabit (DMG) beacon frame according to embodiments of the present disclosure.
FIG. 29 is a schematic diagram of a frame body of a DMG beacon frame carrying a multi-link element and multi-AP MLD coordination capabilities information according to embodiments of the present disclosure.
FIG. 30 is a schematic diagram of a multi-link element according to embodiments of the present disclosure.
FIG. 31 is a schematic diagram of a multi-link control field according to embodiments of the present disclosure.
FIG. 32 is a schematic diagram of a common info field in a basic multi-link element according to embodiments of the present disclosure.
FIG. 33 is a schematic diagram of a link ID info field according to embodiments of the present disclosure.
FIG. 34 is a schematic diagram of a per-station (STA) profile field according to embodiments of the present disclosure.
FIG. 35 is a schematic diagram of a STA control field according to embodiments of the present disclosure.
FIG. 36 is a schematic diagram of a multi-AP MLD coordination capabilities element according to embodiments of the present disclosure.
FIG. 37 is a schematic flow chart illustrating exchange of multi-link information between multiple AP MLDs according to embodiments of the present disclosure.
FIG. 38 is a schematic block diagram of an AP MLD according to embodiments of the present disclosure.
FIG. 39 is a schematic block diagram of a non-AP MLD according to embodiments of the present disclosure.
FIG. 40 is another schematic block diagram of an AP MLD according to embodiments of the present disclosure.
FIG. 41 is a schematic block diagram of a communication device according to embodiments of the present disclosure.
FIG. 42 is a schematic block diagram of an apparatus according to embodiments of the present disclosure.
FIG. 43 is a schematic block diagram of a communication system according to embodiments of the present disclosure.

### DETAILED DESCRIPTION

The technical solutions of embodiments of the present disclosure are described below with reference to the accompanying drawings. It is apparent that the described embodiments are only part of, rather than all of, the embodiments of the present disclosure. All other embodiments obtained by those of ordinary skill in the art without creative effort based on the embodiments in the present disclosure shall fall within the protection scope of the present disclosure.

The technical solutions of the embodiments of the present disclosure may be applied to various communication systems, such as wireless local area networks (WLAN), wireless fidelity (WiFi), or other communication systems.

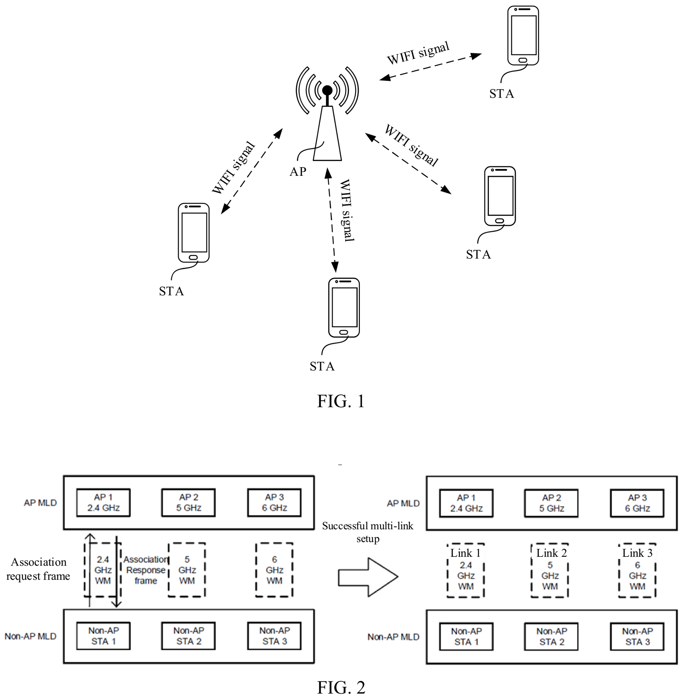

Referring to FIG. 1, FIG. 1 is a schematic diagram of a wireless communication system provided in embodiments of the present disclosure. As illustrated in FIG. 1, the wireless communication system may include an access point (AP) and a station (STA).

In some scenarios, the AP may also be referred to as an AP STA, that is, in a certain sense, the AP is also a type of STA. In some scenarios, the STA may also be referred to as a non-AP STA.

In some embodiments, the STA may include an AP STA and a non-AP STA. The communication in the communication system may occur between an AP and a non-AP STA, between non-AP STAs, or between a STA and a peer STA. The peer STA may refer to a device for communicating with a peer of the STA. For example, the peer STA may be an AP or a non-AP STA.

The AP may be a bridge for connecting a wired network and a wireless network. The AP is mainly used for connecting various wireless network clients together and then connecting the wireless network to an Ethernet. The AP may be a terminal device (for example, a mobile phone) having a Wi-Fi chip or a network device (for example, a router).

It may be understood that, a role of the STA in the communication system is not absolute. For example, in some scenarios, when a mobile phone is connected to a router, the mobile phone is a non-AP STA. When the mobile phone is a hotspot for another mobile phone, the mobile phone serves as an AP.

The AP and the non-AP STA may be devices applied to vehicle to everything (V2X); internet of things (IoT) nodes, sensors, etc. in IoT; smart cameras, smart remote controls, smart water meters and electricity meters, etc. in smart home; sensors in smart city, etc.

In some embodiments, the non-AP STA may support 802.11be standards. The non-AP STA may also support various current and future 802.11 WLAN standards, such as 802.11ax, 802.11ac, 802.11n, 802.11g, 802.11b, 802.11a, etc.

In some embodiments, the AP may be a device that supports 802.11be standards. The AP may also be a device that supports various current and future 802.11 WLAN standards, such as 802.11ax, 802.11ac, 802.11n, 802.11g, 802.11b, 802.11a, etc.

In embodiments of the disclosure, the STA may be a device supporting WLAN/Wi-Fi technology, such as a mobile phone, a tablet (pad), a computer, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, a wireless communication chip, an application specific integrated circuit (ASIC), a system-on-chip (SOC), etc.

A frequency band supported by WLAN technology may include, but is not limited to, a low frequency band (2.4 Giga Hertz (GHz), 5 GHz, and 6 GHz), and a high frequency band (45 GHz, 60 GHz).

One or more links exist between the STA and the AP. In some embodiments, the STA and the AP support multi-band communication, for example, communicate simultaneously on frequency bands of 2.4 GHz, 5 GHz, 6 GHz, 45 GHz, and 60 GHz, or communicate simultaneously on different channels of the same frequency band (or different frequency bands), thereby improving communication throughput and/or reliability between devices. Such a device is generally referred to as a multi-band device, or referred to as a multi-link device (MLD), and is sometimes referred to as a multi-link entity or a multi-band entity. The MLD may be an AP or an STA. When the MLD is an AP, the MLD includes one or more APs. When the MLD is an STA, the MLD includes one or more non-AP STAs.

An MLD including one or more APs may be referred to as an AP MLD, and an MLD including one or more non-AP STAs may be referred to as a non-AP MLD.

In embodiments of the disclosure, the AP MLD may include multiple APs, and the non-AP MLD includes multiple STAs. Multiple links may be set up between an AP(s) in the AP MLD and an STA(s) in the non-AP MLD, and the AP in the AP MLD and the corresponding STA in the non-AP MLD may perform data communication over a corresponding link.

The AP is a device deployed in WLAN to provide wireless communication functions for the STA. The STA may include: a user equipment (UE), an access terminal, a subscriber unit, a subscriber station, a mobile station, a remote station, a remote terminal, a mobile device, a wireless communication device, a user agent, or a user device. Optionally, the STA may also be a cellular phone, a cordless phone, a session initiation protocol (SIP) phone, a wireless local loop (WLL) station, a personal digital assistant (PDA), a handheld device with wireless communication functions, a computing device or other processing device connected to a wireless modem, a vehicle-mounted device, or a wearable device, which is not limited in embodiments of the disclosure.

Optionally, the STA and the AP both support institute of electrical and electronics engineers (IEEE) 802.11 standards.

It may be understood that, the terms "system" and "network" herein are usually used interchangeably throughout this disclosure. The term "and/or" herein only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, "indication" referred to in embodiments of the disclosure may be a direct indication, may be an indirect indication, or may mean that there is an association. For example, *A* indicates *B* may mean that *A* directly indicates *B,* for instance, *B* can be obtained according to *A;* may mean that *A* indirectly indicates *B,* for instance, *A* indicates C, and *B* can be obtained according to C; or may mean that that there is an association between *A* and B.

Terms used in implementations of the disclosure are only intended for explaining embodiments of the disclosure, rather than limiting the disclosure. The terms "first", "second", "third", "fourth", and the like in the specification and claims of the disclosure, and the accompanying drawings are used to distinguish different objects, and are not necessarily used to describe a particular order. In addition, the terms "include", "comprise", and "have" as well as variations thereof are intended to cover non-exclusive inclusion.

In the elaboration of embodiments of the disclosure, the term "correspondence" may mean that there is a direct or indirect correspondence between the two, or may mean that there is an association between the two, or may mean a relationship of indicating and being indicated or configuring and being configured, etc.

In embodiments of the disclosure, the "pre-defined" or "pre-configured" can be implemented by pre-storing a corresponding code(s) or a corresponding table(s) in a device (for example, including the STA and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, a Wi-Fi protocol and a related protocol applied to a future Wi-Fi communication system, and the disclosure is not limited in this regard.

To facilitate understanding of technical solutions of embodiments of the disclosure, multi-link operations solved in the disclosure will be described below.

Multiple links may be set up between an AP MLD and a non-AP MLD over different bands/channels. As illustrated in FIG. 2, three links (link 1, link 2, and link 3) are set up between an AP MLD and a non-AP MLD at 2.4 GHz, 5 GHz, and 6 GHz, respectively. These three links may operate simultaneously. AP 1 operating on link 1 (2.4 GHz), AP 2 operating on link 2 (5 GHz), and AP 3 operating on link 3 (6 GHz) are referred to as affiliated APs of an AP MLD. Similarly, non-AP STA 1 operating on link 1 (2.4 GHz), non-AP STA 2 operating on link 2 (5 GHZ), and non-AP STA 3 operating on link 3 (6 GHz) are referred to as affiliated STAs of a non-AP MLD.

To facilitate better understanding of the embodiments of the present disclosure, multi-AP coordination involved in the present disclosure will be described.

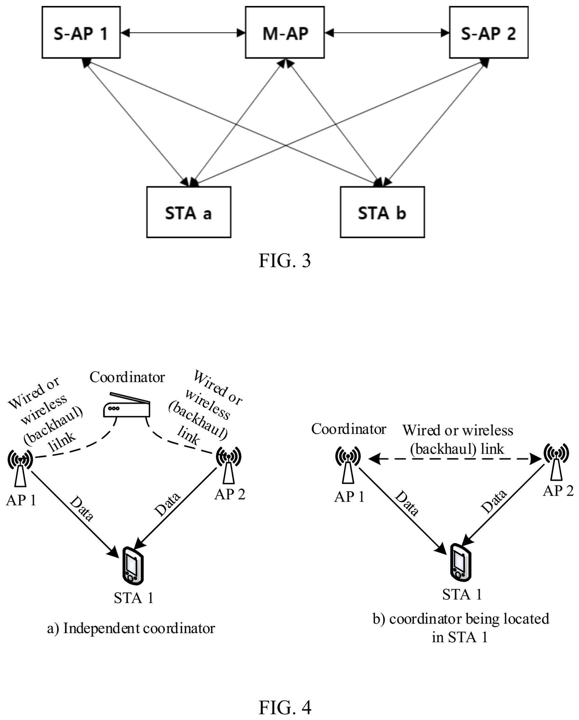

As illustrated in FIG. 3, multiple APs may form a multi-AP candidate set. One of the APs serves as a master AP (MAP or M-AP), which manages and controls slave APs (SAP or SAPs) in the multi-AP candidate set through wired or wireless links (also referred to as a backhaul links). The APs in the multi-AP candidate set may then perform coordination to provide services to STAs (e.g., STA *a* and STA *b*).

The multi-AP coordination may be implemented in various manners, such as coordinated orthogonal frequency division multiple access (C-OFDMA), coordinated time division multiple access (C-TDMA), coordinated beamforming (C-BF), joint transmission (J-TX), coordinated spatial reuse (C-SR), coordinated uplink multi-user multiple-input multiple-output (C-UL MU-MIMO), etc.

To facilitate better understanding of the embodiments of the present disclosure, J-TX for multi-AP coordination involved in the present disclosure will be described.

As illustrated in FIG. 4, under a multi-AP architecture, a coordinator for multiple APs may be a separate device, and each AP is connected to the coordinator via a wired or wireless connection. In addition, the coordinator for multiple APs may be one of the APs (i.e., a master AP), and other APs (i.e., slave APs) are connected to the master AP (i.e., an AP with a coordinator) via wired or wireless connections. FIG. 4 is a schematic diagram illustrating a case in which multiple APs perform J-TX to serve a STA, where AP 1 and AP 2 simultaneously send data to STA 1 on the same band using steering matrices obtained from channel sounding.

To facilitate better understanding of the embodiments of the present disclosure, a case in which logical multiple APs form multiple links involved in the present disclosure will be described.

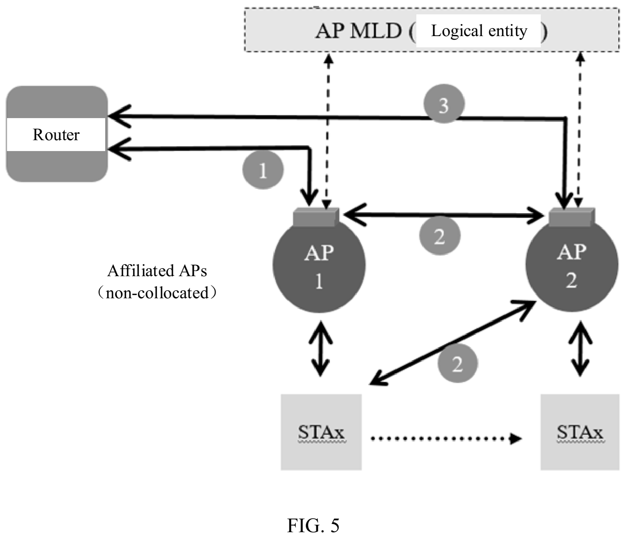

As illustrated in FIG. 5, multiple non-collocated APs are treated as a single logical AP MLD entity. When a STA connects to the AP MLD, the multiple non-collocated APs can be regarded as different affiliated APs of the AP MLD, thereby enabling the use of a multi-link operation architecture in which the AP MLD provides services for an STA using different affiliated APs over different links. This facilitates seamless roaming of the STA. As illustrated in FIG. 5, STA *x* connects to AP 1 and AP 2 via multiple links. When STA x moves, a link with AP 1 may be disconnected without affecting a link with AP 2. As a result, mobility support for the STA can be improved.

To facilitate better understanding of the embodiments of the present disclosure, the problems addressed by the present disclosure will be illustrated.

With the widespread adoption of mobile communication devices and the rapid development of mobile internet, the demand for anytime, anywhere access to the internet has become increasingly urgent. In office areas, shopping malls, and stadiums, AP deployment has become denser, and signal interference among devices has become increasingly severe. This poses significant challenges to meeting the demands for high-reliability, high-data-rate, and low-latency communications. Therefore, multi-AP coordination technology becomes particularly important. Typically, STAs requiring multi-AP coordination are located in overlapping coverage areas of multiple APs and are relatively far from each AP, resulting in poor signal quality and unstable links. In order to improve the communication rate of such STAs, enhance communication reliability, and provide a low-latency communication experience, the present disclosure proposes a communication scheme for multi-AP MLD coordination, in which multiple AP MLDs can provide high-reliability, high-data-rate, and low-latency services for a non-AP MLD.

To facilitate understanding of the technical solutions in the embodiments of the present disclosure, the technical solutions of the present disclosure will be described in detail below through specific embodiments. The following relevant technologies may be optionally combined with the technical solutions of the embodiments of the present disclosure in any manner, and all such combinations fall within the protection scope of the embodiments of the present disclosure. The embodiments of the present disclosure include at least part of the contents described below.

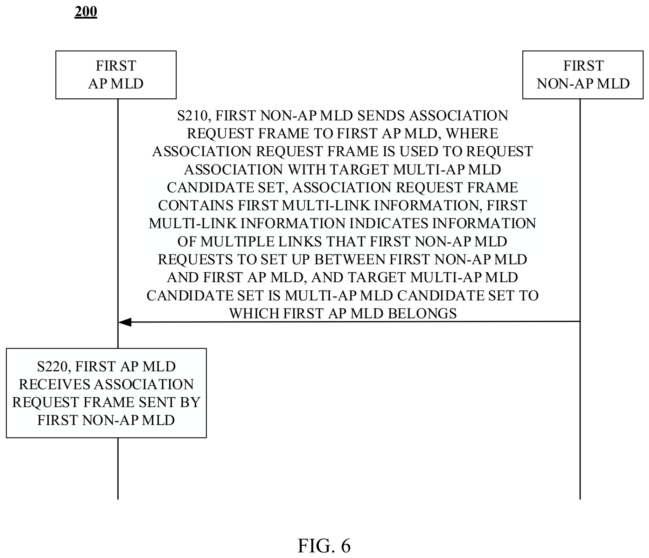

FIG. 6 is a schematic flow chart illustrating a method 200 for wireless communication according to embodiments of the present disclosure. As illustrated in FIG. 6, the method 200 for wireless communication may include at least part of the following.

S210, a first non-AP MLD sends an association request frame to a first AP MLD, where the association request frame is used to request association with a target multi-AP MLD candidate set, the association request frame contains first multi-link information, the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

S220, the first AP MLD receives the association request frame sent by the first non-AP MLD.

In the embodiments of the present disclosure, after the first non-AP MLD discovers the target multi-AP MLD candidate set to which the first AP MLD belongs, the first non-AP MLD sends the association request frame to the first AP MLD to request association with the target multi-AP MLD candidate set.

In the embodiments of the present disclosure, an AP MLD may belong to one or more multi-AP MLD candidate sets. That is, in addition to the target multi-AP MLD candidate set, the first AP MLD may also belong to other multi-AP MLD candidate sets.

In the embodiments of the present disclosure, each multi-AP MLD candidate set should include only one master AP MLD, and the remaining AP MLDs in each multi-AP MLD candidate set are slave AP MLDs.

In the embodiments of the present disclosure, each multi-AP MLD candidate set may support one or more multi-AP MLD coordination modes.

In the embodiments of the present disclosure, the term "field" may also be referred to as a "field" or "subfield." A field may occupy one or more bytes/octets, or one or more bits.

In some embodiments, the first AP MLD is a master AP MLD. Of course, in some embodiments, the first AP MLD may be a slave AP MLD, and the embodiments of the present disclosure are not limited in this regard.

In some embodiments, the first multi-link information is a basic multi-link field contained in the association request frame.

In some embodiments, the association request frame contains capabilities information of the first non-AP MLD for participating in multi-AP MLD coordination.

In some embodiments, the association request frame contains a multi-AP MLD coordination capabilities of non-AP MLD field, where the multi-AP MLD coordination capabilities of non-AP MLD field indicates capabilities information of the first non-AP MLD for participating in multi-AP MLD coordination.

In some embodiments, the multi-AP MLD coordination capabilities of non-AP MLD field includes, but is not limited to, at least one of the following: a C-SR field, a C-BF field, a C-UL MU MIMO field, a J-TX field, a C-OFDMA field, or a C-TDMA field. The C-SR field indicates whether the first non-AP MLD supports C-SR, the C-BF field indicates whether the first non-AP MLD supports C-BF, the C-UL MU MIMO field indicates whether the first non-AP MLD supports C-UL MU MIMO, and the J-TX field indicates whether the first non-AP MLD supports J-TX.

In some embodiments, the multi-AP MLD coordination capabilities of non-AP MLD field includes, but is not limited to, at least one of the following: the C-SR field or the C-UL MU MIMO field. The C-SR field indicates whether the first non-AP MLD supports C-SR, and the C-UL MU MIMO field indicates whether the first non-AP MLD supports C-UL MU MIMO.

In some embodiments, in a case where the multi-AP MLD coordination capabilities of non-AP MLD field does not include the C-BF field, the multi-AP MLD coordination capabilities of non-AP MLD field implicitly indicates that the first non-AP MLD supports C-BF; and/or, in a case where the multi-AP MLD coordination capabilities of non-AP MLD field does not include the J-TX field, the multi-AP MLD coordination capabilities of non-AP MLD field implicitly indicates that the first non-AP MLD supports J-TX.

In some embodiments, in a case where the multi-AP MLD coordination capabilities of non-AP MLD field does not include the C-OFDMA field, the multi-AP MLD coordination capabilities of non-AP MLD field implicitly indicates that the first non-AP MLD supports both uplink C-OFDMA and downlink C-OFDMA; and/or, in a case where the multi-AP MLD coordination capabilities of non-AP MLD field does not include the C-TDMA field, the multi-AP MLD coordination capabilities of non-AP MLD field implicitly indicates that the first non-AP MLD supports both uplink C-TDMA and downlink C-TDMA.

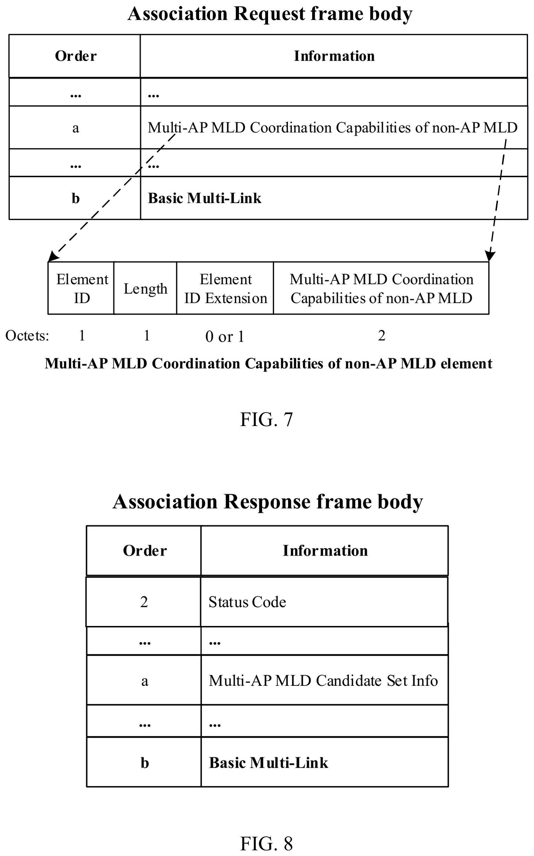

In some embodiments, the association request frame may be illustrated in FIG. 7, Element *a* in the association request frame is a multi-AP MLD coordination capabilities of non-AP MLD element, and the multi-AP MLD coordination capabilities of non-AP MLD element includes the multi-AP MLD coordination capabilities of non-AP MLD field. The multi-AP MLD coordination capabilities of non-AP MLD field indicates capabilities information of the first non-AP MLD for participating in multi-AP MLD coordination. Element *b* in the association request frame is a basic multi-link element, where the basic multi-link element indicates information of multiple links that the first non-AP MLD requests to set up between the first non-AP MLD and the first AP MLD.

In some embodiments, the first AP MLD sends an association response frame to the first non-AP MLD. The association response frame indicates whether the first non-AP MLD associates with the target multi-AP MLD candidate set, and the association response frame contains second multi-link information. The second multi-link information indicates acceptance or rejection of a portion or all of links that the first non-AP MLD requests to set up, and/or, the second multi-link information indicates information of multiple links set up between the first non-AP MLD and the first AP MLD.

In some embodiments, the second multi-link information is a basic multi-link field contained in the association response frame.

In some embodiments, the association response frame further contains at least one of the following: a status code field and a multi-AP MLD candidate set info field. The status code field indicates whether the first non-AP MLD successfully associates with a requested legacy basic service set (BSS) and/or a requested virtual BSS (VBSS), where the VBSS is a BSS corresponding to the target multi-AP MLD candidate set. The multi-AP MLD candidate set info field indicates multi-AP MLD coordination capabilities of the target multi-AP MLD candidate set.

In some embodiments, the status code field indicating success indicates that the first non-AP MLD successfully associates with both the legacy BSS and the VBSS; and/or, the status code field indicating VBSS failure indicates that the first non-AP MLD fails to associate with the requested VBSS; and/or, the status code field indicating failure indicates that the first non-AP MLD fails to associate with the requested legacy SSID.

In some embodiments, the association response frame may be illustrated in FIG. 8. Element 2 in the association response frame is a status code element, where the status code element contains a status code field, and the status code field indicates whether the first non-AP MLD successfully associates with the requested legacy BSS and/or VBSS. Element *a* in the association response frame is a multi-AP MLD candidate set info element, where the multi-AP MLD candidate set info element contains a multi-AP MLD candidate set info field, and the multi-AP MLD candidate set info field indicates multi-AP MLD coordination capabilities of the target multi-AP MLD candidate set. Element *b* in the association response frame is a basic multi-link element, where the basic multi-link element contains a basic multi-link field, and the basic multi-link field indicates information of multiple links set up between the first non-AP MLD and the first AP MLD.

In some embodiments, the multi-AP MLD candidate set info field in the association response frame contains a candidate set info field. The candidate set info field includes at least one of the following: a virtual basic service set identifier (VBSSID) field, a candidate set ID field, a sounding method field, a multi-AP MLD scheme field, a basic multi-link element, a number of AP MLDs field, or multiple AP MLD Info fields. The VBSSID field indicates a VBSSID of the target multi-AP MLD candidate set, the candidate set ID field indicates an ID of the target multi-AP MLD candidate set, the sounding method field indicates a channel sounding method supported by the target multi-AP MLD candidate set, the multi-AP MLD scheme field indicates a multi-AP MLD coordination mode supported by the target multi-AP MLD candidate set, the basic multi-link element indicates multi-link information of the target multi-AP MLD candidate set, the number of AP MLDs field indicates the number of member AP MLDs contained in the target multi-AP MLD candidate set, and the multiple AP MLD info fields respectively indicate relevant information of the multiple member AP MLDs contained in the target multi-AP MLD candidate set.

Optionally, the candidate set ID field may be replaced with a VBSS color field, and the VBSS color field may indicate the target multi-AP MLD candidate set.

In some embodiments, in the association response frame, the sounding method field includes at least one of the following: a sequence sounding field or a joint sounding field; or the sounding method field includes only the joint sounding field. The sequence sounding field indicates whether the target multi-AP MLD candidate set supports channel sounding by multiple AP MLDs in sequence, and the joint sounding field indicates whether the target multi-AP MLD candidate set supports channel sounding by multiple AP MLDs simultaneously and synchronously.

Optionally, in the association response frame, the sequence sounding field occupies 1 bit, where sequence sounding field = 1 indicates that the target multi-AP MLD candidate set supports channel sounding by multiple AP MLDs in sequence, and sequence sounding field = 0 indicates that the target multi-AP MLD candidate set does not support channel sounding by multiple AP MLDs in sequence. Alternatively, sequence sounding field = 0 indicates that the target multi-AP MLD candidate set supports channel sounding by multiple AP MLDs in sequence, and sequence sounding field = 1 indicates that the target multi-AP MLD candidate set does not support channel sounding by multiple AP MLDs in sequence.

Optionally, in the association response frame, the joint sounding field occupies 1 bit, where joint sounding field = 1 indicates that the target multi-AP MLD candidate set supports channel sounding by multiple AP MLDs simultaneously and synchronously, and joint sounding field = 0 indicates that the target multi-AP MLD candidate set does not support channel sounding by multiple AP MLDs simultaneously and synchronously. Alternatively, joint sounding field = 0 indicates that the target multi-AP MLD candidate set supports channel sounding by multiple AP MLDs simultaneously and synchronously, and joint sounding field = 1 indicates that the target multi-AP MLD candidate set does not support channel sounding by multiple AP MLDs simultaneously and synchronously.

In some embodiments, in a case where the sounding method field does not include the sequence sounding field, the target multi-AP MLD candidate set supports channel sounding by multiple AP MLDs in sequence by default.

In some embodiments, in the association response frame, the multi-AP MLD scheme field includes, but is not limited to, at least one of the following: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detect and discard field, or an interference-reduction field.

In some embodiments, in the association response frame, the multi-AP MLD scheme field includes, but is not limited to, at least one of the following: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, a multiplexing J-TX field, the full-bandwidth J-TX field, the partial-bandwidth J-TX field, the detect and discard field, or the interference-reduction field.

Specifically, in the association response frame, the uplink C-OFDMA field indicates whether the target multi-AP MLD candidate set supports uplink C-OFDMA. The uplink C-OFDMA field is an optional field and may occupy 1 bit when present. For example, uplink C-OFDMA field = 1 indicates that the target multi-AP MLD candidate set supports uplink C-OFDMA, and uplink C-OFDMA field = 0 indicates that the target multi-AP MLD candidate set does not support uplink C-OFDMA. For another example, uplink C-OFDMA field = 0 indicates that the target multi-AP MLD candidate set supports uplink C-OFDMA, and uplink C-OFDMA field = 1 indicates that the target multi-AP MLD candidate set does not support uplink C-OFDMA.

Specifically, in the association response frame, the downlink C-OFDMA field indicates whether the target multi-AP MLD candidate set supports downlink C-OFDMA. The downlink C-OFDMA field is an optional field and may occupy 1 bit when present. For example, downlink C-OFDMA field = 1 indicates that the target multi-AP MLD candidate set supports downlink C-OFDMA, and downlink C-OFDMA field = 0 indicates that the target multi-AP MLD candidate set does not support downlink C-OFDMA. For another example, downlink C-OFDMA field = 0 indicates that the target multi-AP MLD candidate set supports downlink C-OFDMA; downlink C-OFDMA field = 1 indicates that the target multi-AP MLD candidate set does not support downlink C-OFDMA.

Specifically, in the association response frame, the C-SR and C-OFDMA joint field indicates whether the target multi-AP MLD candidate set supports joint use of C-SR and C-OFDMA. The C-SR and C-OFDMA joint field is an optional field and may occupy 1 bit when present. For example, C-SR and C-OFDMA joint field = 1 indicates that the target multi-AP MLD candidate set supports joint use of C-SR and C-OFDMA, and C-SR and C-OFDMA joint field = 0 indicates that the target multi-AP MLD candidate set does not support joint use of C-SR and C-OFDMA. For another example, C-SR and C-OFDMA joint field = 0 indicates that the target multi-AP MLD candidate set supports joint use of C-SR and C-OFDMA, and C-SR and C-OFDMA joint field = 1 indicates that the target multi-AP MLD candidate set does not support joint use of C-SR and C-OFDMA

Specifically, in the association response frame, the C-SR and C-BF joint field indicates whether the target multi-AP MLD candidate set supports joint use of C-SR and C-BF. The C-SR and C-BF joint field is optional and may occupy 1 bit when present. For example, C-SR and C-BF joint field = 1 indicates that the target multi-AP MLD candidate set supports joint use of C-SR and C-BF, and C-SR and C-BF joint field = 0 indicates that the target multi-AP MLD candidate set does not support joint use of C-SR and C-BF. For another example, C-SR and C-BF joint field = 0 indicates that the target multi-AP MLD candidate set supports joint use of C-SR and C-BF, and C-SR and C-BF joint field = 1 indicates that the target multi-AP MLD candidate set does not support joint use of C-SR and C-BF.

Specifically, in the association response frame, the C-SR and J-TX joint field indicates whether the target multi-AP MLD candidate set supports joint use of C-SR and J-TX. The C-SR and J-TX joint field is optional and may occupy 1 bit when present. For example, C-SR and J-TX joint field = 1 indicates that the target multi-AP MLD candidate set supports joint use of C-SR and J-TX, and C-SR and J-TX joint field = 0 indicates that the target multi-AP MLD candidate set does not support joint use of C-SR and J-TX. For another example, C-SR and J-TX joint field = 0 indicates that the target multi-AP MLD candidate set supports joint use of C-SR and J-TX, and C-SR and J-TX joint field = 1 indicates that the target multi-AP MLD candidate set does not support joint use of C-SR and J-TX.

Specifically, in the association response frame, the C-SR and C-UL MU MIMO joint field indicates whether the target multi-AP MLD candidate set supports joint use of C-SR and C-UL MU MIMO. The C-SR and C-UL MU MIMO joint field is optional and may occupy 1 bit when present. For example, C-SR and C-UL MU MIMO joint field = 1 indicates that the target multi-AP MLD candidate set supports joint use of C-SR and C-UL MU MIMO, and C-SR and C-UL MU MIMO joint field = 0 indicates that the target multi-AP MLD candidate set does not support joint use of C-SR and C-UL MU MIMO. For another example, C-SR and C-UL MU MIMO joint field = 0 indicates that the target multi-AP MLD candidate set supports joint use of C-SR and C-UL MU MIMO, and C-SR and C-UL MU MIMO joint field = 1 indicates that the target multi-AP MLD candidate set does not support joint use of C-SR and C-UL MU MIMO.

Specifically, in the association response frame, the C-BF field indicates whether the target multi-AP MLD candidate set supports C-BF. The C-BF field is optional and may occupy 1 bit when present. For example, C-BF field = 1 indicates that the target multi-AP MLD candidate set supports C-BF, and C-BF field = 0 indicates that the target multi-AP MLD candidate set does not support C-BF. For another example, C-BF field = 0 indicates that the target multi-AP MLD candidate set supports C-BF, and C-BF field = 1 indicates that the target multi-AP MLD candidate set does not support C-BF.

Specifically, in the association response frame, the single-user J-TX field indicates whether the target multi-AP MLD candidate set supports joint transmission for a same user. The single-user J-TX field is optional and may occupy 1 bit when present. For example, single-user J-TX field = 1 indicates that the target multi-AP MLD candidate set supports joint transmission for a same user, and single-user J-TX field = 0 indicates that the target multi-AP MLD candidate set does not support joint transmission for a same user. For another example, single-user J-TX field = 0 indicates that the target multi-AP MLD candidate set supports joint transmission for a same user, and single-user J-TX field = 1 indicates that the target multi-AP MLD candidate set does not support joint transmission for a same user.

Specifically, in the association response frame, the multi-user J-TX field indicates whether the target multi-AP MLD candidate set supports joint transmission for multiple users. The multi-user J-TX field is optional and may occupy 1 bit when present. For example, multi-user J-TX field = 1 indicates that the target multi-AP MLD candidate set supports joint transmission for multiple users, and multi-user J-TX field = 0 indicates that the target multi-AP MLD candidate set does not support joint transmission for multiple users. For another example, multi-user J-TX field = 0 indicates that the target multi-AP MLD candidate set supports joint transmission for multiple users, and multi-user J-TX field = 1 indicates that the target multi-AP MLD candidate set does not support joint transmission for multiple users.

Specifically, in the association response frame, the diversity J-TX field indicates whether the target multi-AP MLD candidate set supports diversity-based joint transmission. The diversity J-TX field is optional and may occupy 1 bit when present. For example, diversity J-TX field = 1 indicates that the target multi-AP MLD candidate set supports diversity-based joint transmission, and diversity J-TX field = 0 indicates that the target multi-AP MLD candidate set does not support diversity-based joint transmission. For another example, diversity J-TX field = 0 indicates that the target multi-AP MLD candidate set supports diversity-based joint transmission, and diversity J-TX field = 1 indicates that the target multi-AP MLD candidate set does not support diversity-based joint transmission.

Specifically, in the association response frame, the multiplexing J-TX field indicates whether the target multi-AP MLD candidate set supports multiplexing-based joint transmission. The multiplexing J-TX field is optional and may occupy 1 bit when present. For example, multiplexing J-TX field = 1 indicates that the target multi-AP MLD candidate set supports multiplexing-based joint transmission, and multiplexing J-TX field = 0 indicates that the target multi-AP MLD candidate set does not support multiplexing-based joint transmission. For another example, multiplexing J-TX field = 0 indicates that the target multi-AP MLD candidate set supports multiplexing-based joint transmission, and multiplexing J-TX field = 1 indicates that the target multi-AP MLD candidate set does not support multiplexing-based joint transmission.

Specifically, in the association response frame, the full-bandwidth J-TX field indicates whether the target multi-AP MLD candidate set supports full bandwidth-based joint transmission. The full-bandwidth J-TX field is optional and may occupy 1 bit when present. For example, full-bandwidth J-TX field = 1 indicates that the target multi-AP MLD candidate set supports full bandwidth-based joint transmission, and full-bandwidth J-TX field = 0 indicates that the target multi-AP MLD candidate set does not support full bandwidth-based joint transmission. For another example, full-bandwidth J-TX field = 0 indicates that the target multi-AP MLD candidate set supports full bandwidth-based joint transmission, and full-bandwidth J-TX field = 1 indicates that the target multi-AP MLD candidate set does not support full bandwidth-based joint transmission.

Specifically, in the association response frame, the partial-bandwidth J-TX field indicates whether the target multi-AP MLD candidate set supports partial bandwidth-based joint transmission. The partial-bandwidth J-TX field is optional and may occupy 1 bit when present. For example, partial-bandwidth J-TX field = 1 indicates that the target multi-AP MLD candidate set supports partial bandwidth-based joint transmission, and partial-bandwidth J-TX field = 0 indicates that the target multi-AP MLD candidate set does not support partial bandwidth-based joint transmission. For another example, partial-bandwidth J-TX field = 0 indicates that the target multi-AP MLD candidate set supports partial bandwidth-based joint transmission, and partial-bandwidth J-TX field = 1 indicates that the target multi-AP MLD candidate set does not support partial bandwidth-based joint transmission.

Specifically, in the association response frame, the detect and discard field indicates whether the target multi-AP MLD candidate set supports, in a C-UL-MU MIMO mode, receiving and demodulating data/frames from other users and performing discarding to obtain useful data/frames. The detect and discard field is optional and may occupy 1 bit when present. For example, detect and discard field = 1 indicates that the target multi-AP MLD candidate set supports, in the C-UL-MU MIMO mode, receiving and demodulating data/frames from other users and performing discarding to obtain useful data/frames, and detect and discard field = 0 indicates that the target multi-AP MLD candidate set does not support, in the C-UL-MU MIMO mode, receiving and demodulating data/frames from other users and performing discarding to obtain useful data/frames. For another example, detect and discard field = 0 indicates that the target multi-AP MLD candidate set supports, in the C-UL-MU MIMO mode, receiving and demodulating data/frames from other users and performing discarding to obtain useful data/frames, and detect and discard field = 1 indicates that the target multi-AP MLD candidate set does not support, in the C-UL-MU MIMO mode, receiving and demodulating data/frames from other users and performing discarding to obtain useful data/frames.

Specifically, in the association response frame, the interference-reduction field indicates whether the target multi-AP MLD candidate set supports, in the C-UL-MU MIMO mode, directly treating data from other users as interference and directly receiving and demodulating data/frames from a target user The interference-reduction field is optional and may occupy 1 bit when present. For example, interference-reduction field = 1 indicates that the target multi-AP MLD candidate set supports, in the C-UL-MU MIMO mode, directly treating data from other users as interference and directly receiving and demodulating data/frames from the target user, and interference-reduction field = 0 indicates that the target multi-AP MLD candidate set does not support, in the C-UL-MU MIMO mode, directly treating data from other users as interference and directly receiving and demodulating data/frames from the target user. For another example, interference-reduction field = 0 indicates that the target multi-AP MLD candidate set supports, in the C-UL-MU MIMO mode, directly treating data from other users as interference and directly receiving and demodulating data/frames from the target user, and interference-reduction field = 1 indicates that the target multi-AP MLD candidate set does not support, in the C-UL-MU MIMO mode, directly treating data from other users as interference and directly receiving and demodulating data/frames from the target user.

In some embodiments, in the association response frame, in a case where the multi-AP MLD scheme field does not include the uplink C-OFDMA field and the downlink C-OFDMA field, the target multi-AP MLD candidate set supports both uplink C-OFDMA and downlink C-OFDMA by default.

In some embodiments, in the association response frame, in a case where the value of the single-user J-TX field indicates that the target multi-AP MLD candidate set does not support joint transmission for a same user, the multi-AP MLD scheme field does not include the multi-user J-TX field, or the value of the multi-user J-TX field indicates that the target multi-AP MLD candidate set does not support joint transmission for multiple users.

In some embodiments, in the association response frame, in a case where the value of the single-user J-TX field indicates that the target multi-AP MLD candidate set does not support joint transmission for a same user, the multi-AP MLD scheme field does not include the diversity J-TX field, or the value of the diversity J-TX field indicates that the target multi-AP MLD candidate set does not support diversity-based joint transmission.

In some embodiments, in the association response frame, in a case where the value of the single-user J-TX field indicates that the target multi-AP MLD candidate set does not support joint transmission for a same user, the multi-AP MLD scheme field does not include the multiplexing J-TX field, or the value of the multiplexing J-TX field indicates that the target multi-AP MLD candidate set does not support multiplexing-based joint transmission.

In some embodiments, in the association response frame, in a case where the value of the single-user J-TX field indicates that the target multi-AP MLD candidate set does not support joint transmission for a same user, the multi-AP MLD scheme field does not include the full-bandwidth J-TX field, or the value of the full-bandwidth J-TX field indicates that the target multi-AP MLD candidate set does not support full bandwidth-based joint transmission.

In some embodiments, in the association response frame, in a case where the value of the single-user J-TX field indicates that the target multi-AP MLD candidate set does not support joint transmission for a same user, the multi-AP MLD scheme field does not include the partial-bandwidth J-TX field, or the value of the partial-bandwidth J-TX field indicates that the target multi-AP MLD candidate set does not support partial bandwidth-based joint transmission.

In some embodiments, in the association response frame, in a case where the value of the single-user J-TX field indicates that the target multi-AP MLD candidate set supports joint transmission for a same user, the multi-AP MLD scheme field does not include the diversity J-TX field and the full-bandwidth J-TX field. Optionally, the target multi-AP MLD candidate set supports diversity-based joint transmission by default; and/or the target multi-AP MLD candidate set supports full bandwidth-based joint transmission by default.

In some embodiments, in the association response frame, the multi-AP MLD scheme field includes at least one of the following: a C-OFDMA support field, a C-SR support field, a C-BF support field, a J-TX support field, or C-UL MU MIMO support field. Alternatively, the multi-AP MLD scheme field includes at least one of the following: the C-SR support field, the C-BF support field, the J-TX support field, or the C-UL MU MIMO support field. The C-OFDMA support field indicates that the target multi-AP MLD candidate set supports C-OFDMA, the C-SR support field indicates that the target multi-AP MLD candidate set supports C-SR, the C-BF support field indicates that the target multi-AP MLD candidate set supports C-BF, the J-TX support field indicates that the target multi-AP MLD candidate set supports J-TX, and the C-UL MU MIMO support field indicates that the target multi-AP MLD candidate set supports C-UL MU MIMO.

In some embodiments, in the association response frame, in a case where the multi-AP MLD scheme field does not include the C-OFDMA support field, the target multi-AP MLD candidate set supports both uplink C-OFDMA and downlink C-OFDMA by default.

In some embodiments, in the association response frame, each AP MLD info field in the multiple AP MLD info fields includes at least one of the following: a BSSID field, an AP MLD ID field, an AP MLD roles field, or a basic multi-ink element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, in the association response frame, the AP MLD ID field is directly set by a master AP MLD or coordinating AP MLD, or the AP MLD ID is determined by an order of the AP MLD in the target multi-AP MLD candidate set as indicated by the current AP MLD info field.

In some embodiments, in the association response frame, the AP MLD roles field includes at least one of the following: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the AP MLD roles field shares its transmission opportunity (TXOP) resources with an AP MLD indicated by the shared AP MLD role field to perform coordinated transmission.

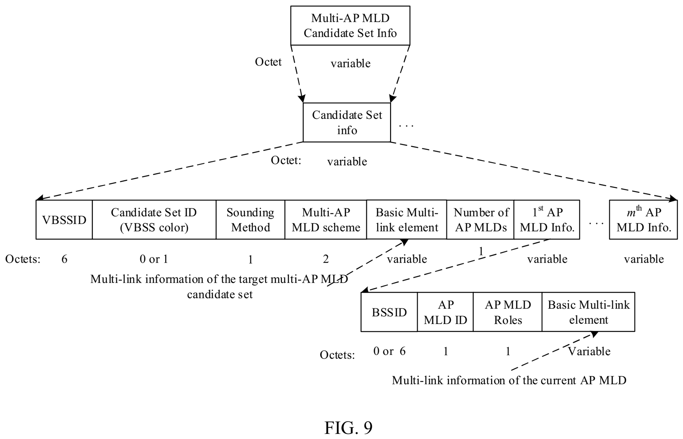

In some embodiments, the multi-AP MLD candidate set info field in the association response frame may be as illustrated in FIG. 9. The multi-AP MLD candidate set info field includes a candidate set info field, where the candidate set info field includes at least one of the following: a VBSSID field (occupying 6 bytes), a candidate set ID or VBSS color field (occupying 0 or 1 byte), a sounding method field (occupying 1 byte), a multi-AP MLD scheme field (occupying 2 bytes), a basic multi-link element (occupying a variable number of bytes), a number of AP MLDs field (occupying 1 byte), a 1-st AP MLD info field (occupying a variable number of bytes), a 2-nd AP MLD info field (occupying a variable number of bytes), ..., *m-*th AP MLD info field (occupying a variable number of bytes). Optionally, as illustrated in FIG. 9, the AP MLD info field includes at least one of the following: a BSSID field (occupying 0 or 6 bytes), an AP MLD ID field (occupying 1 byte), an AP MLD roles field (occupying 1 byte), or a basic multi-link element (occupying a variable number of bytes).

In some embodiments, in the association response frame, in a case where the candidate set info field does not include the basic multi-link element (i.e., the basic multi-link element indicative of multi-link information of the target multi-AP MLD candidate set in FIG. 9), the basic multi-link field contained in the association response frame (i.e., the basic multi-link field contained in the basic multi-link element in FIG. 8) further indicates the multi-link information of the target multi-AP MLD candidate set.

In some embodiments, the first AP MLD shares relevant information of the first non-AP MLD contained in the association request frame with other AP MLDs in the target multi-AP MLD candidate set via a backhaul link.

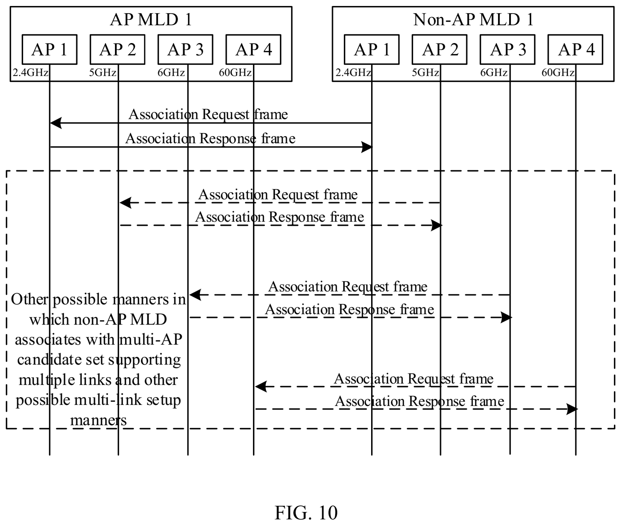

In some embodiments, assuming that the first AP MLD is AP MLD 1 and the first non-AP MLD is non-AP MLD 1, the interaction process of an association request frame and an association response frame between non-AP MLD 1 and AP MLD 1 is as illustrated in FIG. 10. Non-AP MLD 1 sends the association request frame to AP MLD 1 to request association with AP MLD 1 and to indicate, via a basic multi-link element carried in the association request frame, information of multiple links that non-AP MLD 1 requests to set up with AP MLD 1. AP MLD 1 replies with the association response frame to non-AP MLD 1, indicating an association result for non-AP MLD 1 and indicating, via the basic multi-link element, acceptance/rejection of setup of one or more multiple links that non-AP MLD 1 requests to set up. It may be noted that, AP MLD 1 (e.g., master AP MLD) that non-AP MLD 1 requests to associate with can share, via a backhaul link, the association information of non-AP MLD 1 carried via the association request frame, allowing non-AP MLD 1 to associate with all AP MLDs in the target multi-AP MLD candidate set. The association of non-AP MLD 1 with AP MLD 1 and setup of multiple links can be performed on any one or more links (as illustrated in FIG. 10), and the result of association and setup of multiple links are applicable to all links.

In some embodiments, a portion or all of AP MLDs in the target multi-AP MLD candidate set jointly form a first virtual AP MLD. Optionally, the first virtual AP MLD may be a logical AP MLD.

In some embodiments, the first virtual AP MLD includes a virtual MLD media access control (MAC), where the virtual MLD MAC is connected to MLD upper MACs of all AP MLDs in the first virtual AP MLD, and the virtual MLD MAC is configured to manage and control all the AP MLDs in the first virtual AP MLD.

In some embodiments, the virtual MLD MAC is located in any one of the AP MLDs in the first virtual AP MLD, or the virtual MLD MAC is located in a master AP MLD among the AP MLDs in the first virtual AP MLD, or the virtual MLD MAC is located in an independent controller.

In some embodiments, each AP MLD in the first virtual AP MLD includes an MLD upper MAC, a non-MLD upper MAC, an MLD lower MAC, and a physical layer (PHY).

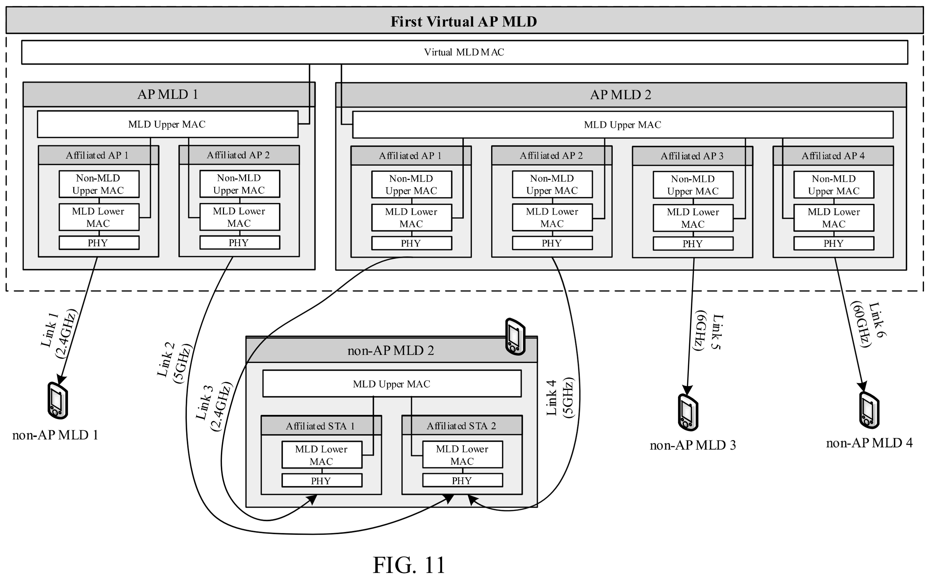

In some embodiments, the first virtual AP MLD is as illustrated in FIG. 11. The first virtual AP MLD includes AP MLD 1 and AP MLD 2, where AP MLD 1 and AP MLD 2 are two AP MLDs each having an MLD upper MAC, a non-MLD upper MAC, an MLD lower MAC, and a PHY. The virtual MLD MAC in the first virtual AP MLD is located in an independent controller. The virtual MLD MAC is connected to the MLD upper MAC of AP MLD 1, and the MLD upper MAC of AP MLD 1 is connected to the MLD lower MAC of AP MLD 1; and the virtual MLD MAC is connected to the MLD upper MAC of AP MLD 2, and the MLD upper MAC of AP MLD 2 is connected to the MLD lower MAC of AP MLD 2. The virtual MLD MAC manages and controls both AP MLD 1 and AP MLD 2.

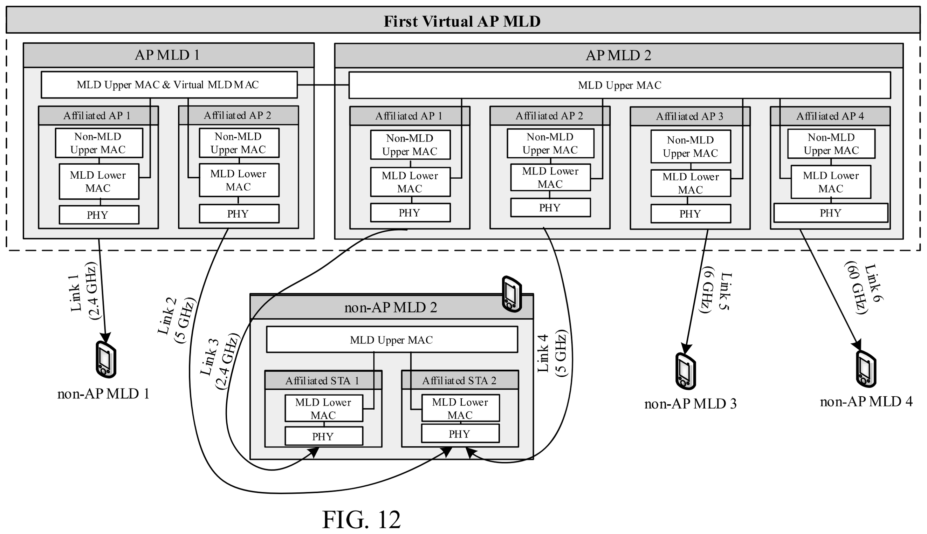

In some embodiments, the first virtual AP MLD is as illustrated in FIG. 12. The first virtual AP MLD includes AP MLD 1 and AP MLD 2, where AP MLD 1 and AP MLD 2 are two AP MLDs each having an MLD upper MAC, a non-MLD upper MAC, an MLD lower MAC, and a PHY. The virtual MLD MAC in the first virtual AP MLD is located in AP MLD 1 (master AP MLD). The virtual MLD MAC is connected to the MLD upper MAC of AP MLD 1, and the MLD upper MAC of AP MLD 1 is connected to the MLD lower MAC of AP MLD 1; and the virtual MLD MAC is connected to the MLD upper MAC of AP MLD 2, and the MLD upper MAC of AP MLD 2 is connected to the MLD lower MAC of AP MLD 2. The virtual MLD MAC manages and controls both AP MLD 1 and AP MLD 2. That is, AP MLD 1 includes the virtual MLD MAC that manages and controls all the AP MLDs in the virtual AP MLD. The MLD upper MACs of the AP MLDs in the virtual AP MLD are connected to the virtual MLD MAC in AP MLD 1.

Specifically, as illustrated in FIG. 11 and FIG. 12, AP MLD 1 may set up link 1 with non-AP MLD 1 and set up link 2 with non-AP MLD 2, and AP MLD 2 may set up link 3 and link 4 with non-AP MLD 2, link 5 with non-AP MLD 3, and link 6 with non-AP MLD 4.

Optionally, as illustrated in FIG. 11 and FIG. 12, AP MLD 1 may provide data transmission services for non-AP MLD 2 over link 2 operating in the 5 Gigahertz (GHz) band and at the same time AP MLD 2 may provide data transmission services for non-AP MLD 2 over link 4 operating in the 5 GHz band, which may improve the communication rate and reduce communication latency for non-AP MLD 2 to some extent. Since signal path loss in the 5 GHz band is more severe than that in the slightly lower 2.4 GHz band, communication stability for non-AP MLD 2 may be poor. Therefore, AP MLD 2 may provide services for non-AP MLD 2 over link 3 operating in the 2.4 GHz band.

Optionally, as illustrated in FIG. 11 and FIG. 12, since non-AP MLD 2 has set up multiple links with both AP MLD 1 and AP MLD 2, when non-AP MLD 2 moves away from AP MLD 1 and link 2 is interrupted, non-AP MLD2 may still maintain connections with AP MLD 2 via link 3 and link 4. Therefore, seamless roaming or interruption-free handover for non-AP MLD 2 may be achieved.

Specifically, as illustrated in FIG. 11 and FIG. 12, the first virtual AP MLD may also be regarded as a three-layer network architecture.

In some embodiments, the virtual MLD MAC of the first virtual AP MLD manages link assignment for an entire VBSS corresponding to the first virtual AP MLD. Specifically, for example, the non-AP MLD sends an association request frame to an anchor AP in the virtual AP MLD to associate with all affiliated AP MLDs in the virtual AP MLD and set up multiple links. The controller in the virtual AP MLD manages link ID assignment for the entire VBSS, and thus can assign to the non-AP MLD link IDs that do not duplicate any previously assigned link IDs, enabling the non-AP MLD to perform multi-link communication with each AP MLD in the virtual AP MLD. That is, during multi-AP MLD coordination, the controller in the virtual AP MLD needs to coordinate assignment of non-duplicated link IDs for the non-AP MLD and the virtual AP MLD, thereby avoiding the case in which the non-AP MLD sets up links having identical IDs with different AP MLDs, which may cause mapping errors in traffic identifier (TID)-to-link mapping.

In some embodiments, after the first non-AP MLD successfully associates with the target multi-AP MLD candidate set, a portion of links set up between the first non-AP MLD and the first AP MLD are used only to transmit control plane information and another portion of the links are used only to transmit data plane information. Alternatively, a portion or all of the links set up between the first non-AP MLD and the first AP MLD are allowed to transmit both control plane information and data plane information.

For example, as illustrated in FIG. 11 and FIG. 12, link 3 between AP MLD 2 and non-AP MLD 2 may be used only for the control plane, i.e., only for transmitting control frames and/or management frames, and link 2 between AP MLD 1 and non-AP MLD 2 and link 4 between AP MLD 2 and non-AP MLD 2 are used for the data plane, i.e., for transmitting data frames. Alternatively, link 3 between AP MLD 2 and non-AP MLD 2 may be used for transmitting both control frames and management frames as well as data frames. The present disclosure is not limited in this regard.

In some embodiments, after the first non-AP MLD successfully associates with the target multi-AP MLD candidate set, a same affiliated STA of the first non-AP MLD is allowed to set up links with affiliated APs of multiple AP MLDs in the first virtual AP MLD. Specifically, a same affiliated STA of the non-AP MLD may set up links with affiliated APs of multiple AP MLDs. Specifically, once an affiliated non-AP STA (or affiliated AP) of a non-AP MLD (or AP MLD) sets up a link with an affiliated AP (or affiliated non-AP STA) of an AP MLD (or non-AP MLD), the same affiliated non-AP STA (or affiliated AP) of the non-AP MLD (or AP MLD) is allowed to set up a link with an affiliated AP (or affiliated non-AP STA) of another AP MLD (or non-AP MLD).

In some embodiments, after the first non-AP MLD successfully associates with the target multi-AP MLD candidate set, multiple links corresponding to a same affiliated STA of the first non-AP MLD are used to transmit identical physical layer protocol data units (PPDUs), or the multiple links corresponding to the same affiliated STA of the first non-AP MLD are used to transmit different PPDUs.

For example, as illustrated in FIG. 11 and FIG. 12, link 2 between AP MLD 1 and non-AP MLD 2 and link 4 between AP MLD 2 and non-AP MLD 2, may be used to transmit identical PPDUs (i.e., exactly the same data) to improve communication reliability/stability. Alternatively, link 2 between AP MLD 1 and non-AP MLD 2 and link 4 between AP MLD 2 and non-AP MLD 2 may be used to transmit different PPDUs (i.e., different data) to improve communication rate/throughput. The present disclosure is not limited in this regard.

In some embodiments, in a case where the first non-AP MLD is an extremely high throughput (EHT) non-AP MLD, the first non-AP MLD only supports association with and setup of multiple links with a single AP MLD in the first virtual AP MLD. Link IDs for the first non-AP MLD are assigned by the virtual MLD MAC of the first virtual AP MLD. That is, an EHT non-AP MLD that only supports 802.11be associates with and sets up multiple links with only one AP MLD. For multi-link setup, link IDs assigned to the EHT non-AP MLD by the AP MLD are still uniformly assigned by the virtual MLD MAC, thereby avoiding link ID conflicts that may result from independently assigning link IDs to the EHT non-AP MLD.

In some embodiments, the virtual MLD MAC sublayer in the first virtual AP MLD may include the following functions:
management of authentication, association, and reassociation between AP MLD and non-AP MLD;
management of AP MLD's sequence number (SN)/packet number (PN) assignment for frames to be encrypted by pairwise transient key (PTK) for unicast frames;
management of AP MLD's power save buffering of individually addressed frames (only on the AP MLD side;
selection of the MLD upper MAC sublayer for transmission;
merging reception of MAC protocol data units (MPDUs) from two or more links from different AP MLDs;
reordering of packets of AP MLDs to ensure in-order delivery per each Block Ack session;
management of AP MLD's Block Ack scoreboarding for individually addressed frames (in collaboration with the MLD upper MAC sublayer and the MLD lower MAC sublayer); optionally, the virtual MLD MAC delivers the block ack record on one link to the MLD upper MAC sublayer and the MLD lower MAC sublayer of other links;
MLD level management information exchange/indication via the MLD upper MAC sublayer;
coordination of distribution and management of EDCA parameters across the MLD upper sublayers of the links.

In some embodiments, the MLD upper MAC sublayer in the first virtual AP MLD may include the following functions:
authentication, association, and reassociation between an AP MLD and a non-AP MLD;
security association (e.g., pairwise master key security association), pairwise transient key security association, and distribution of group temporal key (GTK)/integrity group temporal keys (IGTK)/beacon integrity group temporal keys (BIGTK);
SN/PN assignment for frames to be encrypted by PTK for unicast frames;
SN assignment for group addressed MAC service data units (MSDUs);
power save buffering of individually addressed frames (only on AP MLD);
encryption/decryption using PTK for unicast frames;
selection of the MLD lower MAC sublayer for transmission;
merging reception of MAC protocol data units (MPDUs) from two or more links;
reordering of packets to ensure in-order delivery per each Block Ack session;
Block Ack scoreboarding for individually addressed frames (in collaboration with the MLD lower MAC sublayer). Optionally, the MLD upper MAC sublayer delivers the Block Ack record on one link to the MLD lower MAC sublayer of other links;
MLD level management information exchange/indication via the MLD lower MAC sublayer;
coordination of distribution and management of EDCA parameters across the MLD lower MAC sublayers of the links.

In some embodiments, the affiliated (non-MLO) upper MAC sublayer in the first virtual AP MLD may include the following functions:
non-multi-link Operation (non-MLO) peer operations, above the MLD lower MAC sublayer;
maintenance of link-specific GTK/IGTK/BIGTK (between an AP affiliated with the AP MLD and a non-AP STA affiliated with the non-AP MLD);
link-specific encryption/decryption/integrity protection and PN assignment using GTK/IGTK/BIGTK (between an AP affiliated with the AP MLD and a non-AP STA affiliated with the non-AP MLD);
link-specific management information exchange/indication (e.g., Beacon);
power save buffering of group addressed frames.

In some embodiments, the MLD lower MAC sublayer in the first virtual AP MLD may include the following functions:
link-specific control information exchange/indication (e.g., request to send (RTS)/clear to send (CTS), acknowledgements, null data physical protocol data unit (NDP), etc.);
power save state and mode;
MAC address filtering for frame reception;
Block Ack scoreboarding for individually addressed frames (in collaboration with the MLD upper MAC sublayer). Optionally, the MLD lower MAC sublayer receives the Block Ack record on other links from the MLD upper MAC sublayer.

It may be noted that, the virtual MLD MAC and the MLD upper MAC are connected via a MAC service access point (SAP) through a distribution system (DS). When the DS delivers the MAC service tuples to an AP MLD through a distribution system access function (DSAF), the (coordinator of the) virtual AP MLD then determines when and how to deliver the MAC service tuples to the MLD upper MAC sublayer of the AP MLD (via the MAC SAP).

In some embodiments, a portion or all of affiliated APs of the AP MLDs in the target multi-AP MLD candidate set jointly form a second virtual AP MLD. Optionally, the second virtual AP MLD may be a logical AP MLD.

In some embodiments, the second virtual AP MLD includes a virtual MLD upper MAC, where the virtual MLD upper MAC is connected to MLD lower MACs of all the affiliated APs in the second virtual AP MLD, and is configured to manage and control all the affiliated APs in the second virtual AP MLD.

In some embodiments, the virtual MLD upper MAC may also be referred to as a virtual MLD MAC.

In some embodiments, the virtual MLD upper MAC is located in any one of all the affiliated APs in the second virtual AP MLD, or is located in a master AP among all the affiliated APs, or is located in an independent controller.

In some embodiments, each affiliated AP in the second virtual AP MLD includes a non-MLD upper MAC, an MLD lower MAC, and a PHY.

In some embodiments, multiple collocated affiliated APs in the second virtual AP MLD share an MLD upper MAC.

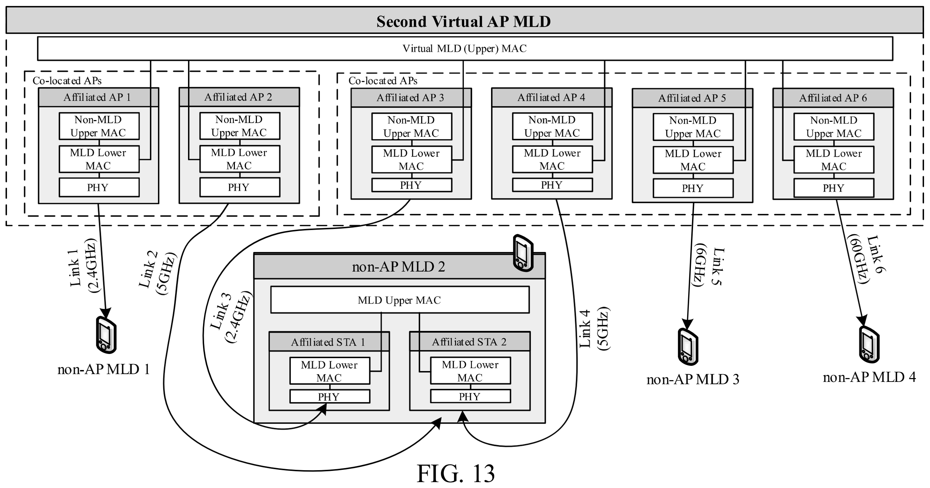

In some embodiments, the second virtual AP MLD is as illustrated in FIG. 13, where affiliated APs 1 - 6 are 6 APs affiliated with the second virtual AP MLD. Each of affiliated APs 1 - 6 includes a non-MLD upper MAC, an MLD lower MAC, and a PHY, but does not include an MLD upper MAC. To enable multi-AP coordination, the second virtual AP MLD includes a virtual MLD (upper) MAC, where the virtual MLD (upper) MAC is connected to the MLD lower MACs of affiliated APs 1 - 6 and is configured to manage and control affiliated APs 1 - 6. As illustrated in FIG. 13, the virtual MLD (upper) MAC of the second virtual AP MLD is located in an independent controller.

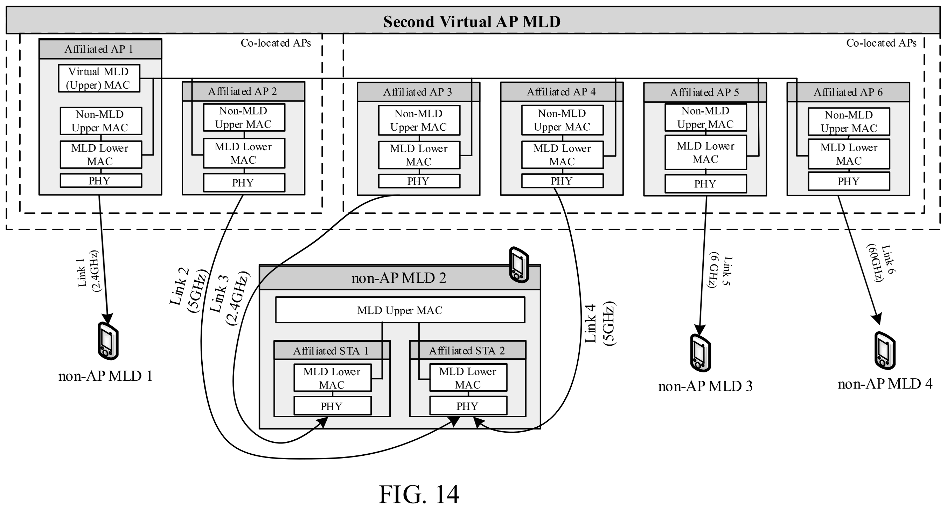

In some embodiments, the second virtual AP MLD is as illustrated in FIG. 14, where affiliated APs 1 - 6 are 6 APs affiliated with the second virtual AP MLD. Each of affiliated APs 1 - 6 includes a non-MLD upper MAC, an MLD lower MAC, and a PHY, but does not include an MLD upper MAC. To enable multi-AP coordination, the second virtual AP MLD includes a virtual MLD (upper) MAC, where the virtual MLD (upper) MAC is connected to the MLD lower MACs of affiliated APs 1 - 6 and is configured to manage and control affiliated APs 1 - 6. As illustrated in FIG. 14, the virtual MLD (upper) MAC of the second virtual AP MLD is located in affiliated AP 1. Affiliated AP 1 includes a virtual MLD (upper) MAC that is configured to manage and control all the affiliated APs in the second virtual AP MLD. The MLD lower MACs of the affiliated APs in the second virtual AP MLD are connected to the virtual MLD (upper) MAC of affiliated AP 1.

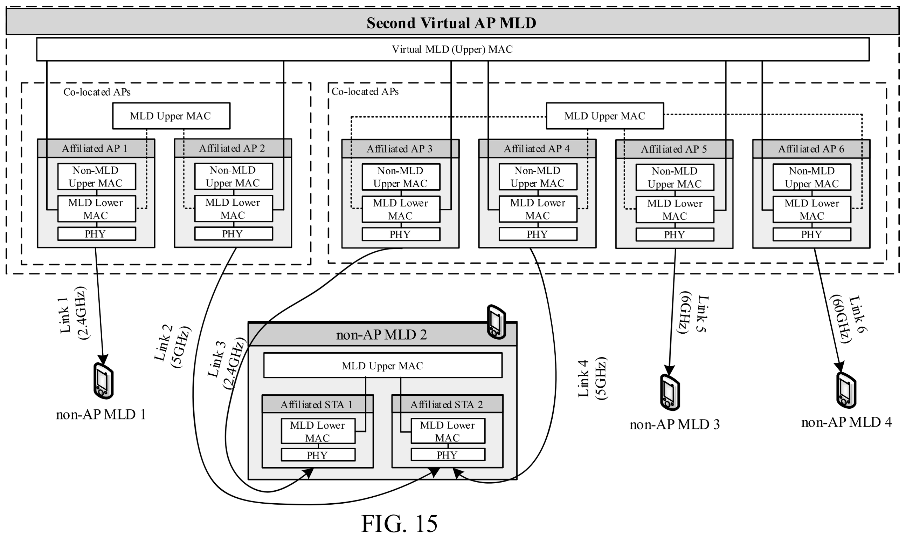

In some embodiments, the second virtual AP MLD is as illustrated in FIG. 15, where affiliated APs 1 - 6 are 6 APs affiliated with the second virtual AP MLD. Each of affiliated APs 1 - 6 includes a non-MLD upper MAC, an MLD lower MAC, and a PHY, but does not include an MLD upper MAC. To enable multi-AP coordination, the second virtual AP MLD includes a virtual MLD (upper) MAC, where the virtual MLD upper MAC is connected to the MLD lower MACs of affiliated APs 1 - 6 and is configured to manage and control affiliated APs 1 - 6. As illustrated in FIG. 15, the virtual MLD (upper) MAC of the second virtual AP MLD is located in an independent controller, and multiple collocated affiliated APs in the second virtual AP MLD share an MLD upper MAC.

Specifically, as illustrated in FIGS. 13 to 15, collocated AP1 and AP2 may respectively set up multiple links (link 1 and link 2) with non-AP MLD 1 and non-AP MLD 2, and collocated AP3, AP4, AP5, and AP6 may respectively set up multiple links (link 3, link 4, link 5, and link 6) with non-AP MLD 2, non-AP MLD 3, and non-AP MLD 4.

Optionally, as illustrated in FIGS. 13 to 15, AP2 provides data transmission services for non-AP MLD 2 on link 2 operating in the 5 GHz band, and at the same time AP4 provides data transmission services for non-AP MLD 2 on link 4 operating in the 5 GHz band, which can improve the communication rate and reduce communication latency for non-AP MLD 2 to a certain extent. Since signal path loss in the 5 GHz band is more severe than that in the slightly lower 2.4 GHz band, communication stability for non-AP MLD 2 may be poor. Therefore, AP3 may provide services for non-AP MLD 2 on link 3 operating in the 2.4 GHz band.

Optionally, as illustrated in FIGS. 13 to 15, since non-AP MLD 2 has set up multiple links with AP2, AP3, and AP4, when non-AP MLD 2 moves away from AP2 and link 2 is interrupted, non-AP MLD 2 may still maintain connections with AP3 and AP4 via link 3 and link 4. Therefore, seamless roaming or interruption-free handover for the non-AP MLD can be achieved.

In some embodiments, as illustrated in FIGS. 13 to 15, the second virtual AP MLD may be regarded as a two-layer network architecture.

In some embodiments, the virtual MLD upper MAC of the second virtual AP MLD manages link assignment for the entire VBSS corresponding to the second virtual AP MLD. Specifically, for example, a non-AP MLD sends an association request frame to an anchor AP in the virtual AP MLD to associate with all the affiliated APs in the virtual AP MLD and set up multiple links. The controller in the virtual AP MLD manages link ID assignment for the entire VBSS, and thus can assign to the non-AP MLD link IDs that do not duplicate any previously assigned Link IDs, enabling the non-AP MLD to perform multilink communication with each AP in the virtual AP MLD. That is, for multi-AP coordination, the controller in the virtual AP MLD needs to coordinate assignment of non-duplicated link IDs for the non-AP MLD and the virtual AP MLD, thereby avoiding the case in which the non-AP MLD sets up links having identical IDs with different APs, which may cause mapping errors in TID-to-link mapping.

In some embodiments, after the first non-AP MLD successfully associates with the target multi-AP MLD candidate set, a portion of links set up between the first non-AP MLD and collocated affiliated APs in the second virtual AP MLD are used only to transmit control plane information and another portion of the links are used only to transmit data plane information. Alternatively, a portion or all of the links set up between the first non-AP MLD and the collocated affiliated APs in the second virtual AP MLD are allowed to transmit both control plane information and data plane information.

Specifically, for example, as illustrated in FIGS. 13 to 15, link 3 between AP 3 and non-AP MLD 2 may be used only for the control plane, i.e., only for transmitting control frames and/or management frames, and link 2 between AP 2 and non-AP MLD 2 and link 4 between AP4 and non-AP MLD 2 are used for the data plane, i.e., for transmitting data frames. Alternatively, link 3 between AP 3 and non-AP MLD 2 may be used for transmitting both control frames and management frames as well as data frames. The present disclosure is not limited in this regard.

In some embodiments, after the first non-AP MLD successfully associates with the target multi-AP MLD candidate set, a same affiliated STA of the first non-AP MLD is allowed to set up links with multiple non-collocated affiliated APs in the second virtual AP MLD.

In some embodiments, after the first non-AP MLD successfully associates with the target multi-AP MLD candidate set, multiple links corresponding to a same affiliated STA of the first non-AP MLD are used to transmit identical PPDUs, or the multiple links corresponding to the same affiliated STA of the first non-AP MLD are used to transmit different PPDUs.

Specifically, for example, as illustrated in FIGS. 13 to 15, link 2 between AP 2 and non-AP MLD 2 and link 4 between AP 4 and non-AP MLD 2 may be used to transmit the same PPDU (i.e., identical data) to improve communication reliability/stability. Alternatively, link 2 between AP 2 and non-AP MLD 2 and link 4 between AP 4 and non-AP MLD 2 may be used to transmit different PPDUs (i.e., different data) to improve communication rate/throughput. The present disclosure is not limited in this regard.

In some embodiments, in a case where the first non-AP MLD is an EHT non-AP MLD, the first non-AP MLD only supports association with and setup of multiple links with a set of collocated affiliated APs in the second virtual AP MLD. The link IDs for the first non-AP MLD are assigned by the virtual MLD MAC of the second virtual AP MLD. That is, an EHT non-AP MLD that only supports 802.11be associates with and sets up multiple links with only a set of collocated affiliated APs. For multi-link setup, the link IDs assigned to the EHT non-AP MLD by the AP are still uniformly assigned by the virtual MLD MAC, thereby avoiding link ID conflicts that may result from independently assigning link IDs to the EHT non-AP MLD.

In some embodiments, the virtual MLD (upper) MAC sublayer in the second virtual AP MLD may include the following functions:
authentication, association, and reassociation (between an AP MLD and a non-AP MLD);
security association (e.g., PMKSA, PTKSA) and distribution of GTK/IGTK/and BIGTK;
SN/PN assignment for frames to be encrypted by PTK for unicast frames;
SN assignment for group addressed MSDUs;
power save buffering of individually addressed frames (only on the AP MLD);
encryption/decryption using PTK for unicast frames;
selection of the MLD lower MAC sublayer for transmission;
merging reception of MPDUs from two or more links;
reordering of packets to ensure in-order delivery per each Block Ack session;
Block Ack scoreboarding for individually addressed frames (in collaboration with the MLD lower MAC sublayer). Optionally, the MLD upper MAC sublayer delivers the Block Ack record on one link to the MLD lower MAC sublayers of other links;
MLD level management information exchange or indication via the MLD lower MAC sublayer; coordination of distribution and management of EDCA parameters across the MLD lower MAC sublayers of the links.

In some embodiments, the affiliated (non-MLO) upper MAC sublayer (applicable only to APs) in the second virtual AP MLD may include the following functions:
non-MLO peer operations, above the MLD lower MAC sublayer;
maintenance of link-specific GTK/IGTK/BIGTK (between an AP affiliated with the AP MLD and a non-AP STA affiliated with the non-AP MLD);
link-specific encryption/decryption/integrity protection and PN assignment using GTK/IGTK/BIGTK (between an AP affiliated with the AP MLD and a non-AP STA affiliated with the non-AP MLD);
link-specific management information exchange or indication (e.g., beacon);
power save buffering of group addressed frames.

In some embodiments, the MLD lower MAC sublayer in the second virtual AP MLD may include the following functions:
link-specific control information exchange or indication (e.g., RTS/CTS, acknowledgements, NDP, etc.);
power save state and mode;
MAC address filtering for frame reception;
Block Ack scoreboarding for individually addressed frames (in collaboration with the MLD upper MAC sublayer). Optionally, the MLD lower MAC sublayer receives the Block Ack record on other links from the MLD upper MAC sublayer.

Specifically, in the embodiments of the present disclosure, under the three-layer network architecture as illustrated in FIG. 11 and FIG. 12, each AP MLD in the virtual AP MLD is a complete MLD. The virtual MLD MAC of the virtual AP MLD manages and controls the MLD upper MAC of the AP MLDs, and the requirements for synchronization among the AP MLDs and between the AP MLD and the virtual AP MLD are relatively low. Under the two-layer network architecture as illustrated in FIG. 13 to FIG. 15, the virtual MLD (upper) MAC of the virtual AP MLD directly manages and controls the MLD lower MAC of each affiliated AP. In this case, the requirements for synchronization among the affiliated APs and between the affiliated AP and the virtual AP MLD are relatively high.

In some embodiments, before the first AP MLD receives the association request frame sent by the first non-AP MLD, the first AP MLD sends a first frame. The first frame contains coordination capabilities and multi-link information of a multi-AP MLD candidate set(s) to which the first AP MLD belongs, and the multi-AP MLD candidate set(s) to which the first AP MLD belongs includes at least the target multi-AP MLD candidate set.

That is, in the embodiments of the present disclosure, before the first non-AP MLD requests to associate with the target multi-AP MLD candidate set, the first non-AP MLD needs to discover the target multi-AP MLD candidate set, or the first non-AP MLD needs to discover the multi-AP MLD candidate set(s) to which the first AP MLD belongs.

In some embodiments, the first frame is one of the following: a beacon frame, a directional multi-gigabit (DMG) beacon frame, a probe response frame, and a multi-link (ML) probe response frame.

It may be noted that, the DMG beacon frame is sent over a link operating at the 60 GHz.

In some embodiments, the first frame includes a multi-AP MLD candidate set info field, and the multi-AP MLD candidate set info field indicates coordination capabilities and multi-link information of the multi-AP MLD candidate set to which the first AP MLD belongs.

In some embodiments, the multi-AP MLD candidate set info field in the first frame includes a number of candidate sets field and at least one candidate set info field. The number of candidate sets field indicates the number of multi-AP MLD candidate sets to which the first AP MLD belongs, and an *s^{th}* candidate set info field in the at least one candidate set info field indicates coordination capabilities and multi-link information of an *s^{th}* multi-AP MLD candidate set to which the first AP MLD belongs, where s is a positive integer.

In some embodiments, in the first frame, the candidate set info field in the at least one candidate set info field includes, but is not limited to, at least one of the following: a VBSSID field, a candidate set ID field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to the current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and the *m^{th}* AP MLD info field among the multiple AP MLD info fields indicates relevant information of the *m^{th}* member AP MLD contained in the multi-AP MLD candidate set corresponding to the current candidate set info field.

In some embodiments, in the first frame, the candidate set ID field may be replaced by a VBSS color field, and the VBSS color field may indicate the multi-AP MLD candidate set corresponding to the current candidate set info field.

In some embodiments, in the first frame, the sounding method field includes at least one of the following: a sequence sounding field or a joint sounding field; or the sounding method field includes only the joint sounding field. The sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

Optionally, in the first frame, the sequence sounding field occupies 1 bit, where sequence sounding field = 1 indicates that the multi-AP MLD candidate set corresponding to the current candidate set info field supports channel sounding by multiple AP MLDs in sequence, and sequence sounding field = 0 indicates that the multi-AP MLD candidate set corresponding to the current candidate set info field does not support channel sounding by multiple AP MLDs in sequence. Alternatively, sequence sounding field = 0 indicates that the multi-AP MLD candidate set corresponding to the current candidate set info field supports channel sounding by multiple AP MLDs in sequence, and sequence sounding field = 1 indicates that the multi-AP MLD candidate set corresponding to the current candidate set info field does not support channel sounding by multiple AP MLDs in sequence.

Optionally, in the first frame, the joint sounding field occupies 1 bit, where joint sounding field = 1 indicates that the multi-AP MLD candidate set corresponding to the current candidate set info field supports channel sounding by multiple AP MLDs simultaneously and synchronously, and joint sounding field = 0 indicates that the multi-AP MLD candidate set corresponding to the current candidate set info field does not support channel sounding by multiple AP MLDs simultaneously and synchronously. Alternatively, joint sounding field = 0 indicates that the multi-AP MLD candidate set corresponding to the current candidate set info field supports channel sounding by multiple AP MLDs simultaneously and synchronously, and joint sounding field = 1 indicates that the multi-AP MLD candidate set corresponding to the current candidate set info field does not support channel sounding by multiple AP MLDs simultaneously and synchronously.

In some embodiments, in the first frame, in a case where the sounding method field does not include the sequence sounding field, the multi-AP MLD candidate set corresponding to the current candidate set info field supports channel sounding by multiple AP MLDs in sequence by default.

In some embodiments, in the first frame, the multi-AP MLD scheme field includes at least one of the following: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detect and discard field, or an interference-reduction field.

In some embodiments, in the first frame, the multi-AP MLD scheme field includes at least one of the following: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, a multiplexing J-TX field, the full-bandwidth J-TX field, the partial-bandwidth J-TX field, the detect and discard field, or the interference-reduction field.

Specifically, in the first frame, the uplink C-OFDMA field indicates whether the multi-AP MLD candidate set corresponding to the current candidate set info field supports uplink C-OFDMA. The uplink C-OFDMA field is an optional field and may occupy 1 bit when present. For example, uplink C-OFDMA field = 1 indicates that the multi-AP MLD candidate set corresponding to the current candidate set info field supports uplink C-OFDMA, and uplink C-OFDMA field = 0 indicates that the multi-AP MLD candidate set corresponding to the current candidate set info field does not support uplink C-OFDMA. For another example, uplink C-OFDMA field = 0 indicates that the multi-AP MLD candidate set corresponding to the current candidate set info field supports uplink C-OFDMA, and uplink C-OFDMA field = 1 indicates that the multi-AP MLD candidate set corresponding to the current candidate set info field does not support uplink C-OFDMA.

Specifically, in the first frame, the downlink C-OFDMA field indicates whether the multi-AP MLD candidate set corresponding to the current candidate set info field supports downlink C-OFDMA. The downlink C-OFDMA field is an optional field and may occupy 1 bit when present. For example, downlink C-OFDMA field = 1 indicates that the multi-AP MLD candidate set corresponding to the current candidate set info field supports downlink C-OFDMA, and downlink C-OFDMA field = 0 indicates that the multi-AP MLD candidate set corresponding to the current candidate set info field does not support downlink C-OFDMA. For another example, downlink C-OFDMA field = 0 indicates that the multi-AP MLD candidate set corresponding to the current candidate set info field supports downlink C-OFDMA, and downlink C-OFDMA field = 1 indicates that the multi-AP MLD candidate set corresponding to the current candidate set info field does not support downlink C-OFDMA.

Specifically, in the first frame, the C-SR and C-OFDMA joint field indicates whether the multi-AP MLD candidate set corresponding to the current candidate set info field supports joint use of C-SR and C-OFDMA. The C-SR and C-OFDMA joint field is an optional field and may occupy 1 bit when present. For example, C-SR and C-OFDMA joint field = 1 indicates that the multi-AP MLD candidate set corresponding to the current candidate set info field supports joint use of C-SR and C-OFDMA, and C-SR and C-OFDMA joint field = 0 indicates that the multi-AP MLD candidate set corresponding to the current candidate set info field does not support joint use of C-SR and C-OFDMA. For another example, C-SR and C-OFDMA joint field = 0 indicates that the multi-AP MLD candidate set corresponding to the current candidate set info field supports joint use of C-SR and C-OFDMA, and C-SR and C-OFDMA joint field = 1 indicates that the multi-AP MLD candidate set corresponding to the current candidate set info field does not support joint use of C-SR and C-OFDMA.

Specifically, in the first frame, the C-SR and C-BF joint field indicates whether the multi-AP MLD candidate set corresponding to the current candidate set info field supports joint use of C-SR and C-BF. The C-SR and C-BF joint field is an optional field and may occupy 1 bit when present. For example, C-SR and C-BF joint field = 1 indicates that the multi-AP MLD candidate set corresponding to the current candidate set info field supports joint use of C-SR and C-BF; C-SR and C-BF joint field = 0 indicates that the multi-AP MLD candidate set corresponding to the current candidate set info field does not support joint use of C-SR and C-BF. For another example, C-SR and C-BF joint field = 0 indicates that the multi-AP MLD candidate set corresponding to the current candidate set info field supports joint use of C-SR and C-BF, and C-SR and C-BF joint field = 1 indicates that the multi-AP MLD candidate set corresponding to the current candidate set info field does not support joint use of C-SR and C-BF.

Specifically, in the first frame, the C-SR and J-TX joint field indicates whether the multi-AP MLD candidate set corresponding to the current candidate set info field supports joint use of C-SR and J-TX, where the C-SR and J-TX joint field is an optional field and may occupy 1 bit when present. For example, C-SR and J-TX joint field = 1 indicates that the multi-AP MLD candidate set corresponding to the current candidate set info field supports joint use of C-SR and J-TX, and C-SR and J-TX joint field = 0 indicates that the multi-AP MLD candidate set corresponding to the current candidate set info field does not support joint use of C-SR and J-TX. For another example, C-SR and J-TX joint field = 0 indicates that the multi-AP MLD candidate set corresponding to the current candidate set info field supports joint use of C-SR and J-TX, and C-SR and J-TX joint field = 1 indicates that the multi-AP MLD candidate set corresponding to the current candidate set info field does not support joint use of C-SR and J-TX.

Specifically, in the first frame, the C-SR and C-UL MU MIMO joint field indicates whether the multi-AP MLD candidate set corresponding to the current candidate set info field supports joint use of C-SR and C-UL MU MIMO, where the C-SR and C-UL MU MIMO joint field is an optional field and may occupy 1 bit when present. For example, C-SR and C-UL MU MIMO joint field = 1 indicates that the multi-AP MLD candidate set corresponding to the current candidate set info field supports joint use of C-SR and C-UL MU MIMO, and C-SR and C-UL MU MIMO joint field = 0 indicates that the multi-AP MLD candidate set corresponding to the current candidate set info field does not support joint use of C-SR and C-UL MU MIMO. For another example, C-SR and C-UL MU MIMO joint field = 0 indicates that the multi-AP MLD candidate set corresponding to the current candidate set info field supports joint use of C-SR and C-UL MU MIMO, and C-SR and C-UL MU MIMO joint field = 1 indicates that the multi-AP MLD candidate set corresponding to the current candidate set info field does not support joint use of C-SR and C-UL MU MIMO.

Specifically, in the first frame, the C-BF field indicates whether the multi-AP MLD candidate set corresponding to the current candidate set info field supports C-BF, where the C-BF field is an optional field and may occupy 1 bit when present. For example, C-BF field = 1 indicates that the multi-AP MLD candidate set corresponding to the current candidate set info field supports C-BF, and C-BF field = 0 indicates that the multi-AP MLD candidate set corresponding to the current candidate set info field does not support C-BF. For another example, C-BF field = 0 indicates that the multi-AP MLD candidate set corresponding to the current candidate set info field supports C-BF, and C-BF field = 1 indicates that the multi-AP MLD candidate set corresponding to the current candidate set info field does not support C-BF.

Specifically, in the first frame, the single-user J-TX field indicates whether the multi-AP MLD candidate set corresponding to the current candidate set info field supports joint transmission for a same user, where the single-user J-TX field is an optional field and may occupy 1 bit when present. For example, single-user J-TX field = 1 indicates that the multi-AP MLD candidate set corresponding to the current candidate set info field supports joint transmission for a same user, and single-user J-TX field = 0 indicates that the multi-AP MLD candidate set corresponding to the current candidate set info field does not support joint transmission for a same user. For another example, single-user J-TX field = 0 indicates that the multi-AP MLD candidate set corresponding to the current candidate set info field supports joint transmission for a same user, and single-user J-TX field = 1 indicates that the multi-AP MLD candidate set corresponding to the current candidate set info field does not support joint transmission for a same user.

Specifically, in the first frame, the multi-user J-TX field indicates whether the multi-AP MLD candidate set corresponding to the current candidate set info field supports joint transmission for multiple users, where the multi-user J-TX field is an optional field and may occupy 1 bit when present. For example, multi-user J-TX field = 1 indicates that the multi-AP MLD candidate set corresponding to the current candidate set info field supports joint transmission for multiple users, and multi-user J-TX field = 0 indicates that the multi-AP MLD candidate set corresponding to the current candidate set info field does not support joint transmission for multiple users. For another example, multi-user J-TX field = 0 indicates that the multi-AP MLD candidate set corresponding to the current candidate set info field supports joint transmission for multiple users, and multi-user J-TX field = 1 indicates that the multi-AP MLD candidate set corresponding to the current candidate set info field does not support joint transmission for multiple users.

Specifically, in the first frame, the diversity J-TX field indicates whether the multi-AP MLD candidate set corresponding to the current candidate set info field supports diversity-based joint transmission, where the diversity J-TX field is an optional field and may occupy 1 bit when present. For example, diversity J-TX field = 1 indicates that the multi-AP MLD candidate set corresponding to the current candidate set info field supports diversity-based joint transmission, and diversity J-TX field = 0 indicates that the multi-AP MLD candidate set corresponding to the current candidate set info field does not support diversity-based joint transmission. For another example, diversity J-TX field = 0 indicates that the multi-AP MLD candidate set corresponding to the current candidate set info field supports diversity-based joint transmission, and diversity J-TX field = 1 indicates that the multi-AP MLD candidate set corresponding to the current candidate set info field does not support diversity-based joint transmission.

Specifically, in the first frame, the multiplexing J-TX field indicates whether the multi-AP MLD candidate set corresponding to the current candidate set info field supports multiplexing-based joint transmission, where the multiplexing J-TX field is an optional field and may occupy 1 bit when present. For example, multiplexing J-TX field = 1 indicates that the multi-AP MLD candidate set corresponding to the current candidate set info field supports multiplexing-based joint transmission, and multiplexing J-TX field = 0 indicates that the multi-AP MLD candidate set corresponding to the current candidate set info field does not support multiplexing-based joint transmission. For another example, multiplexing J-TX field = 0 indicates that the multi-AP MLD candidate set corresponding to the current candidate set info field supports multiplexing-based joint transmission, and multiplexing J-TX field = 1 indicates that the multi-AP MLD candidate set corresponding to the current candidate set info field does not support multiplexing-based joint transmission.

Specifically, in the first frame, the full-bandwidth J-TX field indicates whether the multi-AP MLD candidate set corresponding to the current candidate set info field supports full bandwidth-based joint transmission, where the full-bandwidth J-TX field is an optional field and may occupy 1 bit when present. For example, full-bandwidth J-TX field = 1 indicates that the multi-AP MLD candidate set corresponding to the current candidate set info field supports full bandwidth-based joint transmission, and full-bandwidth J-TX field = 0 indicates that the multi-AP MLD candidate set corresponding to the current candidate set info field does not support full bandwidth-based joint transmission. For another example, full-bandwidth J-TX field = 0 indicates that the multi-AP MLD candidate set corresponding to the current candidate set info field supports full bandwidth-based joint transmission, and full-bandwidth J-TX field = 1 indicates that the multi-AP MLD candidate set corresponding to the current candidate set info field does not support full bandwidth-based joint transmission.

Specifically, in the first frame, the partial-bandwidth J-TX field indicates whether the multi-AP MLD candidate set corresponding to the current candidate set info field supports partial bandwidth-based joint transmission, where the partial-bandwidth J-TX field is an optional field and may occupy 1 bit when present. For example, partial-bandwidth J-TX field = 1 indicates that the multi-AP MLD candidate set corresponding to the current candidate set info field supports partial bandwidth-based joint transmission, and partial-bandwidth J-TX field = 0 indicates that the multi-AP MLD candidate set corresponding to the current candidate set info field does not support partial bandwidth-based joint transmission. For another example, partial-bandwidth J-TX field = 0 indicates that the multi-AP MLD candidate set corresponding to the current candidate set info field supports partial bandwidth-based joint transmission, and partial-bandwidth J-TX field = 1 indicates that the multi-AP MLD candidate set corresponding to the current candidate set info field does not support partial bandwidth-based joint transmission.

Specifically, in the first frame, the detect and discard field indicates whether the multi-AP MLD candidate set corresponding to the current candidate set info field supports, in a C-UL-MU MIMO mode, receiving and demodulating data/frames from other users and performing discarding to obtain useful data/frames. The detect and discard field is optional and may occupy 1 bit when present. For example, detect and discard field = 1 indicates that the multi-AP MLD candidate set corresponding to the current candidate set info field supports, in the C-UL-MU MIMO mode, receiving and demodulating data/frames from other users and performing discarding to obtain useful data/frames, and detect and discard field = 0 indicates that the multi-AP MLD candidate set corresponding to the current candidate set info field does not support, in the C-UL-MU MIMO mode, receiving and demodulating data/frames from other users and performing discarding to obtain useful data/frames. For another example, detect and discard field = 0 indicates that the multi-AP MLD candidate set corresponding to the current candidate set info field supports, in the C-UL-MU MIMO mode, receiving and demodulating data/frames from other users and performing discarding to obtain useful data/frames, and detect and discard field = 1 indicates that the multi-AP MLD candidate set corresponding to the current candidate set info field does not support, in the C-UL-MU MIMO mode, receiving and demodulating data/frames from other users and performing discarding to obtain useful data/frames.

Specifically, in the first frame, the interference-reduction field indicates whether the multi-AP MLD candidate set corresponding to the current candidate set info field supports, in the C-UL-MU MIMO mode, directly treating data from other users as interference and directly receiving and demodulating data/frames from a target user. The interference-reduction field is optional and may occupy 1 bit when present. For example, interference-reduction field = 1 indicates that the multi-AP MLD candidate set corresponding to the current candidate set info field supports, in the C-UL-MU MIMO mode, directly treating data from other users as interference and directly receiving and demodulating data/frames from the target user, and interference-reduction field = 0 indicates that the multi-AP MLD candidate set corresponding to the current candidate set info field does not support, in the C-UL-MU MIMO mode, directly treating data from other users as interference and directly receiving and demodulating data/frames from the target user. For another example, interference-reduction field = 0 indicates that the multi-AP MLD candidate set corresponding to the current candidate set info field supports, in the C-UL-MU MIMO mode, directly treating data from other users as interference and directly receiving and demodulating data/frames from the target user, and interference-reduction field = 1 indicates that the multi-AP MLD candidate set corresponding to the current candidate set info field does not support, in the C-UL-MU MIMO mode, directly treating data from other users as interference and directly receiving and demodulating data/frames from the target user.

In some embodiments, in the first frame, in a case where the multi-AP MLD scheme field does not include the uplink C-OFDMA field and the downlink C-OFDMA field, the multi-AP MLD candidate set corresponding to the current candidate set info field supports both uplink C-OFDMA and downlink C-OFDMA by default.

In some embodiments, in the first frame, in a case where the value of the single-user J-TX field indicates that the multi-AP MLD candidate set corresponding to the current candidate set info field does not support joint transmission for a same user, the multi-AP MLD scheme field does not include the multi-user J-TX field, or the value of the multi-user J-TX field indicates that the multi-AP MLD candidate set corresponding to the current candidate set info field does not support joint transmission for multiple users.

In some embodiments, in the first frame, in a case where the value of the single-user J-TX field indicates that the multi-AP MLD candidate set corresponding to the current candidate set info field does not support joint transmission for a same user, the multi-AP MLD scheme field does not include the diversity J-TX field, or the value of the diversity J-TX field indicates that the multi-AP MLD candidate set corresponding to the current candidate set info field does not support diversity-based joint transmission.

In some embodiments, in the first frame, in a case where the value of the single-user J-TX field indicates that the multi-AP MLD candidate set corresponding to the current candidate set info field does not support joint transmission for a same user, the multi-AP MLD scheme field does not include the multiplexing J-TX field, or the value of the multiplexing J-TX field indicates that the multi-AP MLD candidate set corresponding to the current candidate set info field does not support multiplexing-based joint transmission.

In some embodiments, in the first frame, in a case where the value of the single-user J-TX field indicates that the multi-AP MLD candidate set corresponding to the current candidate set info field does not support joint transmission for a same user, the multi-AP MLD scheme field does not include the full-bandwidth J-TX field, or the value of the full-bandwidth J-TX field indicates that the multi-AP MLD candidate set corresponding to the current candidate set info field does not support full bandwidth-based joint transmission.

In some embodiments, in the first frame, in a case where the value of the single-user J-TX field indicates that the multi-AP MLD candidate set corresponding to the current candidate set info field does not support joint transmission for a same user, the multi-AP MLD scheme field does not include the partial-bandwidth J-TX field, or the value of the partial-bandwidth J-TX field indicates that the multi-AP MLD candidate set corresponding to the current candidate set info field does not support partial bandwidth-based joint transmission.

In some embodiments, in the first frame, in a case where the value of the single-user J-TX field indicates that the multi-AP MLD candidate set corresponding to the current candidate set info field supports joint transmission for a same user, the multi-AP MLD scheme field does not include the diversity J-TX field and the full-bandwidth J-TX field. Optionally, the multi-AP MLD candidate set corresponding to the current candidate set info field supports diversity-based joint transmission by default; and/or the multi-AP MLD candidate set corresponding to the current candidate set info field supports full bandwidth-based joint transmission by default.

In some embodiments, in the first frame, the multi-AP MLD scheme field includes at least one of the following: a C-OFDMA support field, a C-SR support field, a C-BF support field, a J-TX support field, or a C-UL MU MIMO support field; alternatively, the multi-AP MLD scheme field includes at least one of the following: the C-SR support field, the C-BF support field, the J-TX support field, or the C-UL MU MIMO support field. The C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

In some embodiments, in the first frame, in a case where the multi-AP MLD scheme field does not include the C-OFDMA support field, the multi-AP MLD candidate set corresponding to the current candidate set info field supports both uplink C-OFDMA and downlink C-OFDMA by default.

In some embodiments, in the first frame, the AP MLD info field in the multi-AP MLD info field includes at least one of the following: a BSSID field, an AP MLD ID field, an AP MLD roles field, or a basic multi-link element. The BSSID field indicates a BSSID of an AP MLD indicated by the current AP MLD info field, the AP MLD ID field indicates the ID of the AP MLD indicated by the current AP MLD info field, the AP MLD roles field indicates a multi-AP MLD coordinating role supported by the AP MLD indicated by the current AP MLD info field, and the basic multi-link element indicates multi-link information of the AP MLD indicated by the current AP MLD info field.

In some embodiments, in the first frame, the AP MLD ID field is directly set by a master AP MLD or a coordinating AP MLD, or the AP MLD ID field is determined based on the order of the AP MLD indicated by the current AP MLD info field in the multi-AP MLD candidate set corresponding to the current candidate set info field.

In some embodiments, in the first frame, the AP MLD roles field includes at least one of the following: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares its TXOP resources with an AP MLD indicated by the shared AP MLD role field to perform coordinated transmission.

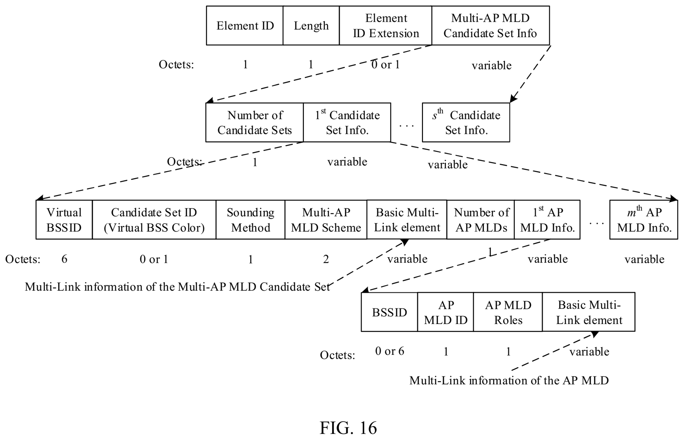

In some embodiments, the multi-AP MLD candidate set info element in the first frame may be as illustrated in FIG. 16. The multi-AP MLD candidate set info element includes a multi-AP MLD candidate set info field (occupying a variable number of bytes), where the multi-AP MLD candidate set info field includes a number of candidate sets field (occupying 1 byte), a 1^{st} candidate set info field (occupying a variable number of bytes), a 2^{nd} candidate set info field (occupying a variable number of bytes), ..., and an *s^{th}* candidate set info field (occupying a variable number of bytes). Specifically, as illustrated in FIG. 16, the candidate set info field includes at least one of the following: a VBSSID field (occupying 6 bytes), a candidate set ID or VBSS color field (occupying 0 or 1 byte), a sounding method field (occupying 1 byte), a multi-AP MLD scheme field (occupying 2 bytes), a basic multi-link element (occupying a variable number of bytes), a number of AP MLDs field (occupying 1 byte), a 1^{st} AP MLD info field (occupying a variable number of bytes), a 2^{nd} AP MLD info field (occupying a variable number of bytes), ..., and an *m^{th}* AP MLD info field (occupying a variable number of bytes). Optionally, as illustrated in FIG. 16, the AP MLD info field includes at least one of the following: a BSSID field (occupying 0 or 6 bytes), an AP MLD ID field (occupying 1 byte), an AP MLD roles field (occupying 1 byte), or a basic multi-link element (occupying a variable number of bytes).

In some embodiments, before the first AP MLD sends the first frame, the first AP MLD receives a second frame sent by the first non-AP MLD. The second frame is used to request the coordination capabilities and multi-link information of the multi-AP MLD candidate set.

In some embodiments, the second frame includes, but is not limited to, at least one of the following: an SSID field, an SSID list field, or a multi-AP MLD candidate set info request element. The SSID field and/or the SSID list field indicates an SSID requested by the first non-AP MLD and/or an SSID corresponding to a VBSS. The multi-AP MLD candidate set info request field in the multi-AP MLD candidate set info request element includes an info request field, where the info request field indicates whether the first non-AP MLD requests to acquire the coordination capabilities and multi-link information of the multi-AP MLD candidate set.

In some embodiments, in a case where the first frame is a probe response frame, the second frame is a probe request frame.

In some embodiments, in a case where the first frame is a multi-link probe response frame, the second frame is a multi-link probe request frame.

In some embodiments, in a case where the second frame is a multi-link probe request frame, the second frame further contains a multi-link element, where a type field contained in a multi-link control field of the multi-link element indicates that the multi-link element is a probe request multi-link element.

In the embodiments of the present disclosure, the first non-AP MLD may discover the multi-AP MLD candidate set through two manners: active scanning and passive scanning. It may be noted that, the manners in which other non-AP MLDs discover a multi-AP MLD candidate set are the same as the manners in which the first non-AP MLD discovers a multi-AP MLD candidate set, and are not described in detail herein.

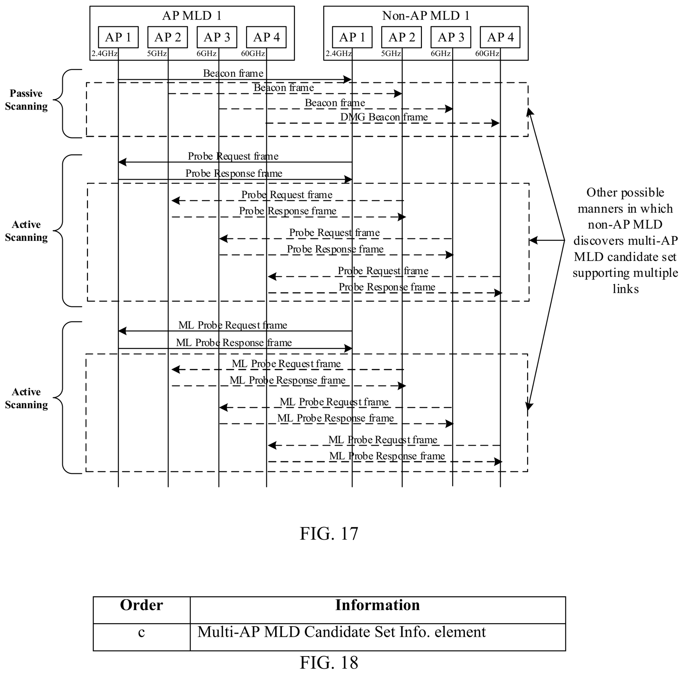

Specifically, assuming that the first AP MLD is AP MLD 1 and the first non-AP MLD is non-AP MLD 1, for passive scanning, as illustrated in FIG. 17, AP MLD 1 (for example, a master AP MLD) broadcasts, via a beacon frame (in 2.4GHz/5GHz/6GHz) or a DMG beacon frame (in 60GHz) carrying a multi-AP MLD candidate set info element and other information, the coordination capabilities and multi-link information of the multi-AP MLD candidate set to which AP MLD1 belongs. Upon reception of the beacon frame or the DMG beacon frame, non-AP MLD1 can learn the coordination capabilities and multi-link information of the multi-AP MLD candidate set.

Specifically, assuming that the first AP MLD is AP MLD 1 and the first non-AP MLD is non-AP MLD 1, for active scanning, as illustrated in FIG. 17, non-AP MLD 1 sends a probe request frame carrying a multi-AP MLD candidate set info request (field/element) and other information to actively request multi-AP MLD candidate set information from AP MLD 1. Then, AP MLD 1 informs, via a probe response frame carrying the multi-AP MLD candidate set info element, non-AP MLD 1 of the coordination capabilities and multi-link information of the multi-AP MLD candidate set to which AP MLD 1 belongs.

Optionally, as illustrated in FIG. 17, non-AP MLD 1 may also send an ML probe request frame carrying a multi-AP MLD candidate set info request (field/element) and a probe request multi-link element to actively request information of the multi-AP MLD candidate set information from AP MLD 1. Then, AP MLD 1 informs, via an ML probe response frame carrying a multi-AP MLD candidate set info element, non-AP MLD 1 of the coordination capabilities and multi-link information of the multi-AP MLD candidate set to which AP MLD 1 belongs.

It may be noted that, the process of discovering AP MLD 1 by non-AP MLD 1 may be performed on any link as illustrated in FIG. 17.

In some embodiments, the frame body structure of the beacon frame as illustrated in FIG. 17 may be as illustrated in FIG. 18, where a multi-AP MLD candidate set info element needed to be additionally carried in a beacon frame sent by AP MLD 1 (master AP MLD) indicates the coordination capabilities and multi-link information of the multi-AP MLD candidate set. The format of the multi-AP MLD candidate set info element is as illustrated in FIG. 16.

In some embodiments, the frame body structure of the DMG beacon frame as illustrated in FIG. 17 is consistent with the structure of the beacon frame, where a multi-AP MLD candidate set info element needed to be additionally carried in a DMG beacon frame sent by AP MLD 1 (master AP MLD) indicates the coordination capabilities and multi-link information of the multi-AP MLD candidate set. The format of the multi-AP MLD candidate set info element is as illustrated in FIG. 16.

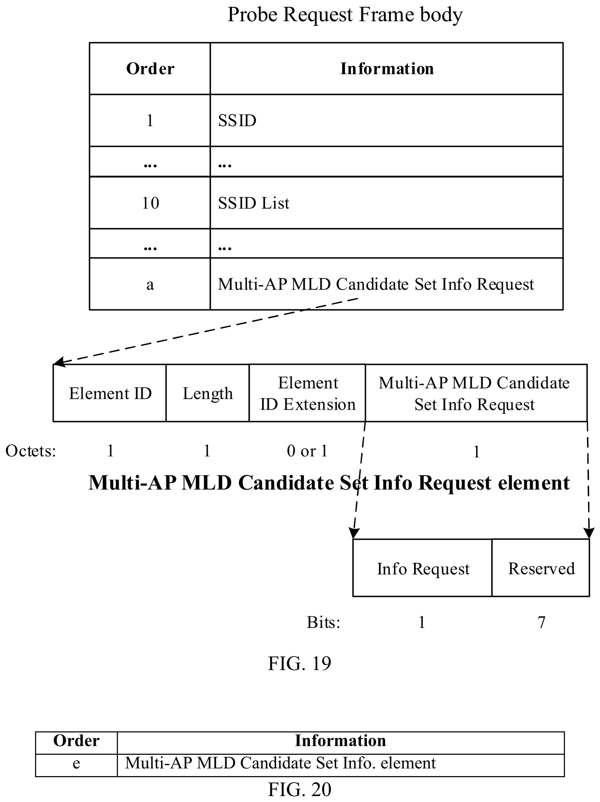

In some embodiments, the frame body structure of the probe request frame as illustrated in FIG. 17 may be as illustrated in FIG. 19, where an SSID element and an SSID list element indicate SSID(s) requested by non-AP MLD 1 and/or SSID(s) corresponding to a VBSS. An info request field in the multi-AP MLD candidate set info request element indicates whether non-AP MLD 1 requests to acquire the coordination capabilities and/or multi-link information of the multi-AP MLD candidate set. For example, info request = 0 indicates that non-AP MLD 1 does not request to acquire the coordination capabilities and/or multi-link information of the multi-AP MLD candidate set, and info request = 1 indicates that non-AP MLD 1 requests to acquire the coordination capabilities and/or multi-link information of the multi-AP MLD candidate set.

It may be noted that, the multi-AP MLD candidate set info request (i.e., the 1-bit info request as illustrated in FIG. 19) may also be implemented via a reserved bit(s) in other elements or fields in the frame structure of the probe request frame, and is not limited to being implemented in the newly added multi-AP MLD candidate set info request element.

In some embodiments, the frame body structure of the probe response frame as illustrated in FIG. 17 may be as illustrated in FIG. 20, where a multi-AP MLD candidate set info element needed to be additionally carried in a probe response frame sent by AP MLD 1 (master AP MLD) indicates the coordination capabilities and multi-link information of the multi-AP MLD candidate set. The format of the multi-AP MLD candidate set info element is as illustrated in FIG. 16.

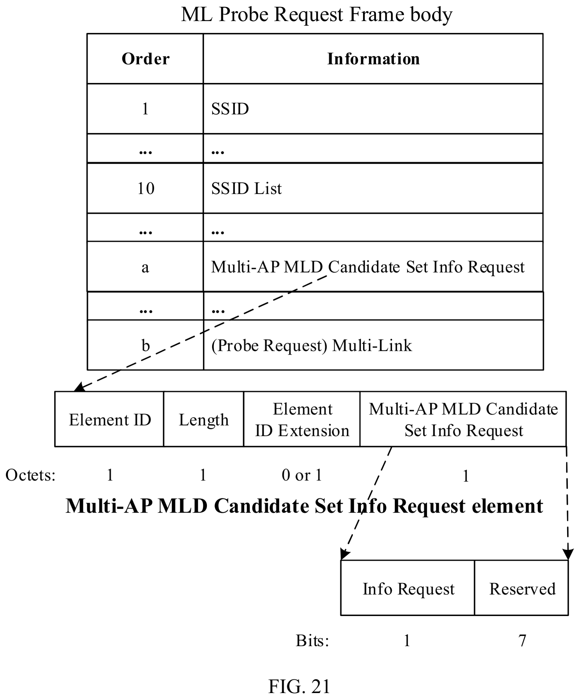

In some embodiments, the frame body structure of the ML probe request frame as illustrated in FIG. 17 may be as illustrated in FIG. 21, where the ML probe request frame refers to a probe request frame, and a probe request frame carrying a (probe request) multi-link element is referred to as an ML probe request frame. In the multi-link element, a type subfield of a multi-link control field being set to 1 indicates that the multi-link element is a probe request multi-link element. Specifically, an SSID element and an SSID list element indicate SSID(s) requested by non-AP MLD 1 and/or SSID(s) corresponding to a VBSS. An info request field of the multi-AP MLD candidate set info request element indicates whether non-AP MLD 1 requests to acquire the coordination capabilities and/or multi-link information of the multi-AP MLD candidate set. For example, info request = 0 indicates that non-AP MLD 1 does not request to acquire the coordination capabilities and/or multi-link information of the multi-AP MLD candidate set, and info request = 1 indicates that non-AP MLD 1 requests to acquire the coordination capabilities and/or multi-link information of the multi-AP MLD candidate set.

In some embodiments, the frame body structure of the ML probe response frame as illustrated in FIG. 17 may be consistent with the frame body structure of the probe response frame. A multi-AP MLD candidate set info element needed to be additionally carried in the probe response frame sent by AP MLD 1 (master AP MLD) indicates the coordination capabilities and multi-link information of the multi-AP MLD candidate set. The format of the multi-AP MLD candidate set info element is as illustrated in FIG. 16.

In some embodiments, before the first AP MLD receives the association request frame sent by the first non-AP MLD, the first AP MLD sends a multi-AP MLD candidate set request frame to at least one AP MLD, where the multi-AP MLD candidate set request frame contains coordination capabilities and multi-link information of the multi-AP MLD candidate set that the first AP MLD requests to set up.

Optionally, the first AP MLD is a master AP MLD, and the at least one AP MLD is a slave AP MLD.

In the embodiments of the present disclosure, before the first non-AP MLD discovers the multi-AP MLD candidate set(s) to which the first AP MLD belongs, the first AP MLD needs to request to set up the multi-AP MLD candidate set.

Optionally, the at least one AP MLD may include a second AP MLD, that is, the second AP MLD may receive the multi-AP MLD candidate set request frame sent by the first AP MLD.

In some embodiments, the multi-AP MLD candidate set request frame contains a multi-AP MLD candidate set request field, where the multi-AP MLD candidate set request field indicates the coordination capabilities and multi-link information of the multi-AP MLD candidate set that the first AP MLD requests to set up.

In some embodiments, the multi-AP MLD candidate set request field includes a number of candidate sets field and at least one candidate set info field, where the number of candidate sets field indicates the number of multi-AP MLD candidate sets that the first AP MLD requests to set up, and the *n^{th}* candidate set info field among the at least one candidate set info field indicates coordination capabilities and multi-link information of the *n^{th}* multi-AP MLD candidate set that the first AP MLD requests to set up, where n is a positive integer.

It may be noted that, in the embodiments of the present disclosure, *n* ≥ *s,* that is, a portion of the AP MLD candidate sets requested to be set up in the multi-AP MLD candidate set request frame may fail to be set up.

In some embodiments, in the multi-AP MLD candidate set request frame, the candidate set info field in the at least one candidate set info field includes, but is not limited to, at least one of the following: a VBSSID field, a candidate set UD field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to the current candidate set info field. The candidate set ID field indicates an ID of the multi-AP MLD candidate set corresponding to the current candidate set info field. The sounding method field indicates a channel sounding method supported by the multi-AP MLD candidate set corresponding to the current candidate set info field. The multi-AP MLD scheme field indicates a multi-AP MLD coordination mode supported by the multi-AP MLD candidate set corresponding to the current candidate set info field. The basic multi-link element indicates multi-link information of the multi-AP MLD candidate set corresponding to the current candidate set info field. The number of AP MLDs field indicates the number of member AP MLDs contained in the multi-AP MLD candidate set corresponding to the current candidate set info field. The *m^{th}* AP MLD info field among the multiple AP MLD info fields indicates relevant information of the *m^{th}* member AP MLD contained in the multi-AP MLD candidate set corresponding to the current candidate set info field.

In some embodiments, in the multi-AP MLD candidate set request frame, the candidate set ID field may be replaced by a VBSS color field, where the VBSS color field may indicate the multi-AP MLD candidate set corresponding to the current candidate set info field.

In some embodiments, in the multi-AP MLD candidate set request frame, the sounding method field is consistent with the sounding method field in the first frame described above, and details are omitted here.

In some embodiments, in the multi-AP MLD candidate set request frame, the multi-AP MLD scheme field is consistent with the multi-AP MLD scheme field in the first frame described above, and details are omitted here.

In some embodiments, in the multi-AP MLD candidate set request frame, the basic multi-link element is consistent with the basic multi-link element in the first frame described above, and details are omitted here.

In some embodiments, in the multi-AP MLD candidate set request frame, the number of AP MLDs field is consistent with the number of AP MLDs field in the first frame described above, and details are omitted here.

In some embodiments, in the multi-AP MLD candidate set request frame, the multiple AP MLD info fields are consistent with the multiple AP MLD info fields in the first frame described above, and details are omitted here.

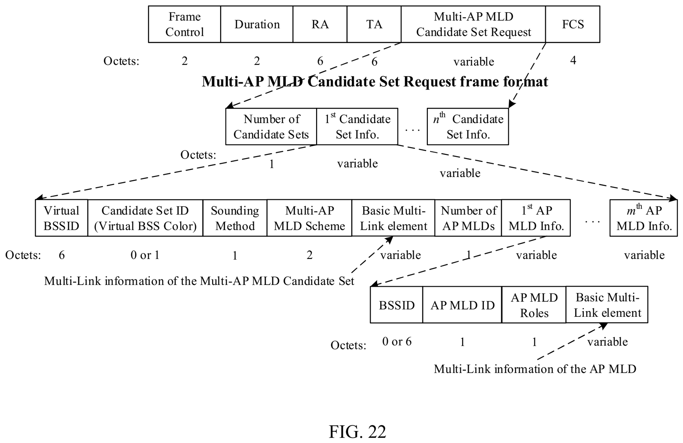

In some embodiments, the frame body structure of the multi-AP MLD candidate set request frame may be as illustrated in FIG. 22. The multi-AP MLD candidate set request frame contains a multi-AP MLD candidate set info field (occupying a variable number of bytes), where the multi-AP MLD candidate set info field includes a number of candidate sets field (occupying 1 byte), a 1^{st} candidate set info field (occupying a variable number of bytes), a 2^{nd} candidate set info field (occupying a variable number of bytes), ..., and an *n^{th}* candidate set info field (occupying a variable number of bytes). Specifically, as illustrated in FIG. 22, the candidate set info field includes at least one of the following: a VBSSID field (occupying 6 bytes), a candidate set ID or VBSS color field (occupying 0 or 1 byte), a sounding method field (occupying 1 byte), a multi-AP MLD scheme field (occupying 2 bytes), a basic multi-link element (occupying a variable number of bytes), a number of AP MLDs field (occupying 1 byte), a 1^{st} AP MLD info field (occupying a variable number of bytes), a 2^{nd} AP MLD info field (occupying a variable number of bytes), ..., and an *m^{th}* AP MLD info field (occupying a variable number of bytes). Optionally, as illustrated in FIG. 22, the AP MLD info field includes at least one of the following: a BSSID field (occupying 0 or 6 bytes), an AP MLD ID field (occupying 1 byte), an AP MLD roles field (occupying 1 byte), or a basic multi-link element (occupying a variable number of bytes).

In some embodiments, the first AP MLD receives a multi-AP MLD candidate set response frame sent by a second AP MLD. The at least one AP MLD includes the second AP MLD. A multi-AP MLD candidate set response field in the multi-AP MLD candidate set response frame includes a response code field. The value of the response code field indicates at least one of the following: the second AP MLD accepts a multi-AP MLD candidate set setup request from the first AP MLD; the second AP MLD rejects the multi-AP MLD candidate set setup request from the first AP MLD, where a reject reason is that a BSS load of the second AP MLD is relatively high and the second AP MLD cannot participate in multi-AP MLD coordinated transmission; or the second AP MLD rejects the multi-AP MLD candidate set setup request from the first AP MLD, where the reject reason is unknown.

For example, response code field = 0 indicates that the second AP MLD accepts the multi-AP MLD candidate set setup request from the first AP MLD; response code field = 1 indicates that the second AP MLD rejects the multi-AP MLD candidate set setup request from the first AP MLD, where the reject reason is that the BSS load of the second AP MLD is relatively high and the second AP MLD cannot participate in multi-AP MLD coordinated transmission; and response code field = 2 indicates that the second AP MLD rejects the multi-AP MLD candidate set setup request from the first AP MLD, where the reject reason is unknown.

In some embodiments, in a case where the response code field indicates that the second AP MLD accepts the multi-AP MLD candidate set setup request from the first AP MLD, the multi-AP MLD candidate set response field further includes a number of associated non-AP MLDs field and multiple non-AP MLD info fields (e.g., 1^{st} non-AP MLD info field, ..., x^{th} non-AP MLD info field). The number of associated non-AP MLDs field indicates the number of non-AP MLDs associated with the second AP MLD. The *x^{th}* non-AP MLD info field in the multiple non-AP MLD info fields indicates multi-AP MLD coordination-related information of the *x^{th}* non-AP MLD among non-AP MLDs associated with the second AP MLD, where x is a positive integer.

In some embodiments, each non-AP MLD info field in the multiple non-AP MLD info fields includes at least one of the following: a non-AP MLD priority field, a multi-AP MLD coordination capabilities of non-AP MLD field, or a basic multi-link element. The non-AP MLD priority field indicates a priority for a non-AP MLD indicated by the current non-AP MLD info field to participate in multi-AP MLD coordinated transmission. The multi-AP MLD coordination capabilities of non-AP MLD field indicates capabilities information of the non-AP MLD indicated by the current non-AP MLD info field for participating in multi-AP MLD coordination. The basic multi-link element indicates multi-link information supported by the non-AP MLD indicated by the current non-AP MLD info field.

In some embodiments, the multi-AP MLD coordination capabilities of non-AP MLD field includes at least one of the following: a C-SR field, a C-BF field, a C-UL MU MIMO field, or a J-TX field; or the multi-AP MLD coordination capabilities of non-AP MLD field includes at least one of: the C-SR field or the C-UL MU MIMO field. The C-SR field indicates whether the non-AP MLD indicated by the current non-AP MLD info field supports C-SR. The C-BF field indicates whether the non-AP MLD indicated by the current non-AP MLD info field supports C-BF. The C-UL MU MIMO field indicates whether the non-AP MLD indicated by the current non-AP MLD info field supports C-UL MU MIMO. The J-TX field indicates whether the non-AP MLD indicated by the current non-AP MLD info field supports J-TX.

In some embodiments, in a case where the multi-AP MLD coordination capabilities of non-AP MLD field does not include the C-BF field, the multi-AP MLD coordination capabilities of non-AP MLD field implicitly indicates that the non-AP MLD indicated by the current non-AP MLD info field supports C-BF.

In some embodiments, in a case where the multi-AP MLD coordination capabilities of non-AP MLD field does not include the J-TX field, the multi-AP MLD coordination capabilities of non-AP MLD field implicitly indicates that the non-AP MLD indicated by the current non-AP MLD info field supports J-TX.

In some embodiments, the multi-AP MLD coordination capabilities of non-AP MLD field implicitly indicates that the non-AP MLD indicated by the current non-AP MLD info field supports both uplink C-OFDMA and downlink C-OFDMA.

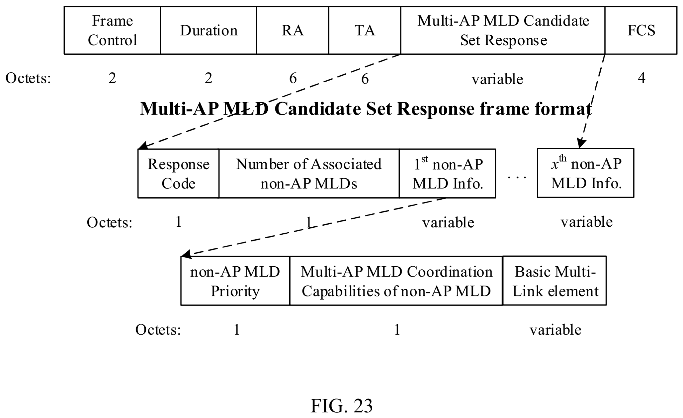

In some embodiments, the frame structure of the multi-AP MLD candidate set response frame may be illustrated in FIG. 23, where the multi-AP MLD candidate set response frame includes a multi-AP MLD candidate set response field (occupying a variable number of bytes). The multi-AP MLD candidate set response field includes: a response code field (occupying 1 byte), a number of associated non-AP MLDs field (occupying 1 byte), a 1^{st} non-AP MLD info field (occupying a variable number of bytes), a 2^{nd} non-AP MLD info field (occupying a variable number of bytes), ..., and an x^{th} non-AP MLD info field (occupying a variable number of bytes). The non-AP MLD info field includes: a non-AP MLD priority field (occupying 1 byte), a multi-AP MLD coordination capabilities of non-AP MLD field (occupying 1 byte), and a basic multi-link element (occupying a variable number of bytes).

In some embodiments, the first AP MLD sends a multi-AP MLD candidate set confirm frame, where a multi-AP MLD candidate set confirm field in the multi-AP MLD candidate set confirm frame indicates a multi-AP MLD candidate set that the first AP MLD confirms to set up.

In some embodiments, the multi-AP MLD candidate set confirm field in the multi-AP MLD candidate set confirm frame includes a number of candidate sets field and at least one candidate set info field (e.g., 1^{st} candidate set info field, ..., *s^{th}* candidate set info field), where the number of candidate sets field indicates the number of multi-AP MLD candidate sets that the first AP MLD confirms to set up, and an *s^{th}* candidate set info field in the at least one candidate set info field indicates coordination capabilities and multi-link information of an *s^{th}* multi-AP MLD candidate set, where s is a positive integer.

In some embodiments, each of the at least one candidate set info field in the multi-AP MLD candidate set confirm frame includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to the current candidate set info field. The candidate set ID field indicates the ID of the multi-AP MLD candidate set corresponding to the current candidate set info field. The sounding method field indicates a channel sounding method supported by the multi-AP MLD candidate set corresponding to the current candidate set info field. The multi-AP MLD scheme field indicates a multi-AP MLD coordination mode supported by the multi-AP MLD candidate set corresponding to the current candidate set info field. The basic multi-link element indicates multi-link information of the multi-AP MLD candidate set corresponding to the current candidate set info field. The number of AP MLDs field indicates the number of member AP MLDs contained in the multi-AP MLD candidate set corresponding to the current candidate set info field. An *m^{th}* AP MLD info field in the multiple AP MLD info fields indicates relevant information of an *m^{th}* member AP MLD contained in the multi-AP MLD candidate set corresponding to the current candidate set info field.

In some embodiments, in the multi-AP MLD candidate set confirm frame, the candidate set ID field may be replaced by a VBSS color field, where the VBSS color field may indicate the multi-AP MLD candidate set corresponding to the current candidate set info field.

In some embodiments, in the multi-AP MLD candidate set confirm frame, the sounding method field is consistent with the sounding method field in the first frame mentioned above and will not be described in detail here.

In some embodiments, in the multi-AP MLD candidate set confirm frame, the multi-AP MLD scheme field is consistent with the multi-AP MLD scheme field in the first frame mentioned above and will not be described in detail here.

In some embodiments, in the multi-AP MLD candidate set confirm frame, the basic multi-link element is consistent with the basic multi-link element in the first frame mentioned above and will not be described in detail here.

In some embodiments, in the multi-AP MLD candidate set confirm frame, the number of AP MLDs field in the confirm frame is consistent with the number of AP MLDs field in the first frame mentioned above and will not be described in detail here.

In some embodiments, in the multi-AP MLD candidate set confirm frame, the multiple AP MLD info fields are consistent with the multiple AP MLD info fields in the first frame mentioned above and will not be described in detail here.

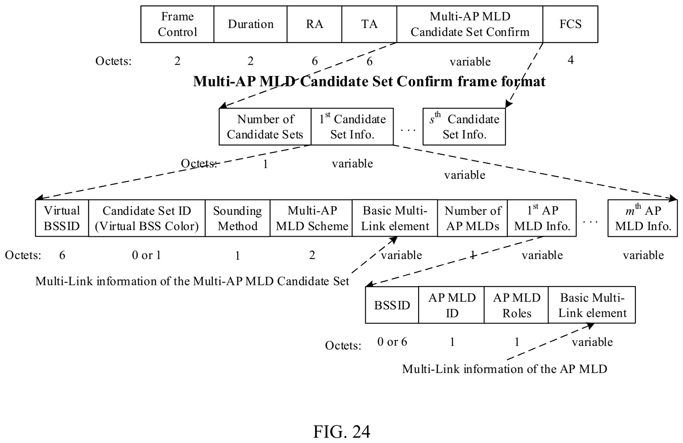

In some embodiments, the frame body structure of the multi-AP MLD candidate set confirm frame may be illustrated in FIG. 24, where the multi-AP MLD candidate set confirm frame contains a multi-AP MLD candidate set info field (occupying a variable number of bytes). The multi-AP MLD candidate set info field includes a number of candidate sets field (occupying 1 byte), a 1^{st} candidate set info field (occupying a variable number of bytes), a 2^{nd} candidate set info field (occupying a variable number of bytes), ..., and an *s*^{th} candidate set info field (occupying a variable number of bytes). Specifically, as illustrated in FIG. 24, each candidate set info field includes at least one of the following: a VBSSID field (occupying 6 bytes), a candidate set ID or VBSS color field (occupying 0 or 1 byte), a sounding method field (occupying 1 byte), a multi-AP MLD scheme field (occupying 2 bytes), a basic multi-link element (occupying a variable number of bytes), a number of AP MLDs field (occupying 1 byte), a 1^{st} AP MLD info field (occupying a variable number of bytes), a 2^{nd} AP MLD info field (occupying a variable number of bytes), ..., and an *m^{th}* AP MLD info field (occupying a variable number of bytes). Optionally, as illustrated in FIG. 24, each AP MLD info field includes at least one of the following: a BSSID field (occupying 0 or 6 bytes), an AP MLD ID field (occupying 1 byte), an AP MLD roles field (occupying 1 byte), or a basic multi-link element (occupying a variable number of bytes).

It may be noted that, the difference between the frame structure of the multi-AP MLD candidate set confirm frame as illustrated in FIG. 24 and the frame structure of the multi-AP MLD candidate set request frame as illustrated in FIG. 22 lies in the number of candidate set info fields indicated by the number of candidate sets filed (*n* in FIG. 22 and s in FIG. 24, where *s* ≤ *n*). The information contained in the multi-AP MLD candidate set confirm frame may be regarded as a subset of the multi-AP MLD candidate set request frame. Since some slave AP MLD(s) may reject a multi-AP MLD candidate set setup request from a master AP MLD due to certain reasons, a multi-AP MLD set finally confirmed to be set up by the multi-AP MLD candidate set confirm frame may differ from information requested by the multi-AP MLD candidate set request frame. An RA field of the multi-AP MLD candidate set confirm frame indicates a MAC address of a target receiver of the multi-AP MLD candidate set confirm frame, where the MAC address may be set as a broadcast address or a multicast address. In a case where the MAC is set to a multicast address, the target receiver is an AP MLD that accepted the multi-AP MLD candidate set request from the master AP MLD.

In the embodiments of the present disclosure, through multi-AP MLD capabilities exchange, each AP MLD can acquire coordination capabilities information and multi-link information of other AP MLDs.

Optionally, in the embodiments of the present disclosure, the method for setting up a multi-AP MLD candidate set that can support multiple links is classified into the following two types: a master AP MLD determines coordination capabilities and multi-link capabilities of the multi-AP MLD candidate set (applicable to scenarios with one or more slave AP MLDs); a slave AP MLD(s) determines the coordination capabilities and multi-link capabilities of the multi-AP MLD candidate set (a special case applicable to scenarios with only one slave AP MLD).

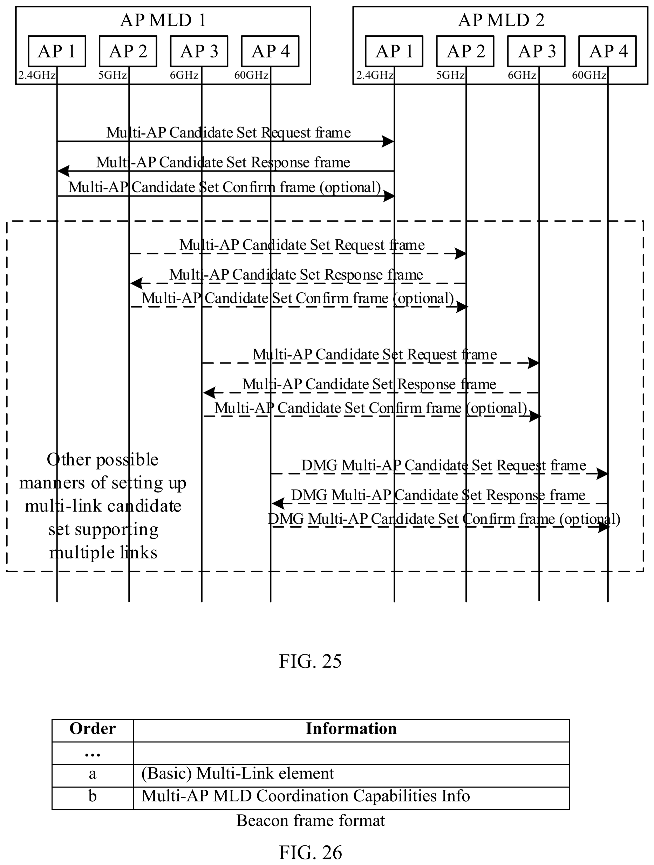

Specifically, assuming that a first AP MLD is AP MLD 1 (master AP MLD) and a second AP MLD is AP MLD 2 (slave AP MLD), for the case in which the master AP MLD determines the coordination capabilities and multi-link capabilities of the multi-AP MLD candidate set, as illustrated in FIG. 25, AP MLD 1 sends a multi-AP MLD candidate set request frame to AP MLD 2, where the multi-AP MLD candidate set request frame carries multi-AP capabilities information and multi-link information of AP MLDs (e.g., AP MLD 1 and AP MLD 2) in the multi-AP MLD candidate set to be set up. As illustrated in FIG. 25, AP MLD 2 replies with a multi-AP MLD candidate set response frame to AP MLD 1, where the multi-AP MLD candidate set response frame carries information indicating whether AP MLD 2 accepts the multi-AP MLD candidate set setup request from the master AP MLD as well as information of a non-AP MLD(s) associated with AP MLD 2. Optionally, as illustrated in FIG. 25, based on a feedback from AP MLD 2, AP MLD 1 determines multi-AP MLD coordination capabilities and multi-link capabilities information of the multi-AP MLD candidate set and sends such information to AP MLD 2 via a multi-AP MLD candidate set confirm frame, in which case a multi-AP MLD candidate set confirm frame exists in FIG. 25. Specifically, this scheme is applicable to scenarios with one or more slave AP MLDs. This is because if multiple slave AP MLDs exist, although multi-AP MLD candidate set response frames replied by the slave AP MLDs may indicate different multi-AP MLD capabilities information and multi-link capabilities information, such information is finally fed back to the master AP MLD for uniform processing, and then the mater AP MLD determines the multi-AP capabilities and multi-link capabilities of the multi-AP MLD candidate set.

Specifically, assuming that a first AP MLD is AP MLD 1 (master AP MLD) and a second AP MLD is AP MLD 2 (slave AP MLD), for the case in which a slave AP MLD(s) determines the coordination capabilities and multi-link capabilities of the multi-AP MLD candidate set, as illustrated in FIG. 25, AP MLD 1 sends a multi-AP MLD candidate set request frame to AP MLD 2, where the multi-AP MLD candidate set request frame carries multi-AP capabilities information and multi-link information of AP MLDs (e.g., AP MLD 1 and AP MLD 2) in the multi-AP MLD candidate set to be set up. AP MLD 2 replies with a multi-AP MLD candidate set response frame to AP MLD 1, where the multi-AP MLD candidate set response frame carries information indicating whether AP MLD 2 accepts the multi-AP MLD candidate set setup request from the master AP MLD as well as information of the non-AP MLDs associated with AP MLD 2. If the multi-AP MLD candidate set to be set up contains only one slave AP MLD, then the multi-AP MLD candidate set supporting multiple links is set up, and the coordination capabilities and multi-link capabilities information of the multi-AP MLD candidate set are indicated by the multi-AP MLD candidate set response frame. In this case, a multi-AP MLD candidate set confirm frame does not exist in FIG. 25. Specifically, this scheme is applicable to the scenarios with only one slave AP MLD. This is because if multiple slave AP MLDs exist, multi-AP MLD candidate set response frames replied by the slave AP MLDs may indicate different coordination capabilities information and multi-link capabilities information, making it difficult to determine the coordination capabilities information and multi-link capabilities information of the multi-AP MLD candidate set.

It may be noted that, the multi-AP MLD candidate set may be set up between AP MLDs over any link as illustrated in FIG. 25, and the setup result is applicable to all links.

In some embodiments, before the first AP MLD receives the association request frame sent by the first non-AP MLD, the first AP MLD acquires multi-AP MLD coordination capabilities information of at least one AP MLD.

In the embodiments of the present disclosure, before the first AP MLD requests to set up the multi-AP MLD candidate set, the first AP MLD needs to acquire multi-AP MLD coordination capabilities information of at least one AP MLD.

Optionally, the first AP MLD is a master AP MLD, and the at least one AP MLD is a slave AP MLD.

In the embodiments of the present disclosure, before the first non-AP MLD requests to set up the multi-AP MLD candidate set, the first AP MLD needs multi-AP MLD coordination capabilities information of at least one AP MLD.

Optionally, the at least one AP MLD may include a second AP MLD, i.e., the second AP MLD may send multi-AP MLD coordination capabilities information of the second AP MLD to the first AP MLD.

In some embodiments, the multi-AP MLD coordination capabilities information of the *j^{th}* AP MLD among the at least one AP MLD is sent via a third frame. The third frame contains a multi-link element and a multi-AP MLD coordination capabilities element, and *j* is a positive integer. The multi-link element indicates multi-link information of the *j^{th}* AP MLD, and a multi-AP MLD coordination capabilities field in the multi-AP MLD coordination capabilities element indicates multi-AP MLD coordination capabilities information of the *j^{th}* AP MLD.

It may be noted that, the multi-link element contained in the third frame may also be a basic multi-link element, and the two are interchangeable in the embodiments of the present disclosure.

In some embodiments, the third frame is one of: a beacon frame, a broadcast probe response frame, or a DMG beacon frame.

Specifically, for example, in the case where the third frame is a beacon frame, the frame structure of the beacon frame may be as illustrated in FIG. 26. The beacon frame needs to contain at least a (basic) multi-link element and a multi-AP MLD coordination capabilities element. The (basic) multi-link element indicates multi-link information supported by the *j^{th}* AP MLD, such as support for setting up multiple links at 2.4 GHz, 5 GHz, 6 GHz, and 60 GHz, and respective capabilities information on each link. The multi-AP MLD coordination capabilities element indicates coordination capabilities information supported by the *j^{th}* AP MLD.

Specifically, for example, in the case where the third frame is a beacon frame, the frame structure of the beacon frame may be as illustrated in FIG. 26. The beacon frame needs to contain at least a (basic) multi-link element and a multi-AP MLD coordination capabilities element. The (basic) multi-link element indicates multi-link information supported by the *j^{th}* AP MLD, such as support for setting up multiple links at 2.4 GHz, 5 GHz, 6 GHz, and 60 GHz, and respective capabilities information on each link. The multi-AP MLD coordination capabilities element indicates coordination capabilities information supported by the *j^{th}* AP MLD.

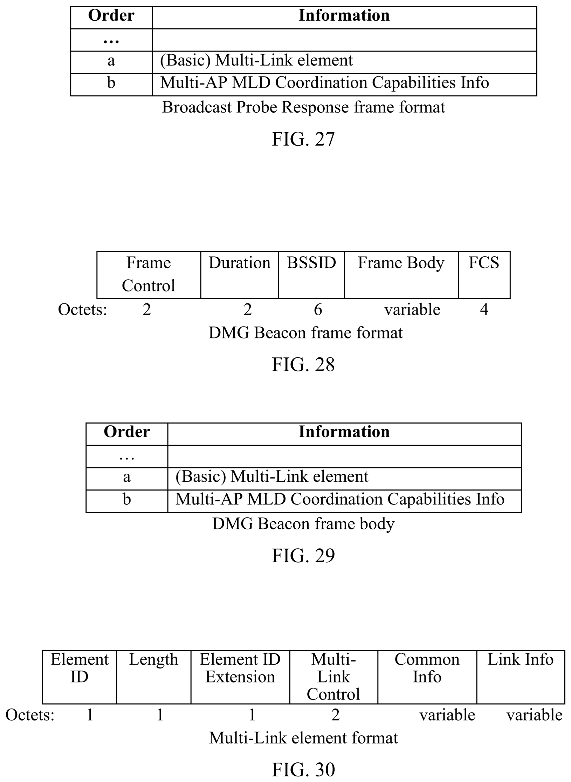

Specifically, for example, in the case where the third frame is a broadcast probe response frame, the frame structure of the broadcast probe response frame may be as illustrated in FIG. 27. The broadcast probe response frame needs to contain at least a (basic) multi-link element and a multi-AP MLD coordination capabilities element. The (basic) multi-link element indicates multi-link information supported by the *j^{th}* AP MLD, such as support for setting up multiple links at 2.4 GHz, 5 GHz, 6 GHz, and 60 GHz, and respective capabilities information on each link. The multi-AP MLD coordination capabilities element indicates the coordination capabilities information supported by the *j^{th}* AP MLD.

Specifically, for example, in the case where the third frame is a DMG beacon frame, the frame structure of the DMG beacon frame may be as illustrated in FIG. 28. The DMG beacon frame contains a frame control field (occupying 2 bytes), a duration field, a BSSID field (occupying 6 bytes), a frame body field (occupying a variable number of bytes), and a frame check sequence (FCS) field (occupying 4 bytes). The frame control field indicates type information of the frame. Type value of the frame control field = 11 and subtype value of the frame control field = 0000 represent that the frame is a DMG beacon frame. The duration field indicates a duration of a stage in which the *j^{th}* AP MLD sends the DMG beacon frame. The BSSID field is used to carry a BSSID of the *j^{th}* AP MLD. The frame body field, as illustrated in FIG. 29, carries various information of the *j^{th}* AP MLD. The FCS field is used to check the frame. As illustrated in FIG. 29, the frame body field of the DMG beacon frame needs to contain at least a (basic) multi-link element and a multi-AP MLD coordination capabilities element. The (basic) multi-link element indicates multi-link information supported by the at least AP MLD, such as support for setting up multiple links at 2.4 GHz, 5 GHz, 6 GHz, and 60 GHz, and respective capabilities information on each link. The multi-AP MLD coordination capabilities element indicates the coordination capabilities information supported by the *f^{th}* AP MLD.

In some embodiments, in the third frame, the multi-link element includes but is not limited to at least one of the following: a multi-link control field, a common info field, or a link info field. A type field in the multi-link control field indicates that the type of the multi-link element is a basic multi-link element, and a presence bitmap field in the multi-link control field indicates a field(s) present in the common info field. The first *Q₁* bits and the last *Q₂* bits of a link ID info field of the common info field jointly indicate a link ID of an affiliated AP of an AP MLD that sends the basic multi-link element during multi-AP MLD coordination, where *Q₁* and *Q₂* are both positive integers. The link info field indicates link-related information of the *j^{th}* AP MLD.

For example, *Q₁* = 4 and *Q₂ =* 4. Of course, *Q₁* and *Q₂* may also take other values, which are not limited in the embodiments of the present disclosure.

In some embodiments, in the third frame, the link info field includes at least one per-station (STA) profile field. The first *Q₃* bits and the last *Q₄* bits of an STA control field of each of the at least one per-STA profile field jointly indicate a link ID of an STA reported during multi-AP MLD coordination, where *Q₃* and *Q₄* are both positive integers.

For example, *Q₃* = 4 and *Q₄ =* 4. Of course, *Q₃* and *Q₄* may also take other values, which are not limited in the embodiments of the present disclosure.

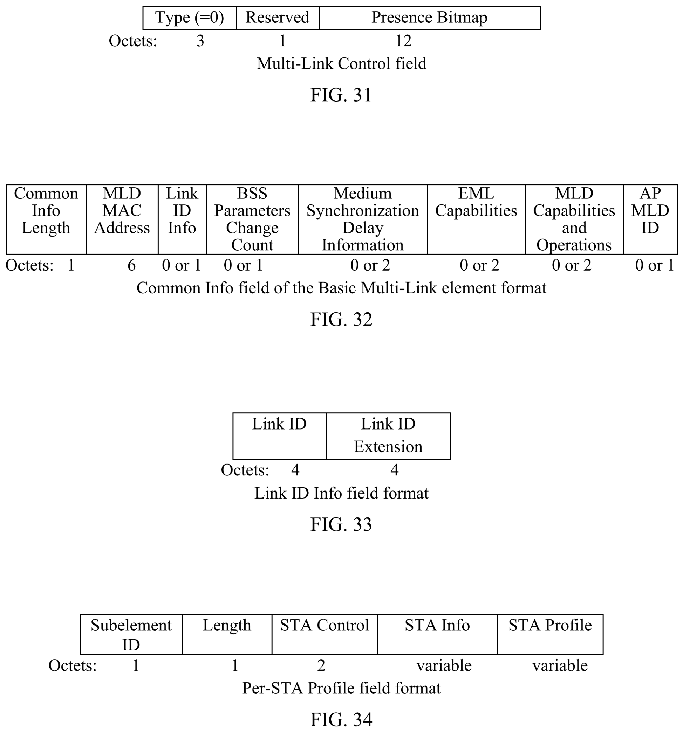

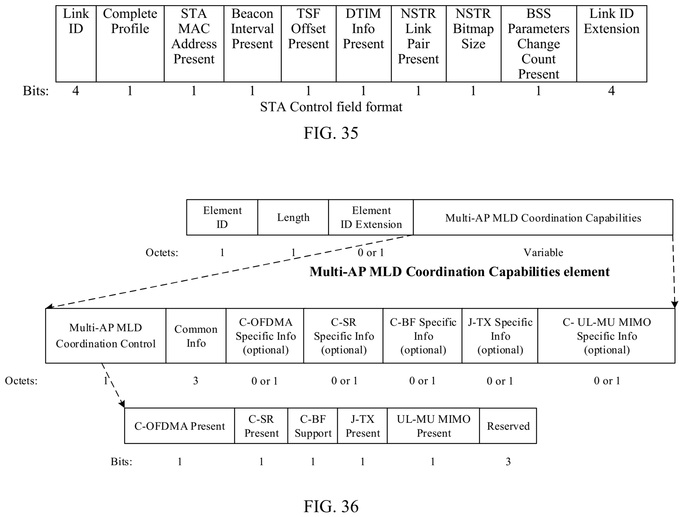

In some embodiments, the multi-link element in the third frame may be as illustrated in FIG. 30. In FIG. 30, element ID field = 255 and an element ID extension field together indicate an ID of the multi-link element. In a case where element ID = 107, the current element is uniquely determined to be the multi-link element. A length field indicates a length of the current element. Optionally, the multi-link control field in the multi-link element as illustrated in FIG. 30 may be as illustrated in FIG. 31. A type field indicates a subtype of the current multi-link element, and a presence bitmap field indicates a subfield(s) present in the common info field of the multi-Link element. A link info field carries link-related information of an MLD and contains one or more subelements. In a case where type = 0, the multi-Link element is a basic multi-link element. Optionally, the meanings represented by the values of the type field are as illustrated in Table 1. Optionally, the common info field of the basic multi-link element is as illustrated in FIG. 32, where the format of the link ID info field in the common info field is as illustrated in FIG. 33, where the first 4 bits (link ID) indicate a link ID of an affiliated AP of an AP MLD that sends the basic multi-link element. Since the number of links that can be indicated by a 4-bit link ID is limited, and in multi-AP MLD coordination, a virtual AP MLD may contain a large number of AP MLDs and serve many non-AP MLDs, the original 4-bit link ID may be insufficient for indication. Therefore, in the present disclosure, the last 4 bits are defined as link ID extension, where the last 4 bits and the first 4 bits (link ID) jointly indicate a link ID of an affiliated AP of an AP MLD that sends the basic multi-link element during multi-AP MLD coordination. Optionally, the link info field of the basic multi-link element includes one or more per-STA profile fields. The format of the per-STA profile field is as illustrated in FIG. 34. The format of the STA control field in the per-STA profile field is as illustrated in FIG. 35, where the first 4 bits (link ID) indicates a link ID of an STA reported. In the present disclosure, the last 4 reserved bits are defined as a link ID extension, where the last 4 bits and the first 4 bits (link ID) jointly indicate a link ID of an STA reported during multi-AP MLD coordination.

**Table 1**

| Type subfield value | Multi-link element variant name |
|---|---|
| 0 | Basic |
| 1 | Probe Request |
| 2 | Reconfiguration |
| 3 | Tunneled Direct Link Setup (TDLS) |
| 4 | Priority Access |
| 5-7 | Reserved |

In some embodiments, in the third frame, the multi-AP MLD coordination capabilities field includes but is not limited to at least one of the following: a multi-AP MLD coordination control field, a common info field, a C-OFDMA specific info field, a C-SR specific info field, a J-TX specific info field, or a C-UL MU MIMO specific info field; alternatively, the multi-AP MLD coordination capabilities field includes but is not limited to at least one of the following: the multi-AP coordination control field, the common info field, the C-SR specific info field, the J-TX specific info field, or the C-UL MU MIMO specific info field.

The multi-AP MLD coordination control field indicates a multi-AP MLD coordination mode-related field(s) included in the multi-AP MLD coordination capabilities field. The common info field indicates a multi-AP MLD candidate set setup method, a role supported by the *j^{th}* AP MLD under the multi-AP MLD transmission scheme, and a channel sounding method supported by the *j^{th}* AP MLD. The C-OFDMA specific info field indicates a type of C-OFDMA supported by the *j^{th}* AP MLD. The C-SR specific info field indicates a type of C-SR supported by the *j^{th}* AP MLD. The J-TX specific info field indicates a type of J-TX supported by the *j^{th}* AP MLD. The C-UL MU MIMO specific info field indicates a type of C-UL MU MIMO supported by the *j^{th}* AP MLD.

In some embodiments, in the third frame, the multi-AP MLD coordination control field includes at least one of the following: a C-OFDMA present field, a C-SR present field, a C-BF support field, a J-TX present field, or a C-UL MU MIMO present field; alternatively, the multi-AP MLD coordination control field includes at least one of the following: the C-SR present field, the C-BF support field, the J-TX present field, or the C-UL MU MIMO present field.

Specifically, the C-OFDMA present field indicates whether the multi-AP MLD coordination capabilities field includes the C-OFDMA specific info field, and whether the *j^{th}* AP MLD supports C-OFDMA. Optionally, the C-OFDMA present field occupies 1 bit. For example, C-OFDMA present field = 1 indicates that the multi-AP MLD coordination capabilities field includes the C-OFDMA specific info field and the *j^{th}* AP MLD supports C-OFDMA; and C-OFDMA present field = 0 indicates that the multi-AP MLD coordination capabilities field does not include the C-OFDMA specific info field and the *j^{th}* AP MLD does not support C-OFDMA. For another example, C-OFDMA present field = 0 indicates that the multi-AP MLD coordination capabilities field includes the C-OFDMA specific info field and the *j^{th}* AP MLD supports C-OFDMA; and C-OFDMA present field = 1 indicates that the multi-AP MLD coordination capabilities field does not include the C-OFDMA specific info field and the *j^{th}* AP MLD does not support C-OFDMA.

Specifically, the C-SR present field indicates whether the multi-AP MLD coordination capabilities field includes the C-SR specific info field, and the C-SR present field indicates whether the *j^{th}* AP MLD supports C-SR. Optionally, the C-SR present field may occupy 1 bit. For example, C-SR present field = 1 indicates that the multi-AP MLD coordination capabilities field includes the C-SR specific info field and the *j^{th}* AP MLD supports C-SR; and C-SR present field = 0 indicates that the multi-AP MLD coordination capabilities field does not include the C-SR specific info field and the *j^{th}* AP MLD does not support C-SR. For another example, C-SR present field = 0 indicates that the multi-AP MLD coordination capabilities field includes the C-SR specific info field and the *j^{th}* AP MLD supports C-SR; and C-SR present field = 1 indicates that the multi-AP MLD coordination capabilities field does not include the C-SR specific info field and the j-th AP MLD does not support C-SR.

Specifically, the C-BF support field indicates whether the *j^{th}* AP MLD supports C-BF. Optionally, the C-BF support field may occupy 1 bit. For example, C-BF support field = 1 indicates that the *j^{th}* AP MLD supports C-BF; and C-BF support field = 1 indicates that the *j^{th}* AP MLD does not support C-BF. For another example, C-BF support field = 0 indicates that the *j^{th}* AP MLD supports C-BF; and C-BF Support field = 1 indicates that the *j^{th}* AP MLD does not support C-BF.

Specifically, the J-TX present field indicates whether the multi-AP MLD coordination capabilities field includes the J-TX specific info field and whether the *j^{th}* AP MLD supports J-TX. Optionally, the J-TX present field may occupy 1 bit. For example, J-TX present field = 1 indicates that the multi-AP MLD coordination capabilities field includes the J-TX specific info field and the *j^{th}* AP MLD supports J-TX; and J-TX present field = 0 indicates that the multi-AP MLD coordination capabilities field does not include the J-TX specific info field and the *j^{th}* AP MLD does not support J-TX. For another example, J-TX present field = 0 indicates that the multi-AP MLD coordination capabilities field includes the J-TX specific info field and the *j^{th}* AP MLD supports J-TX; and J-TX present field = 1 indicates that the multi-AP MLD coordination capabilities field does not include the J-TX specific info field and the *j^{th}* AP MLD does not support J-TX.

Specifically, the C-UL MU MIMO present field indicates whether the multi-AP MLD coordination capabilities field includes the C-UL MU MIMO specific info field and whether the j-th AP MLD supports C-UL MU MIMO. Optionally, the C-UL MU MIMO present field may occupy 1 bit. For example, C-UL MU MIMO present field = 1 indicates that the multi-AP MLD coordination capabilities field includes the C-UL MU MIMO specific info field and the *j^{th}* AP MLD supports C-UL MU MIMO; and C-UL MU MIMO present field = 0 indicates that the multi-AP MLD coordination capabilities field does not include the C-UL MU MIMO specific info field and the *j^{th}* AP MLD does not support C-UL MU MIMO. For another example, C-UL MU MIMO present field = 0 indicates that the multi-AP MLD coordination capabilities field includes the C-UL MU MIMO specific info field and the *j^{th}* AP MLD supports C-UL MU MIMO; and C-UL MU MIMO present field = 1 indicates that the multi-AP MLD coordination capabilities field does not include the C-UL MU MIMO specific info field and the *j^{th}* AP MLD does not support C-UL MU MIMO.

In some embodiments, in a case where the multi-AP MLD scheme support field does not include the C-OFDMA present field, the multi-AP MLD coordination capabilities field implicitly indicates that the *j^{th}* AP MLD supports both uplink C-OFDMA and downlink C-OFDMA.

In some embodiments, the C-OFDMA specific info field includes an uplink C-OFDMA field and a downlink C-OFDMA field, where the uplink C-OFDMA field indicates whether the *j^{th}* AP MLD supports uplink C-OFDMA, and the downlink C-OFDMA field indicates whether the *j^{th}* AP MLD supports downlink C-OFDMA.

In some embodiments, the C-SR specific info field includes at least one of: a C-SR and C-OFDMA joint field, a C-SR and C-BF joint field, a C-SR and J-TX joint field, or a C-SR and C-UL MU MIMO joint field.

Specifically, the C-SR and C-OFDMA joint field indicates whether the *j^{th}* AP MLD supports joint use of C-SR and C-OFDMA. Optionally, the C-SR and C-OFDMA joint field occupies 1 bit. For example, C-SR and C-OFDMA joint field = 1 indicates that the *j^{th}* AP MLD supports joint use of C-SR and C-OFDMA; and C-SR and C-OFDMA joint field = 0 indicates that the *j^{th}* AP MLD does not support joint use of C-SR and C-OFDMA. For another example, C-SR and C-OFDMA joint field = 0 indicates that the *j^{th}* AP MLD supports joint use of C-SR and C-OFDMA; and C-SR and C-OFDMA joint field = 1 indicates that the *j^{th}* AP MLD does not support joint use of C-SR and C-OFDMA.

Specifically, the C-SR and C-BF joint field indicates whether the *j^{th}* AP MLD supports joint use of C-SR and C-BF. Optionally, the C-SR and C-BF joint field occupies 1 bit. For example, C-SR and C-BF joint field = 1 indicates that the *j^{th}* AP MLD supports joint use of C-SR and C-BF; and C-SR and C-BF joint field = 0 indicates that the *j^{th}* AP MLD does not support joint use of C-SR and C-BF. For another example, C-SR and C-BF joint field = 0 indicates that the *j^{th}* AP MLD supports joint use of C-SR and C-BF; and C-SR and C-BF joint field = 1 indicates that the *j^{th}* AP MLD does not support joint use of C-SR and C-BF.

Specifically, the C-SR and J-TX joint field indicates whether the *j^{th}* AP MLD supports joint use of C-SR and J-TX. Optionally, the C-SR and J-TX joint field occupies 1 bit. For example, C-SR and J-TX joint field = 1 indicates that the *j^{th}* AP MLD supports joint use of C-SR and J-TX; and C-SR and J-TX joint field = 0 indicates that the *j^{th}* AP MLD does not support joint use of C-SR and J-TX. For another example, C-SR and J-TX joint field = 0 indicates that the*j^{th}* AP MLD supports joint use of C-SR and J-TX; and C-SR and J-TX joint field = 1 indicates that the *j^{th}* AP MLD does not support joint use of C-SR and J-TX.

Specifically, the C-SR and C-UL MU MIMO joint field indicates whether the *j^{th}* AP MLD supports joint use of C-SR and C-UL MU MIMO. Optionally, the C-SR and C-UL MU MIMO joint field occupies 1 bit. For example, C-SR and C-UL MU MIMO joint field = 1 indicates that the *j^{th}* AP MLD supports joint use of C-SR and C-UL MU MIMO; and C-SR and C-UL MU MIMO joint field = 0 indicates that the *j^{th}* AP MLD does not support joint use of C-SR and C-UL MU MIMO. For another example, C-SR and C-UL MU MIMO joint field = 0 indicates that the *j^{th}* AP MLD supports joint use of C-SR and C-UL MU MIMO; and C-SR and C-UL MU MIMO joint field = 1 indicates that the *j^{th}* AP MLD does not support joint use of C-SR and C-UL MU MIMO.

In some embodiments, in a case where the j-th AP MLD does not support C-BF, the C-SR specific info field does not include the C-SR and C-BF joint field, or the value of the C-SR and C-BF joint field indicates that the *j^{th}* AP MLD does not support joint use of C-SR and C-BF.

In some embodiments, in a case where the *j^{th}* AP MLD does not support J-TX, the C-SR specific info field does not include the C-SR and J-TX joint field, or the value of the C-SR and J-TX joint field indicates that the *j^{th}* AP MLD does not support joint use of C-SR and J-TX.

In some embodiments, in a case where the *j^{th}* AP MLD does not support C-UL MU MIMO, the C-SR specific info field does not include the C-SR and C-UL MU MIMO joint field, or the value of the C-SR and C-UL MU MIMO joint field indicates that the *j^{th}* AP MLD does not support joint use of C-SR and C-UL MU MIMO.

In some embodiments, the J-TX specific info field includes at least one of the following: a single-user J-TX field, a multi-user J-TX field, a diversity J-TX field, a multiplexing J-TX field, a full-band J-TX field, or a partial-band J-TX field.

In some embodiments, the J-TX specific info field includes at least one of the following: the multi-user J-TX field, the diversity J-TX field, the multiplexing J-TX field, the full-band J-TX field, or the partial-band J-TX field.

In some embodiments, the J-TX specific info field includes at least one of the following: the single-user J-TX field, the multi-user J-TX field, the multiplexing J-TX field, the full-band J-TX field, or the partial-band J-TX field.

In some embodiments, the J-TX specific info field includes at least one of the following: the single-user J-TX field, the multi-user J-TX field, the diversity J-TX field, the multiplexing J-TX field, or the partial-band J-TX field.

Specifically, the single-user J-TX field indicates whether the *j^{th}* AP MLD supports joint transmission for a same user. Optionally, the single-user J-TX field occupies 1 bit. For example, single-user J-TX field = 1 indicates that the *j^{th}* AP MLD supports joint transmission for a same user; and single-user J-TX field = 0 indicates that the *j^{th}* AP MLD does not support joint transmission for a same user. For another example, single-user J-TX field = 0 indicates that the *j^{th}* AP MLD supports joint transmission for a same user; and single-user J-TX field = 1 indicates that the *j^{th}* AP MLD does not support joint transmission for a same user.

Specifically, the multi-user J-TX field indicates whether the *j^{th}* AP MLD supports joint transmission for multiple users. Optionally, the multi-user J-TX field occupies 1 bit. For example, multi-user J-TX field = 1 indicates that the *j^{th}* AP MLD supports joint transmission for multiple users; and multi-user J-TX field = 0 indicates that the *j^{th}* AP MLD does not support joint transmission for multiple users. For another example, multi-user J-TX field = 0 indicates that the *j^{th}* AP MLD supports joint transmission for multiple users; and multi-user J-TX field = 1 indicates that the *j^{th}* AP MLD does not support joint transmission for multiple users.

Specifically, the diversity J-TX field indicates whether the *j^{th}* AP MLD supports diversity-based joint transmission. Optionally, the diversity J-TX field occupies 1 bit. For example, diversity J-TX field = 1 indicates that the *j^{th}* AP MLD supports diversity-based joint transmission; and diversity J-TX field = 0 indicates that the *j^{th}* AP MLD does not support diversity-based joint transmission. For another example, diversity J-TX field = 0 indicates that the *j^{th}* AP MLD supports diversity-based joint transmission; and diversity J-TX field = 1 indicates that the *j^{th}* AP MLD does not support diversity-based joint transmission.

Specifically, the multiplexing J-TX field indicates whether the *j^{th}* AP MLD supports multiplexing-based joint transmission. Optionally, the multiplexing J-TX field occupies 1 bit. For example, multiplexing J-TX field = 1 indicates that the *j^{th}* AP MLD supports multiplexing-based joint transmission; and multiplexing J-TX field = 0 indicates that the *j^{th}* AP MLD does not support multiplexing-based joint transmission. For another example, multiplexing J-TX field = 0 indicates that the *j^{th}* AP MLD supports multiplexing-based joint transmission; and multiplexing J-TX field = 1 indicates that the *j^{th}* AP MLD does not support multiplexing-based joint transmission.

Specifically, the full-band J-TX field indicates whether the *j^{th}* AP MLD supports full band-based joint transmission. Optionally, the full-band J-TX field occupies 1 bit. For example, full-band J-TX field = 1 indicates that the *j^{th}* AP MLD supports full band-based joint transmission; and full-band J-TX field = 0 indicates that the *j^{th}* AP MLD does not support full band-based joint transmission. For another example, full-band J-TX field = 0 indicates that the*j^{th}* AP MLD supports full band-based joint transmission; and full-band J-TX field = 1 indicates that the *j^{th}* AP MLD does not support full band-based joint transmission.

Specifically, the partial-band J-TX field indicates whether the *j^{th}* AP MLD supports partial band-based joint transmission. Optionally, the partial-band J-TX field occupies 1 bit. For example, partial-band J-TX field = 1 indicates that the *j^{th}* AP MLD supports partial band-based joint transmission; and partial-band J-TX field = 0 indicates that the *j^{th}* AP MLD does not support partial band-based joint transmission. For another example, partial-band J-TX field = 0 indicates that the *j^{th}* AP MLD supports partial band-based joint transmission; and partial-band J-TX field = 1 indicates that the *j^{th}* AP MLD does not support partial band-based joint transmission.

In some embodiments, in a case where the J-TX specific info field does not include the single-user J-TX field, the *j^{th}* AP MLD supports joint transmission for a same use by default.

In some embodiments, in a case where the J-TX specific info field does not include the diversity J-TX field, the *j^{th}* AP MLD supports diversity-based joint transmission by default.

In some embodiments, in a case where the J-TX specific info field does not include the full-band J-TX field, the *j^{th}* AP MLD supports full band-based joint transmission by default.

In some embodiments, the C-UL MU MIMO specific info field includes at least one of: a detect and discard field and an interference-reduction field. The detect and discard field indicates whether the *j^{th}* AP MLD supports, in a C-UL MU MIMO mode, receiving and demodulating data/frames from other users and performing discarding to obtain useful data/frames. The interference-reduction field indicates whether the *j^{th}* AP MLD supports, in the C-UL MU MIMO mode, directly treating data from other user as interference and directly receiving and demodulating data/frames from a target user.

In some embodiments, the multi-AP MLD coordination capabilities element in the third frame may be as illustrated in FIG. 36. The multi-AP MLD coordination capabilities element contains a multi-AP MLD coordination capabilities field, where the multi-AP MLD coordination capabilities field includes at least one of: a multi-AP MLD coordination control field (occupying 1 byte), a common info field (occupying 3 bytes), a C-OFDMA specific info field (occupying 0 or 1 byte), a C-SR specific info field (occupying 0 or 1 byte), a J-TX specific info field (occupying 0 or 1 byte), or a C-UL MU MIMO specific info field (occupying 0 or 1 byte). The multi-AP MLD coordination control field includes: a C-OFDMA present field (occupying 1 bit), a C-SR present field (occupying 1 bit), a C-BF support field (occupying 1 bit), a J-TX present field (occupying 1 bit), and a C-UL MU MIMO present field (occupying 1 bit).

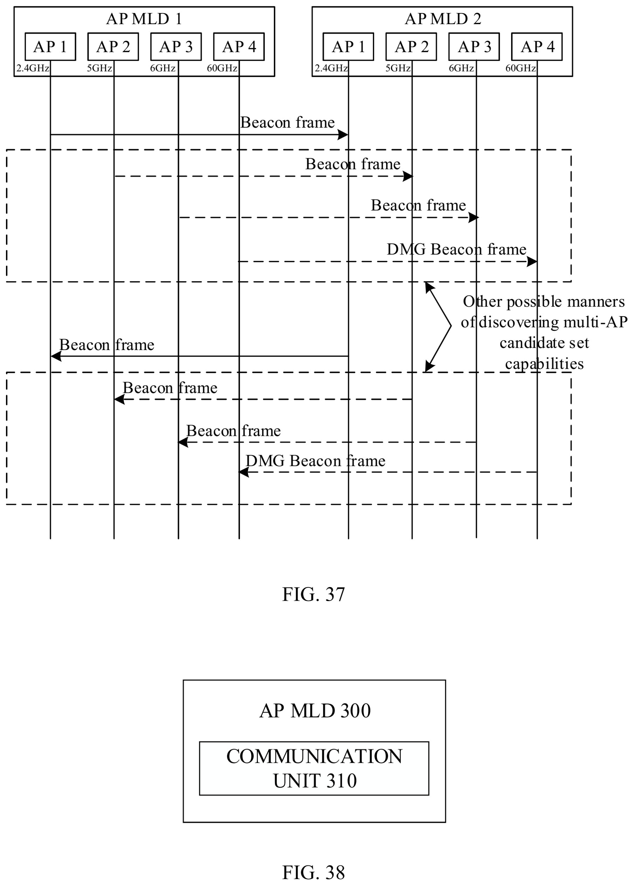

In the embodiments of the present disclosure, multiple AP MLDs may acquire each other's capabilities information by receiving beacon frames (at 2.4 GHz, 5 GHz, and 6 GHz), DMG beacon frames (at 60 GHz), or broadcast probe response frames (at 2.4 GHz, 5 GHz, 6 GHz, and 60 GHz). In the embodiments of the present disclosure, the capabilities information mainly refers to multi-AP MLD coordination capabilities information, including: 1) coordination capabilities information carried in the multi-AP MLD coordination capabilities element; and 2) multi-link information mainly carried in the basic multi-link element. Assuming that the first AP MLD is AP MLD 1 and the second AP MLD is AP MLD 2, as illustrated in FIG. 37, AP MLD 1 (and/or AP MLD 2) may send a beacon frame at 2.4 GHz via affiliated AP 1. A multi-AP MLD coordination capabilities element carried in the beacon frame indicates multi-AP MLD coordination capabilities supported by the AP MLD, and a basic multi-link element carried in the beacon frame indicates multi-link information supported by the AP MLD, such as support for setting up multiple links at 2.4 GHz, 5 GHz, 6 GHz, and 60 GHz by the AP MLD, and respective capabilities information on each link. By means of the above method, since the beacon frame sent by AP MLD 1 (and/or AP MLD 2) on any of the supported links carries capabilities information of the other supported links, AP MLD 1 (and/or AP MLD 2) does not need to send a beacon frame carrying coordination capabilities information and multi-link information on each of all the supported links.

It may be noted that, in FIG. 37, affiliated AP 1 of AP MLD 1 and affiliated AP 1 of AP MLD 2 that operate at 2.4 GHz are taken as an example for illustration. The embodiments of the present disclosure are not limited in this regard. Affiliated AP 2 of AP MLD 1 and affiliated AP 2 of AP MLD 2 that operate at 5 GHz may be for illustration, and/or, affiliated AP 3 of AP MLD 1 and affiliated AP 3 of AP MLD 2 that operate at 60 GHz may be for illustration, and/or, affiliated AP 4 of AP MLD 1 and affiliated AP 4 of AP MLD 2 that operate at 60 GHz may be for illustration.

Therefore, in the embodiments of the present disclosure, multi-AP MLD coordinated transmission can be implemented, enabling multiple AP MLDs to perform coordination using multiple links, which improves throughput while enhancing communication reliability. Rules for performing joint channel sounding by multiple AP MLDs are designed, addressing the need for channel sounding by multi-AP MLDs on same-frequency links, while allowing no channel sounding on different-frequency links, thereby enabling multiple AP MLDs to jointly transmit data to one or more non-AP MLDs.

The above has described the method embodiments of the present disclosure in detail with reference to FIGS. 6 to 37. The following will describe in detail the apparatus embodiments of the present disclosure with reference to FIGS. 38 to 43. It may be understood that, the apparatus embodiments correspond to the method embodiments, and for similar illustrations, reference may be made to the method embodiments.

FIG. 38 is a schematic block diagram of an AP MLD 300 according to embodiments of the present disclosure. The AP MLD 300 is a first AP MLD. As illustrated in FIG. 38, the AP MLD 300 includes a communication unit 310 configured to receive an association request frame sent by a first non-AP MLD. The association request frame is used to request association with a target multi-AP MLD candidate set, and the association request frame contains first multi-link information, where the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

In some embodiments, the first multi-link information is a basic multi-link field contained in the association request frame.

In some embodiments, the association request frame contains capabilities information of the first non-AP MLD for participating in multi-AP MLD coordination.

In some embodiments, the association request frame contains a multi-AP MLD coordination capabilities of non-AP MLD field, where the multi-AP MLD coordination capabilities of non-AP MLD field indicates capabilities information of the first non-AP MLD for participating in multi-AP MLD coordination.

In some embodiments, the multi-AP MLD coordination capabilities of non-AP MLD field includes at least one of: a C-SR field, a C-BF field, a C-UL MU MIMO field, a J-TX field, a C-OFDMA field, or a C-TDMA field; or the multi-AP MLD coordination capabilities of non-AP MLD field includes at least one of: the C-SR field or the C-UL MU MIMO field. The C-SR field indicates whether the first non-AP MLD supports C-SR, the C-BF field indicates whether the first non-AP MLD supports C-BF, the C-UL MU MIMO field indicates whether the first non-AP MLD supports C-UL MU MIMO, and the J-TX field indicates whether the first non-AP MLD supports J-TX.

In some embodiments, in a case where the multi-AP MLD coordination capabilities of non-AP MLD field does not include the C-BF field, the multi-AP MLD coordination capabilities of non-AP MLD field implicitly indicates that the first non-AP MLD supports C-BF; and/or in a case where the multi-AP MLD coordination capabilities of non-AP MLD field does not include the J-TX field, the multi-AP MLD coordination capabilities of non-AP MLD field implicitly indicates that the first non-AP MLD supports J-TX.

In some embodiments, in a case where the multi-AP MLD coordination capabilities of non-AP MLD field does not include the C-OFDMA field, the multi-AP MLD coordination capabilities of non-AP MLD field implicitly indicates that the first non-AP MLD supports both uplink C-OFDMA and downlink C-OFDMA; and/or in a case where the multi-AP MLD coordination capabilities of non-AP MLD field does not include the C-TDMA field, the multi-AP MLD coordination capabilities of non-AP MLD field implicitly indicates that the first non-AP MLD supports both uplink C-TDMA and downlink C-TDMA.

In some embodiments, the communication unit 310 is further configured to send an association response frame to the first non-AP MLD. The association response frame indicates whether the first non-AP MLD associates with the target multi-AP MLD candidate set, and the association response frame contains second multi-link information, where the second multi-link information indicates acceptance or rejection of a portion or all of links that the first non-AP MLD requests to set up, and/or the second multi-link information indicates information of multiple links set up between the first non-AP MLD and the first AP MLD.

In some embodiments, the second multi-link information is a basic multi-link field contained in the association response frame.

In some embodiments, the association response frame further contains at least one of: a status code field or a multi-AP MLD candidate set info field. The status code field indicates whether the first non-AP MLD successfully associates with a requested BSS and/or a requested VBSS, where the VBSS is a BSS corresponding to the target multi-AP MLD candidate set. The multi-AP MLD candidate set info field indicates multi-AP MLD coordination capabilities of the target multi-AP MLD candidate set.

In some embodiments, the status code field indicating success indicates that the first non-AP MLD successfully associates with both the legacy BSS and the VBSS; and/or the status code field indicating VBSS failure indicates that the first non-AP MLD fails to associate with the requested VBSS; and/or the status code field indicating failure indicates that the first non-AP MLD fails to associate with the requested legacy SSID.

In some embodiments, the multi-AP MLD candidate set info field in the association response frame includes a candidate set info field. The candidate set info field includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of the target multi-AP MLD candidate set, the candidate set ID field indicates an ID of the target multi-AP MLD candidate set, the sounding method field indicates a channel sounding method supported by the target multi-AP MLD candidate set, the multi-AP MLD scheme field indicates a multi-AP MLD coordination mode supported by the target multi-AP MLD candidate set, the basic multi-link element indicates multi-link information of the target multi-AP MLD candidate set, the number of AP MLDs field indicates the number of member AP MLDs contained in the target multi-AP MLD candidate set, and the multiple AP MLD info fields respectively indicate relevant information of the multiple member AP MLDs contained in the target multi-AP MLD candidate set.

In some embodiments, the sounding method field includes at least one of: a sequence sounding field or a joint sounding field; or the sounding method field includes only the joint sounding field. The sequence sounding field indicates whether the target multi-AP MLD candidate set supports channel sounding by multiple AP MLDs in sequence, and the joint sounding field indicates whether the target multi-AP MLD candidate set supports channel sounding by the multiple AP MLDs simultaneously and synchronously.

In some embodiments, in a case where the sounding method field does not include the sequence sounding field, the target multi-AP MLD candidate set supports channel sounding by multiple AP MLDs in sequence by default.

In some embodiments, the multi-AP MLD scheme field includes at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field includes at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference-reduction field. The uplink C-OFDMA field indicates whether the target multi-AP MLD candidate set supports uplink C-OFDMA, the downlink C-OFDMA field indicates whether the target multi-AP MLD candidate set supports downlink C-OFDMA, the C-SR and C-OFDMA joint field indicates whether the target multi-AP MLD candidate set supports joint use of C-SR and C-OFDMA, the C-SR and C-BF joint field indicates whether the target multi-AP MLD candidate set supports joint use of C-SR and C-BF, the C-SR and J-TX joint field indicates whether the target multi-AP MLD candidate set supports joint use of C-SR and J-TX, the C-SR and C-UL MU MIMO joint field indicates whether the target multi-AP MLD candidate set supports joint use of C-SR and C-UL MU MIMO, the C-BF field indicates whether the target multi-AP MLD candidate set supports C-BF, the single-user J-TX field indicates whether the target multi-AP MLD candidate set supports joint transmission for a same user, the multi-user J-TX field indicates whether the target multi-AP MLD candidate set supports joint transmission for multiple users, the diversity J-TX field indicates whether the target multi-AP MLD candidate set supports diversity-based joint transmission, the multiplexing J-TX field indicates whether the target multi-AP MLD candidate set supports multiplexing-based joint transmission, the full-bandwidth J-TX field indicates whether the target multi-AP MLD candidate set supports full bandwidth-based joint transmission, the partial-bandwidth J-TX field indicates whether the target multi-AP MLD candidate set supports partial bandwidth-based joint transmission, the detection and discard field indicates whether the target multi-AP MLD candidate set supports, in a C-UL MU MIMO mode, receiving and demodulating data/frames from other users and performing discarding to obtain useful data/frames, and the interference-reduction field indicates whether the target multi-AP MLD candidate set supports, in the C-UL MU MIMO mode, directly treating data from other users as interference and directly receiving and demodulating data/frames from a target user.

In some embodiments, in a case where the multi-AP MLD scheme field does not include the uplink C-OFDMA field and the downlink C-OFDMA field, the target multi-AP MLD candidate set supports both uplink C-OFDMA and downlink C-OFDMA by default.

In some embodiments, in a case where a value of the single-user J-TX field indicates that the target multi-AP MLD candidate set does not support joint transmission for a same user, the multi-AP MLD scheme field does not include the multi-user J-TX field, or a value of the multi-user J-TX field indicates that the target multi-AP MLD candidate set does not support joint transmission for multiple users; and/or in a case where the value of the single-user J-TX field indicates that the target multi-AP MLD candidate set does not support joint transmission for a same user, the multi-AP MLD scheme field does not include the diversity J-TX field, or a value of the diversity J-TX field indicates that the target multi-AP MLD candidate set does not support diversity-based joint transmission; and/or in a case where the value of the single-user J-TX field indicates that the target multi-AP MLD candidate set does not support joint transmission for a same user, the multi-AP MLD scheme field does not include the multiplexing J-TX field, or a value of the multiplexing J-TX field indicates that the target multi-AP MLD candidate set does not support multiplexing-based joint transmission; and/or in a case where the value of the single-user J-TX field indicates that the target multi-AP MLD candidate set does not support joint transmission for a same user, the multi-AP MLD scheme field does not include the full-bandwidth J-TX field, or a value of the full-bandwidth J-TX field indicates that the target multi-AP MLD candidate set does not support full bandwidth-based joint transmission; and/or in a case where the value of the single-user J-TX field indicates that the target multi-AP MLD candidate set does not support joint transmission for a same user, the multi-AP MLD scheme field does not include the partial-bandwidth J-TX field, or a value of the partial-bandwidth J-TX field indicates that the target multi-AP MLD candidate set does not support partial bandwidth-based joint transmission.

In some embodiments, in a case where the value of the single-user J-TX field indicates that the target multi-AP MLD candidate set supports joint transmission for a same user, the multi-AP MLD scheme field does not include the diversity J-TX field and the full-bandwidth J-TX field.

In some embodiments, the target multi-AP MLD candidate set supports diversity-based joint transmission by default; and/or the target multi-AP MLD candidate set supports full bandwidth-based joint transmission by default.

In some embodiments, the multi-AP MLD scheme field includes at least one of: a C-OFDMA support field, a C-SR support field, a C-BF support field, a J-TX support field, or a C-UL MU MIMO support field; or the multi-AP MLD scheme field includes at least one of: the C-SR support field, the C-BF support field, the J-TX support field, or the C-UL MU MIMO support field. The C-OFDMA support field indicates that the target multi-AP MLD candidate set supports C-OFDMA, the C-SR support field indicates that the target multi-AP MLD candidate set supports C-SR, the C-BF support field indicates that the target multi-AP MLD candidate set supports C-BF, the J-TX support field indicates that the target multi-AP MLD candidate set supports J-TX, and the C-UL MU MIMO support field indicates that the target multi-AP MLD candidate set supports C-UL MU MIMO.

In some embodiments, in a case where the multi-AP MLD scheme field does not include the C-OFDMA support field, the target multi-AP MLD candidate set supports both uplink C-OFDMA and downlink C-OFDMA by default.

In some embodiments, each AP MLD info field in the multiple AP MLD info fields includes at least one of: a BSSID field, an AP MLD ID field, an AP MLD roles field, or a basic multi-link element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, the AP MLD ID field is directly set by a master AP MLD or a coordinating AP MLD, or the AP MLD ID field is determined based on an order of the AP MLD indicated by the current AP MLD info field in the target multi-AP MLD candidate set.

In some embodiments, the AP MLD roles field includes at least one of: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

In some embodiments, in a case where the candidate set info field does not include the basic multi-link element, a basic multi-link field contained in the association response frame further indicates multi-link information of the target multi-AP MLD candidate set.

In some embodiments, the communication unit 310 is further configured to share relevant information of the first non-AP MLD contained in the association request frame with other AP MLDs in the target multi-AP MLD candidate set via a backhaul link.

In some embodiments, a portion or all of AP MLDs in the target multi-AP MLD candidate set jointly form a first virtual AP MLD.

In some embodiments, the first virtual AP MLD includes a virtual MLD MAC. The virtual MLD MAC is connected to MLD upper MACs of all the AP MLDs in the first virtual AP MLD, and the virtual MLD MAC is configured to manage and control all the AP MLDs in the first virtual AP MLD.

In some embodiments, the virtual MLD MAC is located in any one of all the AP MLDs in the first virtual AP MLD, or is located in a master AP MLD in all the AP MLDs in the first virtual AP MLD, or is located in an independent controller.

In some embodiments, each AP MLD in the first virtual AP MLD includes an MLD upper MAC, a non-MLD upper MAC, an MLD lower MAC, or a physical layer.

In some embodiments, the virtual MLD MAC of the first virtual AP MLD is configured to manage link assignment for an entire VBSS corresponding to the first virtual AP MLD.

In some embodiments, after the first non-AP MLD successfully associates with the target multi-AP MLD candidate set, a portion of links set up between the first non-AP MLD and the first AP MLD are used to transmit control plane information only and another portion of the links are used to transmit user plane information only, or a portion or all of the links set up between the first non-AP MLD and the first AP MLD are allowed to transmit both control plane information and user plane information.

In some embodiments, after the first non-AP MLD successfully associates with the target multi-AP MLD candidate set, a same STA of the first non-AP MLD is allowed to set up links with affiliated APs of multiple AP MLDs in the first virtual AP MLD.

In some embodiments, after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

In some embodiments, in a case where the first non-AP MLD is an EHT non-AP MLD, the first non-AP MLD only supports association with and setup of multiple links with one AP MLD in the first virtual AP MLD, and link IDs for the first non-AP MLD are assigned by a virtual MLD MAC of the first virtual AP MLD.

In some embodiments, affiliated APs of a portion or all of AP MLDs in the target multi-AP MLD candidate set jointly form a second virtual AP MLD.

In some embodiments, the second virtual AP MLD includes a virtual MLD upper MAC. The virtual MLD upper MAC is connected to MLD lower MACs of all affiliated APs in the second virtual AP MLD, and the virtual MLD upper MAC is configured to manage and control all the affiliated APs in the second virtual AP MLD.

In some embodiments, the virtual MLD upper MAC is located in any one of all the affiliated APs in the second virtual AP MLD, or is located in a master AP in all the affiliated APs in the second virtual AP MLD, or is located in an independent controller.

In some embodiments, each affiliated AP in the second virtual AP MLD includes a non-MLD upper MAC, an MLD lower MAC, and a physical layer.

In some embodiments, multiple collocated affiliated APs in the second virtual AP MLD share an MLD upper MAC.

In some embodiments, a virtual MLD upper MAC of the second virtual AP MLD is configured to manage link assignment for an entire VBSS corresponding to the second virtual AP MLD.

In some embodiments, after the first non-AP MLD successfully associates with the target multi-AP MLD candidate set, a portion of links set up between the first non-AP MLD and multiple collocated affiliated APs in the second virtual AP MLD are used to transmit control plane information only and another portion of the links are used to transmit user plane information only, or a portion or all of the links set up between the first non-AP MLD and the multiple collocated affiliated APs in the second virtual AP MLD are allowed to transmit both control plane information and user plane information.

In some embodiments, after the first non-AP MLD successfully associates with the target multi-AP MLD candidate set, a same affiliated STA of the first non-AP MLD is allowed to set up links with multiple non-collocated affiliated APs in the second virtual AP MLD.

In some embodiments, after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

In some embodiments, in a case where the first non-AP MLD is an EHT non-AP MLD, the first non-AP MLD only supports association with and setup of multiple links with a set of collocated affiliated APs in the second virtual AP MLD, and link IDs for the first non-AP MLD are assigned by a virtual MLD MAC of the second virtual AP MLD.

In some embodiments, the communication unit 310 is further configured to send a first frame before the first AP MLD receives the association request frame sent by the first non-AP MLD. The first frame contains coordination capabilities and multi-link information of a multi-AP MLD candidate set to which the first AP MLD belongs, where the multi-AP MLD candidate set to which the first AP MLD belongs includes at least the target multi-AP MLD candidate set.

In some embodiments, the first frame contains a multi-AP MLD candidate set info field, where the multi-AP MLD candidate set info field indicates the coordination capabilities and multi-link information of the multi-AP MLD candidate set to which the first AP MLD belongs.

In some embodiments, the multi-AP MLD candidate set info field in the first frame includes a number of candidate sets field and at least one candidate set info field. The number of candidate sets field indicates the number of multi-AP MLD candidate sets to which the first AP MLD belongs, and an *s^{th}* candidate set info field in the at least one candidate set info field indicates coordination capabilities and multi-link information of an *s^{th}* multi-AP MLD candidate set to which the first AP MLD belongs, where s is a positive integer.

In some embodiments, the first frame is one of: a beacon frame, a DMG beacon frame, a probe response frame, and a multi-link probe response frame.

In some embodiments, the communication unit 310 is further configured to receive a second frame sent by the first non-AP MLD before the first AP MLD receives the first frame, where the second frame is used to request the coordination capabilities and multi-link information of the multi-AP MLD candidate set.

In some embodiments, the second frame includes at least one of: an SSID field, an SSID list field, or a multi-AP MLD candidate set info request element. The SSID field and/or the SSID list field indicates an SSID requested by the first non-AP MLD and/or an SSID corresponding to a VBSS, and the multi-AP MLD candidate set info request field in the multi-AP MLD candidate set info request element includes an info request field, where the info request field indicates whether the first non-AP MLD requests to acquire the coordination capabilities and multi-link information of the multi-AP MLD candidate set.

In some embodiments, in a case where the first frame is a probe response frame, the second frame is a probe request frame; or in a case where the first frame is a multi-link probe response frame, the second frame is a multi-link probe request frame.

In some embodiments, a case where the second frame is a multi-link probe request frame, the second frame further contains a multi-link element, where a type field contained in a multi-link control field in the multi-link element indicates that the multi-link element is a probe request multi-link element.

In some embodiments, the communication unit 310 is further configured to send a multi-AP MLD candidate set request frame to at least one AP MLD before the first AP MLD receives the association request frame sent by the first non-AP MLD, where the multi-AP MLD candidate set request frame contains coordination capabilities and multi-link information of the multi-AP MLD candidate set that the first AP MLD requests to set up.

In some embodiments, the multi-AP MLD candidate set request frame contains a multi-AP MLD candidate set request field, wherein the multi-AP MLD candidate set request field indicates the coordination capabilities and multi-link information of the multi-AP MLD candidate set that the first AP MLD requests to set up.

In some embodiments, the multi-AP MLD candidate set request field contains a number of candidate sets field and at least one candidate set info field, where the number of candidate sets field indicates the number of multi-AP MLD candidate sets that the first AP MLD requests to set up, and an *n^{th}* candidate set info field in the at least one candidate set info field indicates coordination capabilities and multi-link information of an *n^{th}* multi-AP MLD candidate set that the first AP MLD requests to set up, where n is a positive integer

In some embodiments, the communication unit 310 is further configured to receive a multi-AP MLD candidate set response frame sent by a second AP MLD. The at least one AP MLD includes the second AP MLD, and a multi-AP MLD candidate set response field in the multi-AP MLD candidate set response frame includes a response code field. A value of the response code field indicates at least one of: the second AP MLD accepts a multi-AP MLD candidate set setup request from the first AP MLD; the second AP MLD rejects the multi-AP MLD candidate set setup request from the first AP MLD, where a rejection reason is that a BSS load of the second AP MLD is high and the second AP MLD is unable to participate in multi-AP MLD coordinated transmission; or the second AP MLD rejects the multi-AP MLD candidate set setup request from the first AP MLD, where a rejection reason is unknown.

In some embodiments, in a case where the response code field indicates that the second AP MLD accepts the multi-AP MLD candidate set setup request from the first AP MLD, the multi-AP MLD candidate set response field further includes a number of associated non-AP MLDs field and multiple non-AP MLD info fields. The number of associated non-AP MLDs field indicates the number of non-AP MLDs associated with the second AP MLD, and an *x^{th}* non-AP MLD info field in the multiple non-AP MLD info fields indicates multi-AP MLD coordination related information of an *x^{th}* non-AP MLD in the non-AP MLDs associated with the second AP MLD, where x is a positive integer.

In some embodiments, each non-AP MLD info field in the multiple non-AP MLD info fields includes at least one of: a non-AP MLD priority field, a multi-AP MLD coordination capabilities of non-AP MLD field, or a basic multi-link element. The non-AP MLD priority field indicates a priority for a non-AP MLD indicated by a current non-AP MLD info field to participate in multi-AP MLD coordinated transmission, the multi-AP MLD coordination capabilities of non-AP MLD field indicates capabilities information of the non-AP MLD indicated by the current non-AP MLD info field for participating in multi-AP MLD coordination, and the basic multi-link element indicates multi-link information supported by the non-AP MLD indicated by the current non-AP MLD info field.

In some embodiments, the multi-AP MLD coordination capabilities of non-AP MLD field includes at least one of: a C-SR field, a C-BF field, a C-UL MU MIMO field, or a J-TX field; or the multi-AP MLD coordination capabilities of non-AP MLD field includes at least one of: the C-SR field or the C-UL MU MIMO field. The C-SR field indicates whether the non-AP MLD indicated by the current non-AP MLD info field supports C-SR, the C-BF field indicates whether the non-AP MLD indicated by the current non-AP MLD info field supports C-BF, the C-UL MU MIMO field indicates whether the non-AP MLD indicated by the current non-AP MLD info field supports C-UL MU MIMO, and the J-TX field indicates whether the non-AP MLD indicated by the current non-AP MLD info field supports J-TX.

In some embodiments, in a case where the multi-AP MLD coordination capabilities of non-AP MLD field does not include the C-BF field, the multi-AP MLD coordination capabilities of non-AP MLD field implicitly indicates that the non-AP MLD indicated by the current non-AP MLD info field supports C-BF; and/or in a case where the multi-AP MLD coordination capabilities of non-AP MLD field does not include the J-TX field, the multi-AP MLD coordination capabilities of non-AP MLD field implicitly indicates that the non-AP MLD indicated by the current non-AP MLD info field supports J-TX.

In some embodiments, the multi-AP MLD coordination capabilities of non-AP MLD field implicitly indicates that the non-AP MLD indicated by the current non-AP MLD info field supports both uplink C-OFDMA and downlink C-OFDMA.

In some embodiments, the communication unit 310 is further configured to send a multi-AP MLD candidate set confirmation frame, where a multi-AP MLD candidate set confirmation field in the multi-AP MLD candidate set confirmation frame indicates the multi-AP MLD candidate set that the first AP MLD confirms to set up.

In some embodiments, the multi-AP MLD candidate set confirmation field includes a number of candidate sets field and at least one candidate set info field. The number of candidate sets field indicates the number of multi-AP MLD candidate sets that the first AP MLD confirms to set up, and an *s^{th}* candidate set info field in the at least one candidate set info field indicates coordination capabilities and multi-link information of an *s^{th}* multi-AP MLD candidate set that the first AP MLD confirms to set up, where s is a positive integer.

In some embodiments, each candidate set info field in the at least one candidate set info field includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

In some embodiments, the sounding method field includes at least one of: a sequence sounding field or a joint sounding field; or the sounding method field includes only the joint sounding field. The sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

In some embodiments, in a case where the sounding method field does not include the sequence sounding field, the multi-AP MLD candidate set corresponding to the current candidate set info field supports channel sounding by multiple AP MLDs in sequence by default.

In some embodiments, the multi-AP MLD scheme field includes at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field includes at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference- reduction field. The uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

In some embodiments, in a case where the multi-AP MLD scheme field does not include the uplink C-OFDMA field and the downlink C-OFDMA field, the multi-AP MLD candidate set corresponding to the current candidate set info field supports both uplink C-OFDMA and downlink C-OFDMA by default.

In some embodiments, in a case where a value of the single-user J-TX field indicates that the multi-AP MLD candidate set corresponding to the current candidate set info field does not support joint transmission for a same user, the multi-AP MLD scheme field does not include the multi-user J-TX field, or a value of the multi-user J-TX field indicates that the multi-AP MLD candidate set corresponding to the current candidate set info field does not support joint transmission for multiple users; and/or in a case where the value of the single-user J-TX field indicates that the multi-AP MLD candidate set corresponding to the current candidate set info field does not support joint transmission for a same user, the multi-AP MLD scheme field does not include the diversity J-TX field, or a value of the diversity J-TX field indicates that the multi-AP MLD candidate set corresponding to the current candidate set info field does not support diversity-based joint transmission; and/or in a case where the value of the single-user J-TX field indicates that the multi-AP MLD candidate set corresponding to the current candidate set info field does not support joint transmission for a same user, the multi-AP MLD scheme field does not include the multiplexing J-TX field, or a value of the multiplexing J-TX field indicates that the multi-AP MLD candidate set corresponding to the current candidate set info field does not support multiplexing-based joint transmission; and/or in a case where the value of the single-user J-TX field indicates that the multi-AP MLD candidate set corresponding to the current candidate set info field does not support joint transmission for a same user, the multi-AP MLD scheme field does not include the full-bandwidth J-TX field, or a value of the full-bandwidth J-TX field indicates that the multi-AP MLD candidate set corresponding to the current candidate set info field does not support full bandwidth-based joint transmission; and/or in a case where the value of the single-user J-TX field indicates that the multi-AP MLD candidate set corresponding to the current candidate set info field does not support joint transmission for a same user, the multi-AP MLD scheme field does not include the partial-bandwidth J-TX field, or a value of the partial-bandwidth J-TX field indicates that the multi-AP MLD candidate set corresponding to the current candidate set info field does not support partial bandwidth-based joint transmission.

In some embodiments, in a case where the value of the single-user J-TX field indicates that the multi-AP MLD candidate set corresponding to the current candidate set info field supports joint transmission for a same user, the multi-AP MLD scheme field does not include the diversity J-TX field and the full-bandwidth J-TX field.

In some embodiments, the multi-AP MLD candidate set corresponding to the current candidate set info field supports diversity-based joint transmission by default; and/or the multi-AP MLD candidate set corresponding to the current candidate set info field supports full bandwidth-based joint transmission by default.

In some embodiments, the multi-AP MLD scheme field includes at least one of: a C-OFDMA support field, a C-SR support field, a C-BF support field, a J-TX support field, or a C-UL MU MIMO support field; or the multi-AP MLD scheme field includes at least one of: the C-SR support field, the C-BF support field, the J-TX support field, or the C-UL MU MIMO support field. The C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

In some embodiments, in a case where the multi-AP MLD scheme field does not include the C-OFDMA support field, the multi-AP MLD candidate set corresponding to the current candidate set info field supports both uplink C-OFDMA and downlink C-OFDMA by default.

In some embodiments, each AP MLD info field in the multiple AP MLD info fields includes at least one of: a BSSID field, an AP MLD ID field, an AP MLD roles field, or a basic multi-link element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, the AP MLD ID field is directly set by a master AP MLD or a coordinating AP MLD, or the AP MLD ID field is determined by an order of the AP MLD indicated by the current AP MLD info field in the multi-AP MLD candidate set corresponding to the current candidate set info field.

In some embodiments, the AP MLD roles field includes at least one of: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

In some embodiments, the communication unit 310 is further configured to acquire multi-AP MLD coordination capabilities information of at least one AP MLD before the first AP MLD receives the association request frame sent by the first non-AP MLD.

In some embodiments, multi-AP MLD coordination capabilities information of an *j^{th}* AP MLD in the at least one AP MLD is sent via a third frame. The third frame contains a multi-link element and a multi-AP MLD coordination capabilities element, where j is a positive integer. The multi-link element indicates multi-link information of the *j^{th}* AP MLD, and a multi-AP MLD coordination capabilities field in the multi-AP MLD coordination capabilities element indicates the multi-AP MLD coordination capabilities information of the *j^{th}* AP MLD.

In some embodiments, the multi-link element includes at least one of: a multi-link control field, a common info field, or a link info field. A type field in the multi-link control field indicates that a type of the multi-link element is a basic multi-link element, and a presence bitmap field in the multi-link control field indicates a field present in the common info field. The first *Q₁* bits and last *Q₂* bits of a link ID info field in the common info field jointly indicate a link ID of an affiliated AP of an AP MLD that sends the basic multi-link element during multi-AP MLD coordination, where *Q₁* and *Q₂* are both positive integers. The link info field indicates link-related information of an *j^{th}* AP MLD.

In some embodiments, the link info field includes at least one per-STA profile field, and the first *Q₃* bits and last *Q₄* bits of an STA control field in each of the at least one per-STA profile field jointly indicate a link ID of a STA reported during multi-AP MLD coordination, where *Q₃* and *Q₄* are both positive integers.

In some embodiments, the multi-AP MLD coordination capabilities field includes at least one of: a multi-AP MLD coordination control field, a common info field, a C-OFDMA specific info field, a C-SR specific info field, a J-TX specific info field, or a C-UL MU MIMO specific info field; or the multi-AP MLD coordination capabilities field includes at least one of: the multi-AP coordination control field, the common info field, the C-SR specific info field, the J-TX specific info field, or the C-UL MU MIMO specific info field. The multi-AP MLD coordination control field indicates a multi-AP MLD coordination mode-related field specifically contained in the multi-AP MLD coordination capabilities field; the common info field indicates a multi-AP MLD candidate set setup method, a role supported by the *j^{th}* AP MLD under a multi-AP MLD transmission scheme, and a channel sounding method supported by the *j^{th}* AP MLD; the C-OFDMA specific info field indicates a type of C-OFDMA supported by the *j^{th}* AP MLD; the C-SR specific info field indicates a type of C-SR supported by the *j^{th}* AP MLD; the J-TX specific info field indicates a type of J-TX supported by the *j^{th}* AP MLD; and the C-UL MU MIMO specific info field indicates a type of C-UL MU MIMO supported by the *j^{th}* AP MLD.

In some embodiments, the multi-AP MLD coordination control field includes at least one of: a C-OFDMA present field, a C-SR present field, a C-BF support field, a J-TX present field, or a C-UL MU MIMO present field; or the multi-AP MLD coordination control field includes at least one of: the C-SR present field, the C-BF support field, the J-TX present field, or the C-UL MU MIMO present field. The C-OFDMA present field indicates whether the multi-AP MLD coordination capabilities field includes the C-OFDMA specific info field, and indicates whether the *j^{th}* AP MLD supports C-OFDMA. The C-SR present field indicates whether the multi-AP MLD coordination capabilities field includes the C-SR specific info field, and indicates whether the *j^{th}* AP MLD supports C-SR. The C-BF support field indicates whether the *j^{th}* AP MLD supports C-BF. The J-TX present field indicates whether the multi-AP MLD coordination capabilities field includes the J-TX specific info field, and indicates whether the *j^{th}* AP MLD supports J-TX. The C-UL MU MIMO present field indicates whether the multi-AP MLD coordination capabilities field includes the C-UL MU MIMO specific info field, and indicates whether the *f^{th}* AP MLD supports C-UL MU MIMO.

In some embodiments, in a case where the multi-AP MLD scheme field does not include the C-OFDMA present field, the multi-AP MLD coordination capabilities field implicitly indicates that the *j^{th}* AP MLD supports both uplink C-OFDMA and downlink C-OFDMA.

In some embodiments, the C-OFDMA specific info field includes an uplink C-OFDMA field and a downlink C-OFDMA field, where the uplink C-OFDMA field indicates whether the *f^{th}* AP MLD supports uplink C-OFDMA, and the downlink C-OFDMA field indicates whether the *j^{th}* AP MLD supports downlink C-OFDMA.

In some embodiments, the C-SR specific info field includes at least one of: a C-SR and C-OFDMA joint field, a C-SR and C-BF joint field, a C-SR and J-TX joint field, or a C-SR and C-UL MU MIMO joint field. The C-SR and C-OFDMA joint field indicates whether the *j^{th}* AP MLD supports joint use of C-SR and C-OFDMA, the C-SR and C-BF joint field indicates whether the *j^{th}* AP MLD supports joint use of C-SR and C-BF, the C-SR and J-TX joint field indicates whether the *j^{th}* AP MLD supports joint use of C-SR and J-TX, and the C-SR and C-UL MU MIMO joint field indicates whether the *j^{th}* AP MLD supports joint use of C-SR and C-UL MU MIMO.

In some embodiments, in a case where the *j^{th}* AP MLD does not support C-BF, the C-SR specific info field does not include the C-SR and C-BF joint field, or a value of the C-SR and C-BF joint field indicates that the *j^{th}* AP MLD does not support joint use of C-SR and C-BF; and/or in a case where the *j^{th}* AP MLD does not support J-TX, the C-SR specific info field does not include the C-SR and J-TX joint field, or a value of the C-SR and J-TX joint field indicates that the *j^{th}* AP MLD does not support joint use of C-SR and J-TX; and/or in a case where the *j^{th}* AP MLD does not support C-UL MU MIMO, the C-SR specific info field does not include the C-SR and C-UL MU MIMO joint field, or a value of the C-SR and C-UL MU MIMO joint field indicates that the *j^{th}* AP MLD does not support joint use of C-SR and C-UL MU MIMO.

In some embodiments, the J-TX specific info field includes at least one of: a single-user J-TX field, a multi-user J-TX field, a diversity J-TX field, a multiplexing J-TX field, a full-bandwidth J-TX field, or a partial-bandwidth J-TX field; or the J-TX specific info field includes at least one of: the multi-user J-TX field, the diversity J-TX field, the multiplexing J-TX field, the full-bandwidth J-TX field, or the partial-bandwidth J-TX field; or the J-TX specific info field includes at least one of: the single-user J-TX field, the multi-user J-TX field, the multiplexing J-TX field, the full-bandwidth J-TX field, or the partial-bandwidth J-TX field; or the J-TX specific info field includes at least one of: the single-user J-TX field, the multi-user J-TX field, the diversity J-TX field, the multiplexing J-TX field, or the partial-bandwidth J-TX field. The single-user J-TX field indicates whether the *j^{th}* AP MLD supports joint transmission for a same user, the multi-user J-TX field indicates whether the *j^{th}* AP MLD supports joint transmission for multiple users, the diversity J-TX field indicates whether the *j^{th}* AP MLD supports diversity-based joint transmission, the multiplexing J-TX field indicates whether the *j^{th}* AP MLD supports multiplexing-based joint transmission, the full-bandwidth J-TX field indicates whether the *j^{th}* AP MLD supports full bandwidth-based joint transmission, and the partial-bandwidth J-TX field indicates whether the *j^{th}* AP MLD supports partial bandwidth-based joint transmission.

In some embodiments, in a case where the J-TX specific info field does not include the single-user J-TX field, the *j^{th}* AP MLD supports joint transmission for a single user by default; and/or in a case where the J-TX specific info field does not include the diversity J-TX field, the *j^{th}* AP MLD supports diversity-based joint transmission by default; and/or in a case where the J-TX specific info field does not include the full-bandwidth J-TX field, the *j^{th}* AP MLD supports full bandwidth-based joint transmission by default.

In some embodiments, the C-UL MU MIMO specific info field includes at least one of: a detection and discard field or an interference-reduction field. The detection and discard field indicates whether the *j^{th}* AP MLD supports, in a C-UL MU MIMO mode, receiving and demodulating data/frames from other users and performing discarding to obtain useful data/frames. The interference-reduction field indicates whether the *j^{th}* AP MLD supports, in the C-UL MU MIMO mode, directly treating data from other users as interference and directly receiving and demodulating data/frames from a target user.

In some embodiments, the third frame is one of: a beacon frame, a broadcast probe response frame, and a DMG beacon frame.

In some embodiments, the first AP MLD is a master AP MLD.

In some embodiments, the above communication unit may be a communication interface or a transceiver, or an input/output interface of a communication chip or a system-on-chip. The above processing unit may be one or more processors.

It may be understood that, the AP MLD 300 in the embodiments of the present disclosure may correspond to the first AP MLD in the method embodiments of the present disclosure, and the above and other operations and/or functions of the respective units in the AP MLD 300 are respectively used to implement the corresponding procedures performed by the first AP MLD in the method 200 as illustrated in FIG. 6. For the sake of brevity, such details are not repeated herein.

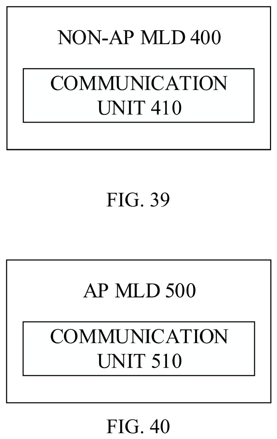

FIG. 39 is a schematic block diagram of a non-AP MLD 400 according to embodiments of the present disclosure. The non-AP MLD 400 is a first non-AP MLD. As illustrated in FIG. 39, the non-AP MLD 400 includes a communication unit 410 configured to send an association request frame to a first AP MLD. The association request frame is used to request association with a target multi-AP MLD candidate set, and the association request frame contains first multi-link information. The first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

In some embodiments, the first multi-link information is a basic multi-link field contained in the association request frame.

In some embodiments, the association request frame contains capabilities information of the first non-AP MLD for participating in multi-AP MLD coordination.

In some embodiments, the association request frame contains a multi-AP MLD coordination capabilities of non-AP MLD field, where the multi-AP MLD coordination capabilities of non-AP MLD field indicates capabilities information of the first non-AP MLD for participating in multi-AP MLD coordination.

In some embodiments, the multi-AP MLD coordination capabilities of non-AP MLD field includes at least one of: a C-SR field, a C-BF field, a C-UL MU MIMO field, a J-TX field, a C-OFDMA field, or a C-TDMA field; or the multi-AP MLD coordination capabilities of non-AP MLD field includes at least one of: the C-SR field or the C-UL MU MIMO field. The C-SR field indicates whether the first non-AP MLD supports C-SR, the C-BF field indicates whether the first non-AP MLD supports C-BF, the C-UL MU MIMO field indicates whether the first non-AP MLD supports C-UL MU MIMO, and the J-TX field indicates whether the first non-AP MLD supports J-TX.

In some embodiments, in a case where the multi-AP MLD coordination capabilities of non-AP MLD field does not include the C-BF field, the multi-AP MLD coordination capabilities of non-AP MLD field implicitly indicates that the first non-AP MLD supports C-BF; and/or in a case where the multi-AP MLD coordination capabilities of non-AP MLD field does not include the J-TX field, the multi-AP MLD coordination capabilities of non-AP MLD field implicitly indicates that the first non-AP MLD supports J-TX.

In some embodiments, in a case where the multi-AP MLD coordination capabilities of non-AP MLD field does not include the C-OFDMA field, the multi-AP MLD coordination capabilities of non-AP MLD field implicitly indicates that the first non-AP MLD supports both uplink C-OFDMA and downlink C-OFDMA; and/or in a case where the multi-AP MLD coordination capabilities of non-AP MLD field does not include the C-TDMA field, the multi-AP MLD coordination capabilities of non-AP MLD field implicitly indicates that the first non-AP MLD supports both uplink C-TDMA and downlink C-TDMA.

In some embodiments, the communication unit 410 is further configured to receive an association response frame sent by the first AP MLD. The association response frame indicates whether the first non-AP MLD associates with the target multi-AP MLD candidate set, and the association response frame contains second multi-link information, where the second multi-link information indicates acceptance or rejection of a portion or all of links that the first non-AP MLD requests to set up, and/or the second multi-link information indicates information of multiple links set up between the first non-AP MLD and the first AP MLD.

In some embodiments, the second multi-link information is a basic multi-link field contained in the association response frame.

In some embodiments, the association response frame further contains at least one of: a status code field or a multi-AP MLD candidate set info field. The status code field indicates whether the first non-AP MLD successfully associates with a requested BSS and/or a requested VBSS, where the VBSS is a BSS corresponding to the target multi-AP MLD candidate set. The multi-AP MLD candidate set info field indicates multi-AP MLD coordination capabilities of the target multi-AP MLD candidate set.

In some embodiments, the status code field indicating success indicates that the first non-AP MLD successfully associates with both the legacy BSS and the VBSS; and/or the status code field indicating VBSS failure indicates that the first non-AP MLD fails to associate with the requested VBSS; and/or the status code field indicating failure indicates that the first non-AP MLD fails to associate with the requested legacy SSID.

In some embodiments, the multi-AP MLD candidate set info field in the association response frame includes a candidate set info field. The candidate set info field includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of the target multi-AP MLD candidate set, the candidate set ID field indicates an ID of the target multi-AP MLD candidate set, the sounding method field indicates a channel sounding method supported by the target multi-AP MLD candidate set, the multi-AP MLD scheme field indicates a multi-AP MLD coordination mode supported by the target multi-AP MLD candidate set, the basic multi-link element indicates multi-link information of the target multi-AP MLD candidate set, the number of AP MLDs field indicates the number of member AP MLDs contained in the target multi-AP MLD candidate set, and the multiple AP MLD info fields respectively indicate relevant information of the multiple member AP MLDs contained in the target multi-AP MLD candidate set.

In some embodiments, the sounding method field includes at least one of: a sequence sounding field or a joint sounding field; or the sounding method field includes only the joint sounding field. The sequence sounding field indicates whether the target multi-AP MLD candidate set supports channel sounding by multiple AP MLDs in sequence, and the joint sounding field indicates whether the target multi-AP MLD candidate set supports channel sounding by the multiple AP MLDs simultaneously and synchronously.

In some embodiments, in a case where the sounding method field does not include the sequence sounding field, the target multi-AP MLD candidate set supports channel sounding by multiple AP MLDs in sequence by default.

In some embodiments, the multi-AP MLD scheme field includes at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field includes at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference-reduction field. The uplink C-OFDMA field indicates whether the target multi-AP MLD candidate set supports uplink C-OFDMA, the downlink C-OFDMA field indicates whether the target multi-AP MLD candidate set supports downlink C-OFDMA, the C-SR and C-OFDMA joint field indicates whether the target multi-AP MLD candidate set supports joint use of C-SR and C-OFDMA, the C-SR and C-BF joint field indicates whether the target multi-AP MLD candidate set supports joint use of C-SR and C-BF, the C-SR and J-TX joint field indicates whether the target multi-AP MLD candidate set supports joint use of C-SR and J-TX, the C-SR and C-UL MU MIMO joint field indicates whether the target multi-AP MLD candidate set supports joint use of C-SR and C-UL MU MIMO, the C-BF field indicates whether the target multi-AP MLD candidate set supports C-BF, the single-user J-TX field indicates whether the target multi-AP MLD candidate set supports joint transmission for a same user, the multi-user J-TX field indicates whether the target multi-AP MLD candidate set supports joint transmission for multiple users, the diversity J-TX field indicates whether the target multi-AP MLD candidate set supports diversity-based joint transmission, the multiplexing J-TX field indicates whether the target multi-AP MLD candidate set supports multiplexing-based joint transmission, the full-bandwidth J-TX field indicates whether the target multi-AP MLD candidate set supports full bandwidth-based joint transmission, the partial-bandwidth J-TX field indicates whether the target multi-AP MLD candidate set supports partial bandwidth-based joint transmission, the detection and discard field indicates whether the target multi-AP MLD candidate set supports, in a C-UL MU MIMO mode, receiving and demodulating data/frames from other users and performing discarding to obtain useful data/frames, and the interference-reduction field indicates whether the target multi-AP MLD candidate set supports, in the C-UL MU MIMO mode, directly treating data from other users as interference and directly receiving and demodulating data/frames from a target user.

In some embodiments, in a case where the multi-AP MLD scheme field does not include the uplink C-OFDMA field and the downlink C-OFDMA field, the target multi-AP MLD candidate set supports both uplink C-OFDMA and downlink C-OFDMA by default.

In some embodiments, in a case where a value of the single-user J-TX field indicates that the target multi-AP MLD candidate set does not support joint transmission for a same user, the multi-AP MLD scheme field does not include the multi-user J-TX field, or a value of the multi-user J-TX field indicates that the target multi-AP MLD candidate set does not support joint transmission for multiple users; and/or in a case where the value of the single-user J-TX field indicates that the target multi-AP MLD candidate set does not support joint transmission for a same user, the multi-AP MLD scheme field does not include the diversity J-TX field, or a value of the diversity J-TX field indicates that the target multi-AP MLD candidate set does not support diversity-based joint transmission; and/or in a case where the value of the single-user J-TX field indicates that the target multi-AP MLD candidate set does not support joint transmission for a same user, the multi-AP MLD scheme field does not include the multiplexing J-TX field, or a value of the multiplexing J-TX field indicates that the target multi-AP MLD candidate set does not support multiplexing-based joint transmission; and/or in a case where the value of the single-user J-TX field indicates that the target multi-AP MLD candidate set does not support joint transmission for a same user, the multi-AP MLD scheme field does not include the full-bandwidth J-TX field, or a value of the full-bandwidth J-TX field indicates that the target multi-AP MLD candidate set does not support full bandwidth-based joint transmission; and/or in a case where the value of the single-user J-TX field indicates that the target multi-AP MLD candidate set does not support joint transmission for a same user, the multi-AP MLD scheme field does not include the partial-bandwidth J-TX field, or a value of the partial-bandwidth J-TX field indicates that the target multi-AP MLD candidate set does not support partial bandwidth-based joint transmission.

In some embodiments, in a case where a value of the single-user J-TX field indicates that the target multi-AP MLD candidate set supports joint transmission for a same user, the multi-AP MLD scheme field does not include the diversity J-TX field and the full-bandwidth J-TX field.

In some embodiments, the target multi-AP MLD candidate set supports diversity-based joint transmission by default; and/or the target multi-AP MLD candidate set supports full bandwidth-based joint transmission by default.

In some embodiments, the multi-AP MLD scheme field includes at least one of: a C-OFDMA support field, a C-SR support field, a C-BF support field, a J-TX support field, or a C-UL MU MIMO support field; or the multi-AP MLD scheme field includes at least one of: the C-SR support field, the C-BF support field, the J-TX support field, or the C-UL MU MIMO support field. The C-OFDMA support field indicates that the target multi-AP MLD candidate set supports C-OFDMA, the C-SR support field indicates that the target multi-AP MLD candidate set supports C-SR, the C-BF support field indicates that the target multi-AP MLD candidate set supports C-BF, the J-TX support field indicates that the target multi-AP MLD candidate set supports J-TX, and the C-UL MU MIMO support field indicates that the target multi-AP MLD candidate set supports C-UL MU MIMO.

In some embodiments, in a case where the multi-AP MLD scheme field does not include the C-OFDMA support field, the target multi-AP MLD candidate set supports both uplink C-OFDMA and downlink C-OFDMA by default.

In some embodiments, each AP MLD info field in the multiple AP MLD info fields includes at least one of: a BSSID field, an AP MLD ID field, an AP MLD roles field, or a basic multi-link element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, the AP MLD ID field is directly set by a master AP MLD or a coordinating AP MLD, or the AP MLD ID field is determined based on an order of the AP MLD indicated by the current AP MLD info field in the target multi-AP MLD candidate set.

In some embodiments, the AP MLD roles field includes at least one of: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares transmission opportunity (TXOP) resources for the AP MLD indicated by the sharing AP MLD role field with an AP MLD indicated by the shared AP MLD role field to perform coordinated transmission.

In some embodiments, in a case where the candidate set info field does not include the basic multi-link element, a basic multi-link field contained in the association response frame further indicates multi-link information of the target multi-AP MLD candidate set.

In some embodiments, relevant information of the first non-AP MLD contained in the association request frame is shared with other AP MLDs in the target multi-AP MLD candidate set via a backhaul link by the first AP MLD.

In some embodiments, a portion or all of AP MLDs in the target multi-AP MLD candidate set jointly form a first virtual AP MLD.

In some embodiments, the first virtual AP MLD includes a virtual MLD MAC. The virtual MLD MAC is connected to MLD upper MACs of all the AP MLDs in the first virtual AP MLD, and the virtual MLD MAC is configured to manage and control all the AP MLDs in the first virtual AP MLD.

In some embodiments, the virtual MLD MAC is located in any one of all the AP MLDs in the first virtual AP MLD, or is located in a master AP MLD in all the AP MLDs in the first virtual AP MLD, or is located in an independent controller.

In some embodiments, each AP MLD in the first virtual AP MLD includes an MLD upper MAC, a non-MLD upper MAC, an MLD lower MAC, or a physical layer.

In some embodiments, the virtual MLD MAC of the first virtual AP MLD is configured to manage link assignment for an entire VBSS corresponding to the first virtual AP MLD.

In some embodiments, after the first non-AP MLD successfully associates with the target multi-AP MLD candidate set, a portion of links set up between the first non-AP MLD and the first AP MLD are used to transmit control plane information only and another portion of the links are used to transmit user plane information only, or a portion or all of the links set up between the first non-AP MLD and the first AP MLD are allowed to transmit both control plane information and user plane information.

In some embodiments, after the first non-AP MLD successfully associates with the target multi-AP MLD candidate set, a same affiliated STA of the first non-AP MLD is allowed to set up links with affiliated APs of multiple AP MLDs in the first virtual AP MLD.

In some embodiments, after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

In some embodiments, in a case where the first non-AP MLD is an EHT non-AP MLD, the first non-AP MLD only supports association with and setup of multiple links with one AP MLD in the first virtual AP MLD, and link IDs for the first non-AP MLD are assigned by a virtual MLD MAC of the first virtual AP MLD.

In some embodiments, affiliated APs of a portion or all of AP MLDs in the target multi-AP MLD candidate set jointly form a second virtual AP MLD.

In some embodiments, the second virtual AP MLD includes a virtual MLD upper MAC, where the virtual MLD upper MAC is connected to MLD lower MACs of all affiliated APs in the second virtual AP MLD, and the virtual MLD upper MAC is configured to manage and control all the affiliated APs in the second virtual AP MLD.

In some embodiments, the virtual MLD upper MAC is located in any one of all the affiliated APs in the second virtual AP MLD, or is located in a master AP in all the affiliated APs in the second virtual AP MLD, or is located in an independent controller.

In some embodiments, each affiliated AP in the second virtual AP MLD includes a non-MLD upper MAC, an MLD lower MAC, and a physical layer.

In some embodiments, multiple collocated affiliated APs in the second virtual AP MLD share an MLD upper MAC.

In some embodiments, a virtual MLD upper MAC of the second virtual AP MLD is configured to manage link assignment for an entire VBSS corresponding to the second virtual AP MLD.

In some embodiments, after the first non-AP MLD successfully associates with the target multi-AP MLD candidate set, a portion of links set up between the first non-AP MLD and multiple collocated affiliated APs in the second virtual AP MLD are used to transmit control plane information only and another portion of the links are used to transmit user plane information only, or a portion or all of the links set up between the first non-AP MLD and the multiple collocated affiliated APs in the second virtual AP MLD are allowed to transmit both control plane information and user plane information.

In some embodiments, after the first non-AP MLD successfully associates with the target multi-AP MLD candidate set, a same affiliated STA of the first non-AP MLD is allowed to set up links with multiple non-collocated affiliated APs in the second virtual AP MLD.

In some embodiments, after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

In some embodiments, in a case where the first non-AP MLD is an EHT non-AP MLD, the first non-AP MLD only supports association with and setup of multiple links with a set of collocated affiliated APs in the second virtual AP MLD, and link IDs for the first non-AP MLD are assigned by a virtual MLD MAC of the second virtual AP MLD.

In some embodiments, the communication unit 410 is further configured to receive a first frame sent by the first AP MLD before the first non-AP MLD sends the association request frame. The first frame contains coordination capabilities and multi-link information of a multi-AP MLD candidate set to which the first AP MLD belongs, and the multi-AP MLD candidate set to which the first AP MLD belongs includes at least the target multi-AP candidate set.

In some embodiments, the first frame contains a multi-AP MLD candidate set info field, where the multi-AP MLD candidate set info field indicates the coordination capabilities and multi-link information of the multi-AP MLD candidate set to which the first AP MLD belongs.

In some embodiments, the multi-AP MLD candidate set info field in the first frame includes a number of candidate sets field and at least one candidate set info field. The number of candidate sets field indicates the number of multi-AP MLD candidate sets to which the first AP MLD belongs, and an *s^{th}* candidate set info field in the at least one candidate set info field indicates coordination capabilities and multi-link information of an *s^{th}* multi-AP MLD candidate set to which the first AP MLD belongs, where s is a positive integer.

In some embodiments, each candidate set info field in the at least one candidate set info field includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

In some embodiments, the sounding method field includes at least one of: a sequence sounding field or a joint sounding field; or the sounding method field includes only the joint sounding field. The sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

In some embodiments, in a case where the sounding method field does not include the sequence sounding field, the multi-AP MLD candidate set corresponding to the current candidate set info field supports channel sounding by multiple AP MLDs in sequence by default.

In some embodiments, the multi-AP MLD scheme field includes at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field includes at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference-reduction field. The uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

In some embodiments, in a case where the multi-AP MLD scheme field does not include the uplink C-OFDMA field and the downlink C-OFDMA field, the multi-AP MLD candidate set corresponding to the current candidate set info field supports both uplink C-OFDMA and downlink C-OFDMA by default.

In some embodiments, in a case where a value of the single-user J-TX field indicates that the multi-AP MLD candidate set corresponding to the current candidate set info field does not support joint transmission for a same user, the multi-AP MLD scheme field does not include the multi-user J-TX field, or a value of the multi-user J-TX field indicates that the multi-AP MLD candidate set corresponding to the current candidate set info field does not support joint transmission for multiple users; and/or in a case where the value of the single-user J-TX field indicates that the multi-AP MLD candidate set corresponding to the current candidate set info field does not support joint transmission for a same user, the multi-AP MLD scheme field does not include the diversity J-TX field, or a value of the diversity J-TX field indicates that the multi-AP MLD candidate set corresponding to the current candidate set info field does not support diversity-based joint transmission; and/or in a case where the value of the single-user J-TX field indicates that the multi-AP MLD candidate set corresponding to the current candidate set info field does not support joint transmission for a same user, the multi-AP MLD scheme field does not include the multiplexing J-TX field, or a value of the multiplexing J-TX field indicates that the multi-AP MLD candidate set corresponding to the current candidate set info field does not support multiplexing-based joint transmission; and/or in a case where the value of the single-user J-TX field indicates that the multi-AP MLD candidate set corresponding to the current candidate set info field does not support joint transmission for a same user, the multi-AP MLD scheme field does not include the full-bandwidth J-TX field, or a value of the full-bandwidth J-TX field indicates that the multi-AP MLD candidate set corresponding to the current candidate set info field does not support full bandwidth-based joint transmission; and/or in a case where the value of the single-user J-TX field indicates that the multi-AP MLD candidate set corresponding to the current candidate set info field does not support joint transmission for a same user, the multi-AP MLD scheme field does not include the partial-bandwidth J-TX field, or a value of the partial-bandwidth J-TX field indicates that the multi-AP MLD candidate set corresponding to the current candidate set info field does not support partial bandwidth-based joint transmission.

In some embodiments, in a case where the value of the single-user J-TX field indicates that the multi-AP MLD candidate set corresponding to the current candidate set info field supports joint transmission for a same user, the multi-AP MLD scheme field does not include the diversity J-TX field and the full-bandwidth J-TX field.

In some embodiments, the multi-AP MLD candidate set corresponding to the current candidate set info field supports diversity-based joint transmission by default; and/or the multi-AP MLD candidate set corresponding to the current candidate set info field supports full bandwidth-based joint transmission by default.

In some embodiments, the multi-AP MLD scheme field includes at least one of: a C-OFDMA support field, a C-SR support field, a C-BF support field, a J-TX support field, or a C-UL MU MIMO support field; or the multi-AP MLD scheme field includes at least one of: the C-SR support field, the C-BF support field, the J-TX support field, or the C-UL MU MIMO support field. The C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

In some embodiments, in a case where the multi-AP MLD scheme field does not include the C-OFDMA support field, the multi-AP MLD candidate set corresponding to the current candidate set info field supports both uplink C-OFDMA and downlink C-OFDMA by default.

In some embodiments, each AP MLD info field in the multiple AP MLD info fields includes at least one of: a BSSID field, an AP MLD ID field, an AP MLD roles field, or a basic multi-link element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, the AP MLD ID field is directly set by a master AP MLD or a coordinating AP MLD, or the AP MLD ID field is determined by an order of the AP MLD indicated by the current AP MLD info field in the multi-AP MLD candidate set corresponding to the current candidate set info field.

In some embodiments, the AP MLD roles field includes at least one of: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

In some embodiments, the first frame is one of: a beacon frame, a DMG beacon frame, a probe response frame, and a multi-link probe response frame.

In some embodiments, the communication unit 410 is further configured to send a second frame before the first non-AP MLD receives the first frame, where the second frame is used to request the coordination capabilities and multi-link information of the multi-AP MLD candidate set.

In some embodiments, the second frame include at least of: an SSID field, an SSID list field, or a multi-AP MLD candidate set info request element. The SSID field and/or the SSID list field indicates an SSID requested by the first non-AP MLD and/or an SSID corresponding to a VBSS, and the multi-AP MLD candidate set info request field in the multi-AP MLD candidate set info request element includes an info request field, where the info request field indicates whether the first non-AP MLD requests to acquire the coordination capabilities and multi-link information of the multi-AP MLD candidate set.

In some embodiments, in a case where the first frame is a probe response frame, the second frame is a probe request frame; or in a case where the first frame is a multi-link probe response frame, the second frame is a multi-link probe request frame.

In some embodiments, in a case where the second frame is a multi-link probe request frame, the second frame further contains a multi-link element, where a type field contained in a multi-link control field in the multi-link element indicates that the multi-link element is a probe request multi-link element.

In some embodiments, the first AP MLD is a master AP MLD.

In some embodiments, the above communication unit may be a communication interface or a transceiver, or an input/output interface of a communication chip or a system-on-chip. The above processing unit may be one or more processors.

It may be understood that, the non-AP MLD 400 in the embodiments of the present disclosure may correspond to the first AP MLD in the method embodiments of the present disclosure, and the above and other operations and/or functions of the respective units in the non-AP MLD 400 are respectively used to implement the corresponding procedures of the first non-AP MLD in the method 200 as illustrated in FIG. 6. For the sake of brevity, such details are not repeated herein.

FIG. 40 is a schematic block diagram of an AP MLD 500 according to embodiments of the present disclosure. The AP MLD 500 is a second AP MLD. As illustrated in FIG. 40, the AP MLD 500 includes a communication unit 510 configured to receive a multi-AP MLD candidate set request frame sent by a first AP MLD. The multi-AP MLD candidate set request frame contains coordination capabilities and multi-link information of a multi-AP MLD candidate set that the first AP MLD requests to set up.

In some embodiments, the multi-AP MLD candidate set request frame contains a multi-AP MLD candidate set request field, where the multi-AP MLD candidate set request field indicates the coordination capabilities and multi-link information of the multi-AP MLD candidate set that the first AP MLD requests to set up.

In some embodiments, the multi-AP MLD candidate set request field contains a number of candidate sets field and at least one candidate set info field. The number of candidate sets field indicates the number of multi-AP MLD candidate sets that the first AP MLD requests to set up, and an *n^{th}* candidate set info field in the at least one candidate set info field indicates coordination capabilities and multi-link information of an *n^{th}* multi-AP MLD candidate set that the first AP MLD requests to set up, where *n* is a positive integer.

In some embodiments, the communication unit 510 is further configured to send a multi-AP MLD candidate set response frame to the first AP MLD. A multi-AP MLD candidate set response field in the multi-AP MLD candidate set response frame includes a response code field. A value of the response code field indicates at least one of: the second AP MLD accepts a multi-AP MLD candidate set setup request from the first AP MLD; the second AP MLD rejects the multi-AP MLD candidate set setup request from the first AP MLD, where a rejection reason is that a BSS load of the second AP MLD is high and the second AP MLD is unable to participate in multi-AP MLD coordinated transmission; or the second AP MLD rejects the multi-AP MLD candidate set setup request from the first AP MLD, where a rejection reason is unknown.

In some embodiments, in a case where the response code field indicates that the second AP MLD accepts the multi-AP MLD candidate set setup request from the first AP MLD, the multi-AP MLD candidate set response field further includes a number of associated non-AP MLDs field and multiple non-AP MLD info fields. The number of associated non-AP MLDs field indicates the number of non-AP MLDs associated with the second AP MLD, and an *x^{th}* non-AP MLD info field in the multiple non-AP MLD info fields indicates multi-AP MLD coordination related information of an *x^{th}* non-AP MLD in the non-AP MLDs associated with the second AP MLD, where x is a positive integer.

In some embodiments, each non-AP MLD info field in the multiple non-AP MLD info fields includes at least one of: a non-AP MLD priority field, a multi-AP MLD coordination capabilities of non-AP MLD field, or a basic multi-link element. The non-AP MLD priority field indicates a priority for a non-AP MLD indicated by a current non-AP MLD info field for participating in multi-AP MLD coordinated transmission, the multi-AP MLD coordination capabilities of non-AP MLD field indicates capabilities information of the non-AP MLD, indicated by the current non-AP MLD info field for participating in multi-AP MLD coordination, and the basic multi-link element indicates multi-link information supported by the non-AP MLD indicated by the current non-AP MLD info field.

In some embodiments, the multi-AP MLD coordination capabilities of non-AP MLD field includes at least one of: a C-SR field, a C-BF field, a C-UL MU MIMO field, or a J-TX field; or the multi-AP MLD coordination capabilities of non-AP MLD field includes at least one of: the C-SR field or the C-UL MU MIMO field. The C-SR field indicates whether the non-AP MLD indicated by the current non-AP MLD info field supports C-SR, the C-BF field indicates whether the non-AP MLD indicated by the current non-AP MLD info field supports C-BF, the C-UL MU MIMO field indicates whether the non-AP MLD indicated by the current non-AP MLD info field supports C-UL MU MIMO, and the J-TX field indicates whether the non-AP MLD indicated by the current non-AP MLD info field supports J-TX.

In some embodiments, in a case where the multi-AP MLD coordination capabilities of non-AP MLD field does not include the C-BF field, the multi-AP MLD coordination capabilities of non-AP MLD field implicitly indicates that the non-AP MLD indicated by the current non-AP MLD info field supports C-BF; and/or in a case where the multi-AP MLD coordination capabilities of non-AP MLD field does not include the J-TX field, the multi-AP MLD coordination capabilities of non-AP MLD field implicitly indicates that the non-AP MLD indicated by the current non-AP MLD info field supports J-TX.

In some embodiments, the multi-AP MLD coordination capabilities of non-AP MLD field implicitly indicates that the non-AP MLD indicated by the current non-AP MLD info field supports both uplink C-OFDMA and downlink C-OFDMA.

In some embodiments, the communication unit 510 is further configured to receive a multi-AP MLD candidate set confirmation frame sent by the first AP MLD, where a multi-AP MLD candidate set confirmation field in the multi-AP MLD candidate set confirmation frame indicates the multi-AP MLD candidate set that the first AP MLD confirms to set up.

In some embodiments, the multi-AP MLD candidate set confirmation field includes a number of candidate sets field and at least one candidate set info field. The number of candidate sets field indicates the number of multi-AP MLD candidate sets that the first AP MLD confirms to set up, and an *s^{th}* candidate set info field in the at least one candidate set info field indicates coordination capabilities and multi-link information of an *s^{th}* multi-AP MLD candidate set that the first AP MLD confirms to set up, where s is a positive integer.

In some embodiments, each candidate set info field in the at least one candidate set info field includes at least one of: a VBSSID field, a candidate set ID field, a sounding method field, a multi-AP MLD scheme field, a basic multi-link element, a number of AP MLDs field, or multiple AP MLD info fields. The VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

In some embodiments, the sounding method field includes at least one of: a sequence sounding field or a joint sounding field; or the sounding method field includes only the joint sounding field. The sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

In some embodiments, in a case where the sounding method field does not include the sequence sounding field, the multi-AP MLD candidate set corresponding to the current candidate set info field supports channel sounding by multiple AP MLDs in sequence by default.

In some embodiments, the multi-AP MLD scheme field includes at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field includes at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference- reduction field. The uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

In some embodiments, in a case where the multi-AP MLD scheme field does not include the uplink C-OFDMA field and the downlink C-OFDMA field, the multi-AP MLD candidate set corresponding to the current candidate set info field supports both uplink C-OFDMA and downlink C-OFDMA by default.

In some embodiments, in a case where a value of the single-user J-TX field indicates that the multi-AP MLD candidate set corresponding to the current candidate set info field does not support joint transmission for a same user, the multi-AP MLD scheme field does not include the multi-user J-TX field, or a value of the multi-user J-TX field indicates that the multi-AP MLD candidate set corresponding to the current candidate set info field does not support joint transmission for multiple users; and/or in a case where the value of the single-user J-TX field indicates that the multi-AP MLD candidate set corresponding to the current candidate set info field does not support joint transmission for a same user, the multi-AP MLD scheme field does not include the diversity J-TX field, or a value of the diversity J-TX field indicates that the multi-AP MLD candidate set corresponding to the current candidate set info field does not support diversity-based joint transmission; and/or in a case where the value of the single-user J-TX field indicates that the multi-AP MLD candidate set corresponding to the current candidate set info field does not support joint transmission for a same user, the multi-AP MLD scheme field does not include the multiplexing J-TX field, or a value of the multiplexing J-TX field indicates that the multi-AP MLD candidate set corresponding to the current candidate set info field does not support multiplexing-based joint transmission; and/or in a case where the value of the single-user J-TX field indicates that the multi-AP MLD candidate set corresponding to the current candidate set info field does not support joint transmission for a same user, the multi-AP MLD scheme field does not include the full-bandwidth J-TX field, or a value of the full-bandwidth J-TX field indicates that the multi-AP MLD candidate set corresponding to the current candidate set info field does not support full bandwidth-based joint transmission; and/or in a case where the value of the single-user J-TX field indicates that the multi-AP MLD candidate set corresponding to the current candidate set info field does not support joint transmission for a same user, the multi-AP MLD scheme field does not include the partial-bandwidth J-TX field, or a value of the partial-bandwidth J-TX field indicates that the multi-AP MLD candidate set corresponding to the current candidate set info field does not support partial bandwidth-based joint transmission.

In some embodiments, in a case where the value of the single-user J-TX field indicates that the multi-AP MLD candidate set corresponding to the current candidate set info field supports joint transmission for a same user, the multi-AP MLD scheme field does not include the diversity J-TX field and the full-bandwidth J-TX field.

In some embodiments, the multi-AP MLD candidate set corresponding to the current candidate set info field supports diversity-based joint transmission by default; and/or the multi-AP MLD candidate set corresponding to the current candidate set info field supports full bandwidth-based joint transmission by default.

In some embodiments, the multi-AP MLD scheme field includes at least one of: a C-OFDMA support field, a C-SR support field, a C-BF support field, a J-TX support field, or a C-UL MU MIMO support field; or the multi-AP MLD scheme field includes at least one of: the C-SR support field, the C-BF support field, the J-TX support field, or the C-UL MU MIMO support field. The C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

In some embodiments, in a case where the multi-AP MLD scheme field does not include the C-OFDMA support field, the multi-AP MLD candidate set corresponding to the current candidate set info field supports both uplink C-OFDMA and downlink C-OFDMA by default.

In some embodiments, each AP MLD info field in the multiple AP MLD info fields includes at least one of: a BSSID field, an AP MLD ID field, an AP MLD roles field, or a basic multi-link element. The BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

In some embodiments, the AP MLD ID field is directly set by a master AP MLD or a coordinating AP MLD, or the AP MLD ID field is determined by an order of the AP MLD indicated by the current AP MLD info field in the multi-AP MLD candidate set corresponding to the current candidate set info field.

In some embodiments, the AP MLD roles field includes at least one of: a coordinating AP MLD role field, a coordinated AP MLD role field, a sharing AP MLD role field, or a shared AP MLD role field. In a channel sounding phase, a coordinating AP MLD indicated by the coordinating AP MLD role field initiates sounding, and an AP MLD indicated by the coordinated AP MLD role field participates in sounding. In a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

In some embodiments, the communication unit 510 is further configured to send multi-AP MLD coordination capabilities information of the second AP MLD before the second AP MLD receives the multi-AP MLD candidate set request frame.

In some embodiments, the multi-AP MLD coordination capabilities information of the second AP MLD is sent via a third frame. The third frame contains a multi-link element and a multi-AP MLD coordination capabilities element, where *j* is a positive integer. The multi-link element indicates multi-link information of the second AP MLD, and a multi-AP MLD coordination capabilities field in the multi-AP MLD coordination capabilities element indicates the multi-AP MLD coordination capabilities information of the second AP MLD.

In some embodiments, the multi-link element includes at least one of: a multi-link control field, a common info field, or a link info field. A type field in the multi-link control field indicates that a type of the multi-link element is a basic multi-link element, and a presence bitmap field in the multi-link control field indicates a field present in the common info field. The first *Q₁* bits and last *Q₂* bits of a link ID info field in the common info field jointly indicate a link ID of an affiliated AP of an AP MLD that sends the basic multi-link element during multi-AP MLD coordination, where *Q₁ and Q₂* are both positive integers. The link info field indicates link-related information of the second AP MLD.

In some embodiments, the link info field includes at least one per- STA profile field, and the first *Q₃* bits and last *Q₄* bits of an STA control field in each of the at least one per-STA profile field jointly indicate a link ID of a STA reported during multi-AP MLD coordination, where *Q₃* and *Q₄* are both positive integers.

In some embodiments, the multi-AP MLD coordination capabilities field includes at least one of: a multi-AP MLD coordination control field, a common info field, a C-OFDMA specific info field, a C-SR specific info field, a J-TX specific info field, or a C-UL MU MIMO specific info field; or the multi-AP MLD coordination capabilities field includes at least one of: the multi-AP coordination control field, the common info field, the C-SR specific info field, the J-TX specific info field, or the C-UL MU MIMO specific info field. The multi-AP MLD coordination control field indicates a multi-AP MLD coordination mode-related field specifically contained in the multi-AP MLD coordination capabilities field; the common info field indicates a multi-AP MLD candidate set setup method, a role supported by the second AP MLD under a multi-AP MLD transmission scheme, and a channel sounding method supported by the second AP MLD; the C-OFDMA specific info field indicates a type of C-OFDMA supported by the second AP MLD; the C-SR specific info field indicates a type of C-SR supported by the second AP MLD; the J-TX specific info field indicates a type of J-TX supported by the second AP MLD; and the C-UL MU MIMO specific info field indicates a type of C-UL MU MIMO supported by the second AP MLD.

In some embodiments, the multi-AP MLD coordination control field includes at least one of: a C-OFDMA present field, a C-SR present field, a C-BF support field, a J-TX present field, or a C-UL MU MIMO present field; or the multi-AP MLD coordination control field includes at least one of: the C-SR present field, the C-BF support field, the J-TX present field, or the C-UL MU MIMO present field. The C-OFDMA present field indicates whether the multi-AP MLD coordination capabilities field includes the C-OFDMA specific info field, and indicates whether the second AP MLD supports C-OFDMA; the C-SR present field indicates whether the multi-AP MLD coordination capabilities field includes the C-SR specific info field, and indicates whether the second AP MLD supports C-SR; the C-BF support field indicates whether the second AP MLD supports C-BF. the J-TX present field indicates whether the multi-AP MLD coordination capabilities field includes the J-TX specific info field, and indicates whether the second AP MLD supports J-TX; and the C-UL MU MIMO present field indicates whether the multi-AP MLD coordination capabilities field includes the C-UL MU MIMO specific info field, and indicates whether the second AP MLD supports C-UL MU MIMO.

In some embodiments, in a case where the multi-AP MLD scheme field does not include the C-OFDMA present field, the multi-AP MLD coordination capabilities field implicitly indicates that the second AP MLD supports both uplink C-OFDMA and downlink C-OFDMA.

In some embodiments, the C-OFDMA specific info field includes an uplink C-OFDMA field and a downlink C-OFDMA field, where the uplink C-OFDMA field indicates whether the second AP MLD supports uplink C-OFDMA, and the downlink C-OFDMA field indicates whether the second AP MLD supports downlink C-OFDMA.

In some embodiments, the C-SR specific info field includes at least one of: a C-SR and C-OFDMA joint field, a C-SR and C-BF joint field, a C-SR and J-TX joint field, or a C-SR and C-UL MU MIMO joint field, where the C-SR and C-OFDMA joint field indicates whether the second AP MLD supports joint use of C-SR and C-OFDMA, the C-SR and C-BF joint field indicates whether the second AP MLD supports joint use of C-SR and C-BF, the C-SR and J-TX joint field indicates whether the second AP MLD supports joint use of C-SR and J-TX, and the C-SR and C-UL MU MIMO joint field indicates whether the second AP MLD supports joint use of C-SR and C-UL MU MIMO.

In some embodiments, in a case where the second AP MLD does not support C-BF, the C-SR specific info field does not include the C-SR and C-BF joint field, or a value of the C-SR and C-BF joint field indicates that the second AP MLD does not support joint use of C-SR and C-BF; and/or in a case where the second AP MLD does not support J-TX, the C-SR specific info field does not include the C-SR and J-TX joint field, or a value of the C-SR and J-TX joint field indicates that the second AP MLD does not support joint use of C-SR and J-TX; and/or in a case where the second AP MLD does not support C-UL MU MIMO, the C-SR specific info field does not include the C-SR and C-UL MU MIMO joint field, or a value of the C-SR and C-UL MU MIMO joint field indicates that the second AP MLD does not support joint use of C-SR and C-UL MU MIMO.

In some embodiments, the J-TX specific info field includes at least one of: a single-user J-TX field, a multi-user J-TX field, a diversity J-TX field, a multiplexing J-TX field, a full-bandwidth J-TX field, or a partial-bandwidth J-TX field; or the J-TX specific info field includes at least one of: the multi-user J-TX field, the diversity J-TX field, the multiplexing J-TX field, the full-bandwidth J-TX field, or the partial-bandwidth J-TX field; or the J-TX specific info field includes at least one of: the single-user J-TX field, the multi-user J-TX field, the multiplexing J-TX field, the full-bandwidth J-TX field, or the partial-bandwidth J-TX field; or the J-TX specific info field includes at least one of: the single-user J-TX field, the multi-user J-TX field, the diversity J-TX field, the multiplexing J-TX field, or the partial-bandwidth J-TX field. The single-user J-TX field indicates whether the second AP MLD supports joint transmission for a same user, the multi-user J-TX field indicates whether the second AP MLD supports joint transmission for multiple users, the diversity J-TX field indicates whether the second AP MLD supports diversity-based joint transmission, the multiplexing J-TX field indicates whether the second AP MLD supports multiplexing-based joint transmission, the full-bandwidth J-TX field indicates whether the second AP MLD supports full bandwidth-based joint transmission, and the partial-bandwidth J-TX field indicates whether the second AP MLD supports partial bandwidth-based joint transmission.

In some embodiments, in a case where the J-TX specific info field does not include the single-user J-TX field, the second AP MLD supports joint transmission for a single user by default; and/or in a case where the J-TX specific info field does not include the diversity J-TX field, the second AP MLD supports diversity-based joint transmission by default; and/or in a case where the J-TX specific info field does not include the full-bandwidth J-TX field, the second AP MLD supports full bandwidth-based joint transmission by default.

In some embodiments, the C-UL MU MIMO specific info field includes at least one of: a detection and discard field or an interference-reduction field. The detection and discard field indicates whether the second AP MLD supports, in a C-UL MU MIMO mode, receiving and demodulating data/frames from other users and performing discarding to obtain useful data/frames, and the interference-reduction field indicates whether the second AP MLD supports, in the C-UL MU MIMO mode, directly treating data from other users as interference and directly receiving and demodulating data/frames from a target user.

In some embodiments, the third frame is one of: a beacon frame, a broadcast probe response frame, and a DMG beacon frame.

In some embodiments, the first AP MLD is a master AP MLD.

In some embodiments, the above communication unit may be a communication interface or a transceiver, or an input/output interface of a communication chip or a system-on-chip. The above processing unit may be one or more processors.

It may be understood that, the AP MLD 500 in the embodiments of the present disclosure may correspond to the first AP MLD in the method embodiments of the present disclosure, and the above and other operations and/or functions of the respective units in the AP MLD 500 are respectively used to implement the corresponding procedures of the second AP MLD in the method 200 as illustrated in FIG. 6. For the sake of brevity, such details are not repeated herein.

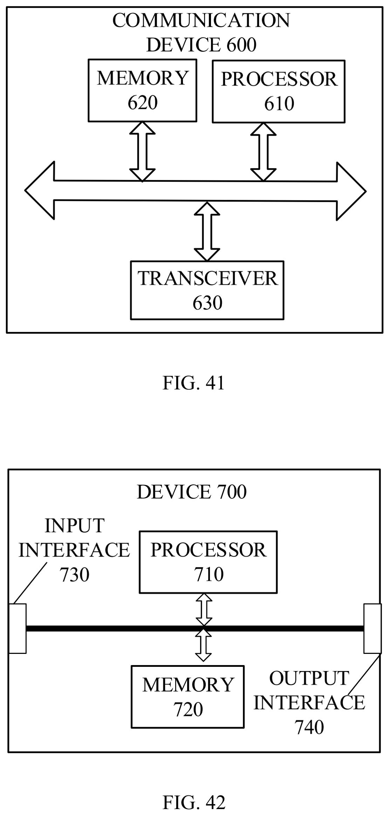

FIG. 41 is a schematic structural diagram of a communication device 600 according to embodiments of the present disclosure. As illustrated in FIG. 41, the communication device 600 includes a processor 610, where the processor 610 may invoke and run a computer program from a memory to implement the method in the embodiments of the present disclosure.

In some embodiments, as illustrated in FIG. 41, the communication device 600 may further include a memory 620. The processor 610 may invoke and run a computer program from the memory 620 to implement the method in the embodiments of the present disclosure.

The memory 620 may be a separate device independent of the processor 610, or may be integrated into the processor 610.

In some embodiments, as illustrated in FIG. 41, the communication device 600 may further include a transceiver 630. The processor 610 may control the transceiver 630 to communicate with other devices, specifically, the processor 610 may control the transceiver 630 to send information or data to, or receive information or data from, other devices.

The transceiver 630 may include a transmitter and a receiver. The transceiver 630 may further include one or more antennas.

In some embodiments, the processor 610 may implement the functions of a processing unit in a non-AP MLD, or may implement the functions of a processing unit in an AP MLD. For the sake of brevity, such details are not repeated herein.

In some embodiments, the transceiver 630 may implement the functions of a communication unit in a non-AP MLD. For the sake of brevity, such details are not repeated herein.

In some embodiments, the transceiver 630 may implement the functions of a communication unit in an AP MLD. For the sake of brevity, such details are not repeated herein.

In some embodiments, the communication device 600 may specifically be the AP MLD in the embodiments of the present disclosure, and the communication device 600 may implement the corresponding procedures performed by the first AP MLD and/or the second AP MLD in each method of the embodiments of the present disclosure. For the sake of brevity, such details are not repeated herein.

In some embodiments, the communication device 600 may specifically be the non-AP MLD in the embodiments of the present disclosure, and the communication device 600 may implement the corresponding procedures performed by the first non-AP MLD in each method of the embodiments of the present disclosure. For the sake of brevity, such details are not repeated herein.

FIG. 42 is a schematic structural diagram of a device according to embodiments of the present disclosure. As illustrated in FIG. 42, the device 700 includes a processor 710, where the processor 710 may invoke and run a computer program from a memory to implement the method in the embodiments of the present disclosure.

In some embodiments, as illustrated in FIG. 42, the device 700 may further include a memory 720. The processor 710 may invoke and run a computer program from the memory 720 to implement the method in the embodiments of the present disclosure.

The memory 720 may be a separate device independent of the processor 710, or may be integrated into the processor 710.

In some embodiments, the processor 710 may implement the functions of the processing unit in a non-AP MLD, or may implement the functions of the processing unit in an AP MLD. For the sake of brevity, such details are not repeated herein.

In some embodiments, the device 700 may further include an input interface 730. The processor 710 may control the input interface 730 to communicate with other devices or chips. Specifically, the processor 710 may acquire information or data sent by other devices or chips. Optionally, the processor 710 may be located within or outside the chip.

In some embodiments, the input interface 730 may implement the functions of a communication unit in a non-AP MLD, or may implement the functions of a communication unit in an AP MLD.

In some embodiments, the device 700 may further include an output interface 740. The processor 710 may control the output interface 740 to communicate with other devices or chips. Specifically, the processor 710 may output information or data to other devices or chips. Optionally, the processor 710 may be located within or outside the chip.

In some embodiments, the output interface 740 may implement the functions of a communication unit in a non-AP MLD, or may implement the functions of a communication unit in an AP MLD.

In some embodiments, the device may be applied to the AP MLD in the embodiments of the present disclosure, and the device may implement the corresponding procedures performed by the first AP MLD and/or the second AP MLD in each method of the embodiments of the present disclosure. For the sake of brevity, such details are not repeated herein.

In some embodiments, the device may be applied to the non-AP MLD in the embodiments of the present disclosure, and the device may implement the corresponding procedures performed by the first non-AP MLD in each method of the embodiments of the present disclosure. For the sake of brevity, such details are not repeated herein.

In some embodiments, the device mentioned in the embodiments of the present disclosure may also be a chip. For example, the chip may be a system-level chip, a system chip, a chip system, or a system-on-chip.

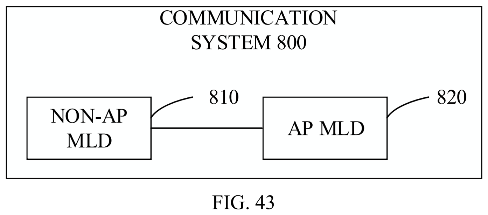

FIG. 43 is a schematic block diagram of a communication system 800 provided in an embodiment of the present disclosure. As illustrated in FIG. 43, the communication system 800 includes a non-AP MLD 810 and an AP MLD 820.

The non-AP MLD 810 may be configured to implement the corresponding functions performed by the first non-AP MLD in the above-described methods, and the AP MLD 820 may be configured to implement the corresponding functions performed by the first AP MLD and/or the second AP MLD in the above-described methods. For the sake of brevity, such details are not repeated herein.

It may be understood that, the processor in embodiments of the present disclosure may be an integrated circuit chip with signal processing capabilities. During implementation, each step of the foregoing method embodiments may be completed by an integrated logic circuit of hardware in the processor or instructions in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the present disclosure can be implemented or executed. The general-purpose processor may be a microprocessor, or the processor may be any conventional processor or the like. The steps of the method disclosed in embodiments of the present disclosure may be directly implemented by a hardware decoding processor, or may be performed by hardware and software modules in the decoding processor. The software module can be located in a storage medium well known in the art such as a random access memory (RAM), a flash memory, a read only memory (ROM), a programmable ROM (PROM), or an electrically erasable programmable memory, registers, and the like. The storage medium is located in the memory. The processor is configured to read the information in the memory, and complete the steps of the method described above with the hardware thereof.

It may be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or a flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the disclosure is intended to include, but is not limited to, these and any other suitable types of memory.

It may be understood that, the memory above is intended for illustration rather than limitation. For example, the memory in embodiments of the present disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the present disclosure further provide a computer-readable storage medium, which is configured to store a computer program.

In some embodiments, the computer-readable storage medium may be applied to the AP MLD in the embodiments of the present disclosure, and the computer program may cause a computer to perform the corresponding processes implemented by the first AP MLD and/or the second AP MLD in the various methods of the embodiments of the present disclosure. For simplicity, details are not repeated here.

In some embodiments, the computer-readable storage medium may be applied to the non-AP MLD in the embodiments of the present disclosure, and the computer program may cause a computer to perform the corresponding processes implemented by the first non-AP MLD in the various methods of the embodiments of the present disclosure. For simplicity, details are not repeated here.

Embodiments of the present disclosure further provide a computer program product, which includes computer program instructions.

In some embodiments, the computer program product may be applied to the AP MLD in the embodiments of the present disclosure, and the computer program instructions may cause a computer to perform the corresponding processes implemented by the first AP MLD and/or the second AP MLD in the various methods of the embodiments of the present disclosure. For simplicity, details are not repeated here.

In some embodiments, the computer program product may be applied to the non-AP MLD in the embodiments of the present disclosure, and the computer program instructions may cause a computer to perform the corresponding processes implemented by the first non-AP MLD in the various methods of the embodiments of the present disclosure. For simplicity, details are not repeated here.

Embodiments of the present disclosure further provide a computer program.

In some embodiments, the computer program may be applied to the AP MLD in the embodiments of the present disclosure, and the computer program may cause the computer to perform the corresponding processes implemented by the first AP MLD and/or the second AP MLD in the various methods of the embodiments of the present disclosure. For simplicity, details are not repeated here.

In some embodiments, the computer program may be applied to the non-AP MLD in the embodiments of the present disclosure, and the computer program may cause a computer to perform the corresponding processes implemented by the first non-AP MLD in the various methods of the embodiments of the present disclosure. For simplicity, details are not repeated here.

Those of ordinary skill in the art may appreciate that units and algorithmic operations of various examples described in connection with embodiments of the present disclosure may be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It may be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It may be appreciated that the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, devices, or units, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the related art, or part of the technical solution of the present disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving, by a first access point (AP) multiple link device (MLD), an association request frame sent by a first non-AP MLD;
wherein the association request frame is used to request association with a target multi-AP MLD candidate set, and the association request frame contains first multi-link information, wherein the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

2. The method according to claim 1, wherein the first multi-link information is a basic multi-link field contained in the association request frame.

3. The method according to claim 1 or 2, wherein the association request frame contains capabilities information of the first non-AP MLD for participating in multi-AP MLD coordination.

4. The method according to claim 3, wherein
the association request frame contains a multi-AP MLD coordination capabilities of non-AP MLD field, wherein the multi-AP MLD coordination capabilities of non-AP MLD field indicates capabilities information of the first non-AP MLD for participating in multi-AP MLD coordination.

5. The method according to claim 4, wherein
the multi-AP MLD coordination capabilities of non-AP MLD field comprises at least one of: a coordinated spatial reuse (C-SR) field, a coordinated beamforming (C-BF) field, a coordinated uplink multi-user multiple-input multiple-output (C-UL MU MIMO) field, a joint transmission (J-TX) field, a coordinated orthogonal frequency division multiple access (C-OFDMA) field, or a coordinated time division multiple access (C-TDMA) field; or the multi-AP MLD coordination capabilities of non-AP MLD field comprises at least one of: the C-SR field or the C-UL MU MIMO field;
wherein the C-SR field indicates whether the first non-AP MLD supports C-SR, the C-BF field indicates whether the first non-AP MLD supports C-BF, the C-UL MU MIMO field indicates whether the first non-AP MLD supports C-UL MU MIMO, and the J-TX field indicates whether the first non-AP MLD supports J-TX.

6. The method according to claim 5, wherein
in a case where the multi-AP MLD coordination capabilities of non-AP MLD field does not comprise the C-BF field, the multi-AP MLD coordination capabilities of non-AP MLD field implicitly indicates that the first non-AP MLD supports C-BF; and/or
in a case where the multi-AP MLD coordination capabilities of non-AP MLD field does not comprise the J-TX field, the multi-AP MLD coordination capabilities of non-AP MLD field implicitly indicates that the first non-AP MLD supports J-TX.

7. The method according to claim 5 or 6, wherein
in a case where the multi-AP MLD coordination capabilities of non-AP MLD field does not comprise the C-OFDMA field, the multi-AP MLD coordination capabilities of non-AP MLD field implicitly indicates that the first non-AP MLD supports both uplink C-OFDMA and downlink C-OFDMA; and/or
in a case where the multi-AP MLD coordination capabilities of non-AP MLD field does not comprise the C-TDMA field, the multi-AP MLD coordination capabilities of non-AP MLD field implicitly indicates that the first non-AP MLD supports both uplink C-TDMA and downlink C-TDMA.

8. The method according to any one of claims 1 to 7, further comprising:
sending, by the first AP MLD, an association response frame to the first non-AP MLD;
wherein the association response frame indicates whether the first non-AP MLD associates with the target multi-AP MLD candidate set, and the association response frame contains second multi-link information, wherein the second multi-link information indicates acceptance or rejection of a portion or all of links that the first non-AP MLD requests to set up, and/or the second multi-link information indicates information of multiple links set up between the first non-AP MLD and the first AP MLD.

9. The method according to claim 8, wherein the second multi-link information is a basic multi-link field contained in the association response frame.

10. The method according to claim 8 or 9, wherein
the association response frame further contains at least one of: a status code field or a multi-AP MLD candidate set info field;
wherein the status code field indicates whether the first non-AP MLD successfully associates with a requested legacy basic service set (BSS) and/or a requested virtual BSS (VBSS), wherein the VBSS is a BSS corresponding to the target multi-AP MLD candidate set;
wherein the multi-AP MLD candidate set info field indicates multi-AP MLD coordination capabilities of the target multi-AP MLD candidate set.

11. The method according to claim 10, wherein
the status code field indicating success indicates that the first non-AP MLD successfully associates with both the legacy BSS and the VBSS; and/or
the status code field indicating VBSS failure indicates that the first non-AP MLD fails to associate with the requested VBSS; and/or
the status code field indicating failure indicates that the first non-AP MLD fails to associate with the requested legacy SSID.

12. The method according to claim 10, wherein the multi-AP MLD candidate set info field in the association response frame comprises a candidate set info field, wherein
the candidate set info field comprises at least one of: a virtual BSSID (VBSSID) field, a candidate set identifier (ID) field, a sounding method field, a multi-AP MLD scheme field, a basic multi-link element, a number of AP MLDs field, or multiple AP MLD info fields;
wherein the VBSSID field indicates a VBSSID of the target multi-AP MLD candidate set, the candidate set ID field indicates an ID of the target multi-AP MLD candidate set, the sounding method field indicates a channel sounding method supported by the target multi-AP MLD candidate set, the multi-AP MLD scheme field indicates a multi-AP MLD coordination mode supported by the target multi-AP MLD candidate set, the basic multi-link element indicates multi-link information of the target multi-AP MLD candidate set, the number of AP MLDs field indicates the number of member AP MLDs contained in the target multi-AP MLD candidate set, and the multiple AP MLD info fields respectively indicate relevant information of the multiple member AP MLDs contained in the target multi-AP MLD candidate set.

13. The method according to claim 12, wherein
the sounding method field comprises at least one of: a sequence sounding field or a joint sounding field; or
the sounding method field comprises only the joint sounding field;
wherein the sequence sounding field indicates whether the target multi-AP MLD candidate set supports channel sounding by multiple AP MLDs in sequence, and the joint sounding field indicates whether the target multi-AP MLD candidate set supports channel sounding by the multiple AP MLDs simultaneously and synchronously.

14. The method according to claim 13, wherein in a case where the sounding method field does not comprise the sequence sounding field, the target multi-AP MLD candidate set supports channel sounding by multiple AP MLDs in sequence by default.

15. The method according to claim 12, wherein
the multi-AP MLD scheme field comprises at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or the multi-AP MLD scheme field comprises at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference-reduction field;
wherein the uplink C-OFDMA field indicates whether the target multi-AP MLD candidate set supports uplink C-OFDMA, the downlink C-OFDMA field indicates whether the target multi-AP MLD candidate set supports downlink C-OFDMA, the C-SR and C-OFDMA joint field indicates whether the target multi-AP MLD candidate set supports joint use of C-SR and C-OFDMA, the C-SR and C-BF joint field indicates whether the target multi-AP MLD candidate set supports joint use of C-SR and C-BF, the C-SR and J-TX joint field indicates whether the target multi-AP MLD candidate set supports joint use of C-SR and J-TX, the C-SR and C-UL MU MIMO joint field indicates whether the target multi-AP MLD candidate set supports joint use of C-SR and C-UL MU MIMO, the C-BF field indicates whether the target multi-AP MLD candidate set supports C-BF, the single-user J-TX field indicates whether the target multi-AP MLD candidate set supports joint transmission for a same user, the multi-user J-TX field indicates whether the target multi-AP MLD candidate set supports joint transmission for multiple users, the diversity J-TX field indicates whether the target multi-AP MLD candidate set supports diversity-based joint transmission, the multiplexing J-TX field indicates whether the target multi-AP MLD candidate set supports multiplexing-based joint transmission, the full-bandwidth J-TX field indicates whether the target multi-AP MLD candidate set supports full bandwidth-based joint transmission, the partial-bandwidth J-TX field indicates whether the target multi-AP MLD candidate set supports partial bandwidth-based joint transmission, the detection and discard field indicates whether the target multi-AP MLD candidate set supports, in a C-UL MU MIMO mode, receiving and demodulating data/frames from other users and performing discarding to obtain useful data/frames, and the interference-reduction field indicates whether the target multi-AP MLD candidate set supports, in the C-UL MU MIMO mode, directly treating data from other users as interference and directly receiving and demodulating data/frames from a target user.

16. The method according to claim 15, wherein
in a case where the multi-AP MLD scheme field does not comprise the uplink C-OFDMA field and the downlink C-OFDMA field, the target multi-AP MLD candidate set supports both uplink C-OFDMA and downlink C-OFDMA by default.

17. The method according to claim 15, wherein,
in a case where a value of the single-user J-TX field indicates that the target multi-AP MLD candidate set does not support joint transmission for a same user, the multi-AP MLD scheme field does not comprise the multi-user J-TX field, or a value of the multi-user J-TX field indicates that the target multi-AP MLD candidate set does not support joint transmission for multiple users; and/or
in a case where the value of the single-user J-TX field indicates that the target multi-AP MLD candidate set does not support joint transmission for a same user, the multi-AP MLD scheme field does not comprise the diversity J-TX field, or a value of the diversity J-TX field indicates that the target multi-AP MLD candidate set does not support diversity-based joint transmission; and/or
in a case where the value of the single-user J-TX field indicates that the target multi-AP MLD candidate set does not support joint transmission for a same user, the multi-AP MLD scheme field does not comprise the multiplexing J-TX field, or a value of the multiplexing J-TX field indicates that the target multi-AP MLD candidate set does not support multiplexing-based joint transmission; and/or
in a case where the value of the single-user J-TX field indicates that the target multi-AP MLD candidate set does not support joint transmission for a same user, the multi-AP MLD scheme field does not comprise the full-bandwidth J-TX field, or a value of the full-bandwidth J-TX field indicates that the target multi-AP MLD candidate set does not support full bandwidth-based joint transmission; and/or
in a case where the value of the single-user J-TX field indicates that the target multi-AP MLD candidate set does not support joint transmission for a same user, the multi-AP MLD scheme field does not comprise the partial-bandwidth J-TX field, or a value of the partial-bandwidth J-TX field indicates that the target multi-AP MLD candidate set does not support partial bandwidth-based joint transmission.

18. The method according to claim 15, wherein
in a case where a value of the single-user J-TX field indicates that the target multi-AP MLD candidate set supports joint transmission for a same user, the multi-AP MLD scheme field does not comprise the diversity J-TX field and the full-bandwidth J-TX field.

19. The method according to claim 18, wherein
the target multi-AP MLD candidate set supports diversity-based joint transmission by default; and/or
the target multi-AP MLD candidate set supports full bandwidth-based joint transmission by default.

20. The method according to claim 12, wherein
the multi-AP MLD scheme field comprises at least one of: a C-OFDMA support field, a C-SR support field, a C-BF support field, a J-TX support field, or a C-UL MU MIMO support field; or
the multi-AP MLD scheme field comprises at least one of: the C-SR support field, the C-BF support field, the J-TX support field, or the C-UL MU MIMO support field;
wherein the C-OFDMA support field indicates that the target multi-AP MLD candidate set supports C-OFDMA, the C-SR support field indicates that the target multi-AP MLD candidate set supports C-SR, the C-BF support field indicates that the target multi-AP MLD candidate set supports C-BF, the J-TX support field indicates that the target multi-AP MLD candidate set supports J-TX, and the C-UL MU MIMO support field indicates that the target multi-AP MLD candidate set supports C-UL MU MIMO.

21. The method according to claim 20, wherein
in a case where the multi-AP MLD scheme field does not comprise the C-OFDMA support field, the target multi-AP MLD candidate set supports both uplink C-OFDMA and downlink C-OFDMA by default.

22. The method according to claim 12, wherein
each AP MLD info field in the multiple AP MLD info fields comprises at least one of: a BSSID field, an AP MLD ID field, an AP MLD roles field, or a basic multi-link element;
wherein the BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

23. The method according to claim 22, wherein
the AP MLD ID field is directly set by a master AP MLD or a coordinating AP MLD, or the AP MLD ID field is determined based on an order of the AP MLD indicated by the current AP MLD info field in the target multi-AP MLD candidate set.

24. The method according to claim 22 or 23, wherein
the AP MLD roles field comprises at least one of: a coordinating AP MLD role field, a coordinated AP MLD role field, a sharing AP MLD role field, or a shared AP MLD role field;
wherein in a channel sounding phase, a coordinating AP MLD indicated by the coordinating AP MLD role field initiates sounding, and an AP MLD indicated by the coordinated AP MLD role field participates in sounding;
wherein in a preparation phase and/or a transmission phase, an AP MLD indicated by the sharing AP MLD role field shares transmission opportunity (TXOP) resources for the AP MLD indicated by the sharing AP MLD role field with an AP MLD indicated by the shared AP MLD role field to perform coordinated transmission.

25. The method according to any one of claims 12 to 24, wherein
in a case where the candidate set info field does not comprise the basic multi-link element, a basic multi-link field contained in the association response frame further indicates multi-link information of the target multi-AP MLD candidate set.

26. The method according to any one of claims 1 to 25, further comprising:
sharing, by the first AP MLD, relevant information of the first non-AP MLD contained in the association request frame with other AP MLDs in the target multi-AP MLD candidate set via a backhaul link.

27. The method according to any one of claims 1 to 26, wherein
a portion or all of AP MLDs in the target multi-AP MLD candidate set jointly form a first virtual AP MLD.

28. The method according to claim 27, wherein
the first virtual AP MLD comprises a virtual MLD media access control (MAC);
wherein the virtual MLD MAC is connected to MLD upper MACs of all the AP MLDs in the first virtual AP MLD, and the virtual MLD MAC is configured to manage and control all the AP MLDs in the first virtual AP MLD.

29. The method according to claim 28, wherein
the virtual MLD MAC is located in any one of all the AP MLDs in the first virtual AP MLD, or is located in a master AP MLD in all the AP MLDs in the first virtual AP MLD, or is located in an independent controller.

30. The method according to any one of claims 27 to 29, wherein
each AP MLD in the first virtual AP MLD comprises an MLD upper MAC, a non-MLD upper MAC, an MLD lower MAC, or a physical layer.

31. The method according to any one of claims 27 to 30, wherein
a virtual MLD MAC of the first virtual AP MLD is configured to manage link assignment for an entire VBSS corresponding to the first virtual AP MLD.

32. The method according to any one of claims 27 to 31, wherein
after the first non-AP MLD successfully associates with the target multi-AP MLD candidate set, a portion of links set up between the first non-AP MLD and the first AP MLD are used to transmit control plane information only and another portion of the links are used to transmit user plane information only, or a portion or all of the links set up between the first non-AP MLD and the first AP MLD are allowed to transmit both control plane information and user plane information.

33. The method according to any one of claims 27 to 32, wherein
after the first non-AP MLD successfully associates with the target multi-AP MLD candidate set, a same affiliated station (STA) of the first non-AP MLD is allowed to set up links with affiliated APs of multiple AP MLDs in the first virtual AP MLD.

34. The method according to any one of claims 27 to 33, wherein
after the first non-AP MLD successfully associates with the target multi-AP MLD candidate set, multiple links corresponding to a same affiliated STA of the first non-AP MLD are used to transmit identical physical layer protocol data units (PPDUs), or multiple links corresponding to a same affiliated STA of the first non-AP MLD are used to transmit different PPDUs.

35. The method according to any one of claims 27 to 32, wherein
in a case where the first non-AP MLD is an extremely high throughput (EHT) non-AP MLD, the first non-AP MLD only supports association with and setup of multiple links with one AP MLD in the first virtual AP MLD, and link IDs for the first non-AP MLD are assigned by a virtual MLD MAC of the first virtual AP MLD.

36. The method according to any one of claims 1 to 26, wherein
affiliated APs of a portion or all of AP MLDs in the target multi-AP MLD candidate set jointly form a second virtual AP MLD.

37. The method according to claim 36, wherein
the second virtual AP MLD comprises a virtual MLD upper MAC;
wherein the virtual MLD upper MAC is connected to MLD lower MACs of all affiliated APs in the second virtual AP MLD, and the virtual MLD upper MAC is configured to manage and control all the affiliated APs in the second virtual AP MLD.

38. The method according to claim 37, wherein
the virtual MLD upper MAC is located in any one of all the affiliated APs in the second virtual AP MLD, or is located in a master AP in all the affiliated APs in the second virtual AP MLD, or is located in an independent controller.

39. The method according to any one of claims 36 to 38, wherein
each affiliated AP in the second virtual AP MLD comprises a non-MLD upper MAC, an MLD lower MAC, and a physical layer.

40. The method according to claim 39, wherein
multiple collocated affiliated APs in the second virtual AP MLD share an MLD upper MAC.

41. The method according to any one of claims 36 to 40, wherein
a virtual MLD upper MAC of the second virtual AP MLD is configured to manage link assignment for an entire VBSS corresponding to the second virtual AP MLD.

42. The method according to any one of claims 37 to 41, wherein
after the first non-AP MLD successfully associates with the target multi-AP MLD candidate set, a portion of links set up between the first non-AP MLD and multiple collocated affiliated APs in the second virtual AP MLD are used to transmit control plane information only and another portion of the links are used to transmit user plane information only, or a portion or all of the links set up between the first non-AP MLD and the multiple collocated affiliated APs in the second virtual AP MLD are allowed to transmit both control plane information and user plane information.

43. The method according to any one of claims 37 to 42, wherein
after the first non-AP MLD successfully associates with the target multi-AP MLD candidate set, a same affiliated STA of the first non-AP MLD is allowed to set up links with multiple non-collocated affiliated APs in the second virtual AP MLD.

44. The method according to any one of claims 37 to 43, wherein
after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

45. The method according to any one of claims 37 to 42, wherein
in a case where the first non-AP MLD is an EHT non-AP MLD, the first non-AP MLD only supports association with and setup of multiple links with a set of collocated affiliated APs in the second virtual AP MLD, and link IDs for the first non-AP MLD are assigned by a virtual MLD MAC of the second virtual AP MLD.

46. The method according to any one of claims 1 to 45, wherein,
before receiving, by the first AP MLD, the association request frame sent by the first non-AP MLD, the method further comprises:
sending, by the first AP MLD, a first frame;
wherein the first frame contains coordination capabilities and multi-link information of a multi-AP MLD candidate set to which the first AP MLD belongs, wherein the multi-AP MLD candidate set to which the first AP MLD belongs comprises at least the target multi-AP MLD candidate set.

47. The method according to claim 46, wherein
the first frame contains a multi-AP MLD candidate set info field, wherein the multi-AP MLD candidate set info field indicates the coordination capabilities and multi-link information of the multi-AP MLD candidate set to which the first AP MLD belongs.

48. The method according to claim 47, wherein
the multi-AP MLD candidate set info field in the first frame comprises a number of candidate sets field and at least one candidate set info field;
wherein the number of candidate sets field indicates the number of multi-AP MLD candidate sets to which the first AP MLD belongs, and an *s^{th}* candidate set info field in the at least one candidate set info field indicates coordination capabilities and multi-link information of an *s^{th}* multi-AP MLD candidate set to which the first AP MLD belongs, wherein s is a positive integer.

49. The method according to any one of claims 46 to 48, wherein
the first frame is one of: a beacon frame, a directional multi-gigabit (DMG) beacon frame, a probe response frame, and a multi-link probe response frame.

50. The method according to any one of claims 46 to 49, wherein
before sending, by the first AP MLD, the first frame, the method further comprises:
receiving, by the first AP MLD, a second frame sent by the first non-AP MLD;
wherein the second frame is used to request the coordination capabilities and multi-link information of the multi-AP MLD candidate set.

51. The method according to claim 50, wherein
the second frame comprises at least one of: an SSID field, an SSID list field, or a multi-AP MLD candidate set info request element;
wherein the SSID field and/or the SSID list field indicates an SSID requested by the first non-AP MLD and/or an SSID corresponding to a VBSS, and a multi-AP MLD candidate set info request field in the multi-AP MLD candidate set info request element comprises an info request field, wherein the info request field indicates whether the first non-AP MLD requests to acquire the coordination capabilities and multi-link information of the multi-AP MLD candidate set.

52. The method according to claim 50 or 51, wherein
in a case where the first frame is a probe response frame, the second frame is a probe request frame; or
in a case where the first frame is a multi-link probe response frame, the second frame is a multi-link probe request frame.

53. The method according to claim 52, wherein
in a case where the second frame is a multi-link probe request frame, the second frame further contains a multi-link element, wherein a type field contained in a multi-link control field in the multi-link element indicates that the multi-link element is a probe request multi-link element.

54. The method according to any one of claims 1 to 53, wherein
before receiving, by the first AP MLD, the association request frame sent by the first non-AP MLD, the method further comprises:
sending, by the first AP MLD, a multi-AP MLD candidate set request frame to at least one AP MLD;
wherein the multi-AP MLD candidate set request frame contains coordination capabilities and multi-link information of the multi-AP MLD candidate set that the first AP MLD requests to set up.

55. The method according to claim 54, wherein
the multi-AP MLD candidate set request frame contains a multi-AP MLD candidate set request field, wherein the multi-AP MLD candidate set request field indicates the coordination capabilities and multi-link information of the multi-AP MLD candidate set that the first AP MLD requests to set up.

56. The method according to claim 55, wherein
the multi-AP MLD candidate set request field contains a number of candidate sets field and at least one candidate set info field;
wherein the number of candidate sets field indicates the number of multi-AP MLD candidate sets that the first AP MLD requests to set up, and an *n^{th}* candidate set info field in the at least one candidate set info field indicates coordination capabilities and multi-link information of an *n^{th}* multi-AP MLD candidate set that the first AP MLD requests to set up, where *n* is a positive integer.

57. The method according to any one of claims 54 to 56, further comprising:
receiving, by the first AP MLD, a multi-AP MLD candidate set response frame sent by a second AP MLD;
wherein the at least one AP MLD comprises the second AP MLD, and a multi-AP MLD candidate set response field in the multi-AP MLD candidate set response frame comprises a response code field;
wherein a value of the response code field indicates at least one of:
the second AP MLD accepts a multi-AP MLD candidate set setup request from the first AP MLD;
the second AP MLD rejects the multi-AP MLD candidate set setup request from the first AP MLD, wherein a rejection reason is that a BSS load of the second AP MLD is high and the second AP MLD is unable to participate in multi-AP MLD coordinated transmission; or
the second AP MLD rejects the multi-AP MLD candidate set setup request from the first AP MLD, wherein a rejection reason is unknown.

58. The method according to claim 57, wherein
in a case where the response code field indicates that the second AP MLD accepts the multi-AP MLD candidate set setup request from the first AP MLD, the multi-AP MLD candidate set response field further comprises a number of associated non-AP MLDs field and multiple non-AP MLD info fields;
wherein the number of associated non-AP MLDs field indicates the number of non-AP MLDs associated with the second AP MLD, and an *x^{th}* non-AP MLD info field in the multiple non-AP MLD info fields indicates multi-AP MLD coordination related information of an *x^{th}* non-AP MLD in the non-AP MLDs associated with the second AP MLD, wherein x is a positive integer.

59. The method according to claim 58, wherein
each non-AP MLD info field in the multiple non-AP MLD info fields comprises at least one of: a non-AP MLD priority field, a multi-AP MLD coordination capabilities of non-AP MLD field, or a basic multi-link element;
wherein the non-AP MLD priority field indicates a priority for a non-AP MLD indicated by a current non-AP MLD info field for participating in multi-AP MLD coordinated transmission, the multi-AP MLD coordination capabilities of non-AP MLD field indicates capabilities information of the non-AP MLD indicated by the current non-AP MLD info field for participating in multi-AP MLD coordination, and the basic multi-link element indicates multi-link information supported by the non-AP MLD indicated by the current non-AP MLD info field.

60. The method according to claim 59, wherein
the multi-AP MLD coordination capabilities of non-AP MLD field comprises at least one of: a C-SR field, a C-BF field, a C-UL MU MIMO field, or a J-TX field; or the multi-AP MLD coordination capabilities of non-AP MLD field comprises at least one of: the C-SR field or the C-UL MU MIMO field;
wherein the C-SR field indicates whether the non-AP MLD indicated by the current non-AP MLD info field supports C-SR, the C-BF field indicates whether the non-AP MLD indicated by the current non-AP MLD info field supports C-BF, the C-UL MU MIMO field indicates whether the non-AP MLD indicated by the current non-AP MLD info field supports C-UL MU MIMO, and the J-TX field indicates whether the non-AP MLD indicated by the current non-AP MLD info field supports J-TX.

61. The method according to claim 60, wherein
in a case where the multi-AP MLD coordination capabilities of non-AP MLD field does not comprise the C-BF field, the multi-AP MLD coordination capabilities of non-AP MLD field implicitly indicates that the non-AP MLD indicated by the current non-AP MLD info field supports C-BF; and/or
in a case where the multi-AP MLD coordination capabilities of non-AP MLD field does not comprise the J-TX field, the multi-AP MLD coordination capabilities of non-AP MLD field implicitly indicates that the non-AP MLD indicated by the current non-AP MLD info field supports J-TX.

62. The method according to any one of claims 59 to 61, wherein
the multi-AP MLD coordination capabilities of non-AP MLD field implicitly indicates that the non-AP MLD indicated by the current non-AP MLD info field supports both uplink C-OFDMA and downlink C-OFDMA.

63. The method according to any one of claims 54 to 62, further comprising:
sending, by the first AP MLD, a multi-AP MLD candidate set confirmation frame;
wherein a multi-AP MLD candidate set confirmation field in the multi-AP MLD candidate set confirmation frame indicates the multi-AP MLD candidate set that the first AP MLD confirms to set up.

64. The method according to claim 63, wherein
the multi-AP MLD candidate set confirmation field comprises a number of candidate sets field and at least one candidate set info field;
wherein the number of candidate sets field indicates the number of multi-AP MLD candidate sets that the first AP MLD confirms to set up, and an *s^{th}* candidate set info field in the at least one candidate set info field indicates coordination capabilities and multi-link information of an *s^{th}* multi-AP MLD candidate set that the first AP MLD confirms to set up, where s is a positive integer.

65. The method according to claim 48, 56, or 64, wherein
each candidate set info field in the at least one candidate set info field comprises at least one of: a VBSSID field, a candidate set ID field, a sounding method field, a multi-AP MLD scheme field, a basic multi-link element, a number of AP MLDs field, or multiple AP MLD info fields;
wherein the VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

66. The method according to claim 65, wherein
the sounding method field comprises at least one of: a sequence sounding field or a joint sounding field; or
the sounding method field comprises only the joint sounding field;
wherein the sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

67. The method according to claim 66, wherein
in a case where the sounding method field does not comprise the sequence sounding field, the multi-AP MLD candidate set corresponding to the current candidate set info field supports channel sounding by multiple AP MLDs in sequence by default.

68. The method according to claim 65, wherein
the multi-AP MLD scheme field comprises at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or
the multi-AP MLD scheme field comprises at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, a multiplexing J-TX field, the full-bandwidth J-TX field, the partial-bandwidth J-TX field, the detection and discard field, or the interference- reduction field;
wherein the uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

69. The method according to claim 68, wherein
in a case where the multi-AP MLD scheme field does not comprise the uplink C-OFDMA field and the downlink C-OFDMA field, the multi-AP MLD candidate set corresponding to the current candidate set info field supports both uplink C-OFDMA and downlink C-OFDMA by default.

70. The method according to claim 68, wherein
in a case where a value of the single-user J-TX field indicates that the multi-AP MLD candidate set corresponding to the current candidate set info field does not support joint transmission for a same user, the multi-AP MLD scheme field does not comprise the multi-user J-TX field, or a value of the multi-user J-TX field indicates that the multi-AP MLD candidate set corresponding to the current candidate set info field does not support joint transmission for multiple users; and/or
in a case where the value of the single-user J-TX field indicates that the multi-AP MLD candidate set corresponding to the current candidate set info field does not support joint transmission for a same user, the multi-AP MLD scheme field does not comprise the diversity J-TX field, or a value of the diversity J-TX field indicates that the multi-AP MLD candidate set corresponding to the current candidate set info field does not support diversity-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the multiplexing J-TX field, or a value of the multiplexing J-TX field indicates that the multi-AP MLD candidate set corresponding to the current candidate set info field does not support multiplexing-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the full-bandwidth J-TX field, or a value of the full-bandwidth J-TX field indicates that the multi-AP MLD candidate set corresponding to the current candidate set info field does not support full bandwidth-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the partial-bandwidth J-TX field, or a value of the partial-bandwidth J-TX field indicates that the multi-AP MLD candidate set corresponding to the current candidate set info field does not support partial bandwidth-based joint transmission.

71. The method according to claim 68, wherein
in a case where the value of the single-user J-TX field indicates that the multi-AP MLD candidate set corresponding to the current candidate set info field supports joint transmission for a same user, the multi-AP MLD scheme field does not comprise the diversity J-TX field and the full-bandwidth J-TX field.

72. The method according to claim 71, wherein
the multi-AP MLD candidate set corresponding to the current candidate set info field supports diversity-based joint transmission by default; and/or
the multi-AP MLD candidate set corresponding to the current candidate set info field supports full bandwidth-based joint transmission by default.

73. The method according to claim 65, wherein
the multi-AP MLD scheme field comprises at least one of: a C-OFDMA support field, a C-SR support field, a C-BF support field, a J-TX support field, or a C-UL MU MIMO support field; or
the multi-AP MLD scheme field comprises at least one of: the C-SR support field, the C-BF support field, the J-TX support field, or the C-UL MU MIMO support field;
wherein the C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

74. The method according to claim 73, wherein
in a case where the multi-AP MLD scheme field does not comprise the C-OFDMA support field, the multi-AP MLD candidate set corresponding to the current candidate set info field supports both uplink C-OFDMA and downlink C-OFDMA by default.

75. The method according to claim 65, wherein
each AP MLD info field in the multiple AP MLD info fields comprises at least one of: a BSSID field, an AP MLD ID field, an AP MLD roles field, or a basic multi-link element;
wherein the BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

76. The method according to claim 75, wherein
the AP MLD ID field is directly set by the master AP MLD or a coordinating AP MLD, or the AP MLD ID field is determined by an order of the AP MLD indicated by the current AP MLD info field in the multi-AP MLD candidate set corresponding to the current candidate set info field.

77. The method according to claim 75 or 76, wherein
the AP MLD roles field comprises at least one of: a coordinating AP MLD role field, a coordinated AP MLD role field, a sharing AP MLD role field, or a shared AP MLD role field;
wherein in a channel sounding phase, a coordinating AP MLD indicated by the coordinating AP MLD role field initiates sounding, and an AP MLD indicated by the coordinated AP MLD role field participates in sounding;
wherein in a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

78. The method according to any one of claims 1 to 77, wherein before receiving, by the first AP MLD, the association request frame sent by the first non-AP MLD, the method further comprises:
acquiring, by the first AP MLD, multi-AP MLD coordination capabilities information of at least one AP MLD.

79. The method according to claim 78, wherein
multi-AP MLD coordination capabilities information of an *j^{th}* AP MLD in the at least one AP MLD is sent via a third frame;
wherein the third frame contains a multi-link element and a multi-AP MLD coordination capabilities element, wherein j is a positive integer;
wherein the multi-link element indicates multi-link information of the *j^{th}* AP MLD, and a multi-AP MLD coordination capabilities field in the multi-AP MLD coordination capabilities element indicates the multi-AP MLD coordination capabilities information of the *f^{th}* AP MLD.

80. The method according to claim 79, wherein
the multi-link element comprises at least one of: a multi-link control field, a common info field, or a link info field;
wherein a type field in the multi-link control field indicates that a type of the multi-link element is a basic multi-link element, and a presence bitmap field in the multi-link control field indicates a field present in the common info field;
wherein first *Q₁* bits and last *Q₂* bits of a link ID info field in the common info field jointly indicate a link ID of an affiliated AP of an AP MLD that sends the basic multi-link element during multi-AP MLD coordination, wherein *Q₁* and *Q₂* are both positive integers;
wherein the link info field indicates link-related information of the *j^{th}* AP MLD.

81. The method according to claim 80, wherein the link info field comprises at least one per-station (STA) profile field, and first *Q₃* bits and last *Q₄* bits of an STA control field in each of the at least one per-STA profile field jointly indicate a link ID of a STA reported during multi-AP MLD coordination, wherein *Q₃* and *Q₄* are both positive integers.

82. The method according to claim 79, wherein
the multi-AP MLD coordination capabilities field comprises at least one of: a multi-AP MLD coordination control field, a common info field, a C-OFDMA specific info field, a C-SR specific info field, a J-TX specific info field, or a C-UL MU MIMO specific info field; or the multi-AP MLD coordination capabilities field comprises at least one of: the multi-AP coordination control field, the common info field, the C-SR specific info field, the J-TX specific info field, or the C-UL MU MIMO specific info field;
wherein the multi-AP MLD coordination control field indicates a multi-AP MLD coordination mode-related field specifically contained in the multi-AP MLD coordination capabilities field; the common info field indicates a multi-AP MLD candidate set setup method, a role supported by the *j^{th}* AP MLD under a multi-AP MLD transmission scheme, and a channel sounding method supported by the *j^{th}* AP MLD; the C-OFDMA specific info field indicates a type of C-OFDMA supported by the *j^{th}* AP MLD; the C-SR specific info field indicates a type of C-SR supported by the *j^{th}* AP MLD; the J-TX specific info field indicates a type of J-TX supported by the *j^{th}* AP MLD; and the C-UL MU MIMO specific info field indicates a type of C-UL MU MIMO supported by the *j^{th}* AP MLD.

83. The method according to claim 82, wherein
the multi-AP MLD coordination control field comprises at least one of: a C-OFDMA present field, a C-SR present field, a C-BF support field, a J-TX present field, or a C-UL MU MIMO present field; or the multi-AP MLD coordination control field comprises at least one of: the C-SR present field, the C-BF support field, the J-TX present field, or the C-UL MU MIMO present field;
wherein the C-OFDMA present field indicates whether the multi-AP MLD coordination capabilities field comprises the C-OFDMA specific info field, and indicates whether the *j^{th}* AP MLD supports C-OFDMA;
the C-SR present field indicates whether the multi-AP MLD coordination capabilities field comprises the C-SR specific info field, and indicates whether the *j^{rh}* AP MLD supports C-SR;
the C-BF support field indicates whether the *j^{th}* AP MLD supports C-BF;
the J-TX present field indicates whether the multi-AP MLD coordination capabilities field comprises the J-TX specific info field, and indicates whether the *j^{th}* AP MLD supports J-TX; and
the C-UL MU MIMO present field indicates whether the multi-AP MLD coordination capabilities field comprises the C-UL MU MIMO specific info field, and indicates whether the *j^{th}* AP MLD supports C-UL MU MIMO.

84. The method according to claim 83, wherein
in a case where the multi-AP MLD scheme field does not comprise the C-OFDMA present field, the multi-AP MLD coordination capabilities field implicitly indicates that the *j^{th}* AP MLD supports both uplink C-OFDMA and downlink C-OFDMA.

85. The method according to claim 82, wherein
the C-OFDMA specific info field comprises an uplink C-OFDMA field and a downlink C-OFDMA field;
wherein the uplink C-OFDMA field indicates whether the *j^{th}* AP MLD supports uplink C-OFDMA, and the downlink C-OFDMA field indicates whether the *j^{th}* AP MLD supports downlink C-OFDMA.

86. The method according to claim 82, wherein
the C-SR specific info field comprises at least one of: a C-SR and C-OFDMA joint field, a C-SR and C-BF joint field, a C-SR and J-TX joint field, or a C-SR and C-UL MU MIMO joint field;
wherein the C-SR and C-OFDMA joint field indicates whether the *j^{th}* AP MLD supports joint use of C-SR and C-OFDMA, the C-SR and C-BF joint field indicates whether the *j^{th}* AP MLD supports joint use of C-SR and C-BF, the C-SR and J-TX joint field indicates whether the *j^{th}* AP MLD supports joint use of C-SR and J-TX, and the C-SR and C-UL MU MIMO joint field indicates whether the *j^{th}* AP MLD supports joint use of C-SR and C-UL MU MIMO.

87. The method according to claim 86, wherein
in a case where *the j^{th}* AP MLD does not support C-BF, the C-SR specific info field does not comprise the C-SR and C-BF joint field, or a value of the C-SR and C-BF joint field indicates that the *j^{th}* AP MLD does not support joint use of C-SR and C-BF; and/or
in a case where the *j^{th}* AP MLD does not support J-TX, the C-SR specific info field does not comprise the C-SR and J-TX joint field, or a value of the C-SR and J-TX joint field indicates that the *j^{th}* AP MLD does not support joint use of C-SR and J-TX; and/or
in a case where the *j^{th}* AP MLD does not support C-UL MU MIMO, the C-SR specific info field does not comprise the C-SR and C-UL MU MIMO joint field, or a value of the C-SR and C-UL MU MIMO joint field indicates that the *j^{th}* AP MLD does not support joint use of C-SR and C-UL MU MIMO.

88. The method according to claim 82, wherein
the J-TX specific info field comprises at least one of: a single-user J-TX field, a multi-user J-TX field, a diversity J-TX field, a multiplexing J-TX field, a full-bandwidth J-TX field, or a partial-bandwidth J-TX field; or
the J-TX specific info field comprises at least one of: the multi-user J-TX field, the diversity J-TX field, the multiplexing J-TX field, the full-bandwidth J-TX field, or the partial-bandwidth J-TX field; or
the J-TX specific info field comprises at least one of: the single-user J-TX field, the multi-user J-TX field, the multiplexing J-TX field, the full-bandwidth J-TX field, or the partial-bandwidth J-TX field; or
the J-TX specific info field comprises at least one of: the single-user J-TX field, the multi-user J-TX field, the diversity J-TX field, the multiplexing J-TX field, or the partial-bandwidth J-TX field;
wherein the single-user J-TX field indicates whether the *j^{th}* AP MLD supports joint transmission for a same user, the multi-user J-TX field indicates whether the *j^{th}* AP MLD supports joint transmission for multiple users, the diversity J-TX field indicates whether the *j^{th}* AP MLD supports diversity-based joint transmission, the multiplexing J-TX field indicates whether the *j^{th}* AP MLD supports multiplexing-based joint transmission, the full-bandwidth J-TX field indicates whether the *j^{th}* AP MLD supports full bandwidth-based joint transmission, and the partial-bandwidth J-TX field indicates whether the *j^{th}* AP MLD supports partial bandwidth-based joint transmission.

89. The method according to claim 88, wherein
in a case where the J-TX specific info field does not comprise the single-user J-TX field, the *j^{th}* AP MLD supports joint transmission for a single user by default; and/or
in a case where the J-TX specific info field does not comprise the diversity J-TX field, the *j^{th}* AP MLD supports diversity-based joint transmission by default; and/or
in a case where the J-TX specific info field does not comprise the full-bandwidth J-TX field, the *f^{th}* AP MLD supports full bandwidth-based joint transmission by default.

90. The method according to claim 82, wherein
the C-UL MU MIMO specific info field comprises at least one of: a detection and discard field or an interference-reduction field;
wherein the detection and discard field indicates whether the *j^{th}* AP MLD supports, in a C-UL MU MIMO mode, receiving and demodulating data/frames from other users and performing discarding to obtain useful data/frames;
wherein the interference-reduction field indicates whether the *j^{th}* AP MLD supports, in the C-UL MU MIMO mode, directly treating data from other users as interference and directly receiving and demodulating data/frames from a target user.

91. The method according to any one of claims 79 to 90, wherein
the third frame is one of: a beacon frame, a broadcast probe response frame, and a DMG beacon frame.

92. The method according to any one of claims 1 to 91, wherein
the first AP MLD is a master AP MLD.

93. A method for wireless communication, comprising:
sending, by a first non-access point (AP) multiple link device (MLD), an association request frame to a first AP MLD;
wherein the association request frame is used to request association with a target multi-AP MLD candidate set, and the association request frame contains first multi-link information, wherein the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

94. The method according to claim 93, wherein the first multi-link information is a basic multi-link field contained in the association request frame.

95. The method according to claim 93 or 94, wherein the association request frame contains capabilities information of the first non-AP MLD for participating in multi-AP MLD coordination.

96. The method according to claim 95, wherein
the association request frame contains a multi-AP MLD coordination capabilities of non-AP MLD field, wherein the multi-AP MLD coordination capabilities of non-AP MLD field indicates capabilities information of the first non-AP MLD for participating in multi-AP MLD coordination.

97. The method according to claim 96, wherein
the multi-AP MLD coordination capabilities of non-AP MLD field comprises at least one of: a coordinated spatial reuse (C-SR) field, a coordinated beamforming (C-BF) field, a coordinated uplink multi-user multiple-input multiple-output (C-UL MU MIMO) field, a joint transmission (J-TX) field, a coordinated orthogonal frequency division multiple access (C-OFDMA) field, or a coordinated time division multiple access (C-TDMA) field; or the multi-AP MLD coordination capabilities of non-AP MLD field comprises at least one of: the C-SR field or the C-UL MU MIMO field;
wherein the C-SR field indicates whether the first non-AP MLD supports C-SR, the C-BF field indicates whether the first non-AP MLD supports C-BF, the C-UL MU MIMO field indicates whether the first non-AP MLD supports C-UL MU MIMO, and the J-TX field indicates whether the first non-AP MLD supports J-TX.

98. The method according to claim 97, wherein
in a case where the multi-AP MLD coordination capabilities of non-AP MLD field does not comprise the C-BF field, the multi-AP MLD coordination capabilities of non-AP MLD field implicitly indicates that the first non-AP MLD supports C-BF; and/or
in a case where the multi-AP MLD coordination capabilities of non-AP MLD field does not comprise the J-TX field, the multi-AP MLD coordination capabilities of non-AP MLD field implicitly indicates that the first non-AP MLD supports J-TX.

99. The method according to claim 97 or 98, wherein
in a case where the multi-AP MLD coordination capabilities of non-AP MLD field does not comprise the C-OFDMA field, the multi-AP MLD coordination capabilities of non-AP MLD field implicitly indicates that the first non-AP MLD supports both uplink C-OFDMA and downlink C-OFDMA; and/or
in a case where the multi-AP MLD coordination capabilities of non-AP MLD field does not comprise the C-TDMA field, the multi-AP MLD coordination capabilities of non-AP MLD field implicitly indicates that the first non-AP MLD supports both uplink C-TDMA and downlink C-TDMA.

100. The method according to any one of claims 93 to 99, further comprising:
receiving, by the first non-AP MLD, an association response frame sent by the first AP MLD;
wherein the association response frame indicates whether the first non-AP MLD associates with the target multi-AP MLD candidate set, and the association response frame contains second multi-link information, wherein the second multi-link information indicates acceptance or rejection of a portion or all of links that the first non-AP MLD requests to set up, and/or the second multi-link information indicates information of multiple links set up between the first non-AP MLD and the first AP MLD.

101. The method according to claim 100, wherein the second multi-link information is a basic multi-link field contained in the association response frame.

102. The method according to claim 100 or 101, wherein
the association response frame further contains at least one of: a status code field or a multi-AP MLD candidate set info field;
wherein the status code field indicates whether the first non-AP MLD successfully associates with a requested legacy basic service set (BSS) and/or a requested virtual BSS (VBSS), wherein the VBSS is a BSS corresponding to the target multi-AP MLD candidate set;
wherein the multi-AP MLD candidate set info field indicates multi-AP MLD coordination capabilities of the target multi-AP MLD candidate set.

103. The method according to claim 102, wherein
the status code field indicating success indicates that the first non-AP MLD successfully associates with both the legacy BSS and the VBSS; and/or
the status code field indicating VBSS failure indicates that the first non-AP MLD fails to associate with the requested VBSS; and/or
the status code field indicating failure indicates that the first non-AP MLD fails to associate with the requested legacy SSID.

104. The method according to claim 102, wherein
the multi-AP MLD candidate set info field in the association response frame comprises a candidate set info field, wherein
the candidate set info field comprises at least one of: a virtual BSSID (VBSSID) field, a candidate set identifier (ID) field, a sounding method field, a multi-AP MLD scheme field, a basic multi-link element, a number of AP MLDs field, or multiple AP MLD info fields;
wherein the VBSSID field indicates a VBSSID of the target multi-AP MLD candidate set, the candidate set ID field indicates an ID of the target multi-AP MLD candidate set, the sounding method field indicates a channel sounding method supported by the target multi-AP MLD candidate set, the multi-AP MLD scheme field indicates a multi-AP MLD coordination mode supported by the target multi-AP MLD candidate set, the basic multi-link element indicates multi-link information of the target multi-AP MLD candidate set, the number of AP MLDs field indicates the number of member AP MLDs contained in the target multi-AP MLD candidate set, and the multiple AP MLD info fields respectively indicate relevant information of the multiple member AP MLDs contained in the target multi-AP MLD candidate set.

105. The method according to claim 104, wherein
the sounding method field comprises at least one of: a sequence sounding field or a joint sounding field; or
the sounding method field comprises only the joint sounding field;
wherein the sequence sounding field indicates whether the target multi-AP MLD candidate set supports channel sounding by multiple AP MLDs in sequence, and the joint sounding field indicates whether the target multi-AP MLD candidate set supports channel sounding by the multiple AP MLDs simultaneously and synchronously.

106. The method according to claim 105, wherein
in a case where the sounding method field does not comprise the sequence sounding field, the target multi-AP MLD candidate set supports channel sounding by multiple AP MLDs in sequence by default.

107. The method according to claim 104, wherein
the multi-AP MLD scheme field comprises at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or
the multi-AP MLD scheme field comprises at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference-reduction field;
wherein the uplink C-OFDMA field indicates whether the target multi-AP MLD candidate set supports uplink C-OFDMA, the downlink C-OFDMA field indicates whether the target multi-AP MLD candidate set supports downlink C-OFDMA, the C-SR and C-OFDMA joint field indicates whether the target multi-AP MLD candidate set supports joint use of C-SR and C-OFDMA, the C-SR and C-BF joint field indicates whether the target multi-AP MLD candidate set supports joint use of C-SR and C-BF, the C-SR and J-TX joint field indicates whether the target multi-AP MLD candidate set supports joint use of C-SR and J-TX, the C-SR and C-UL MU MIMO joint field indicates whether the target multi-AP MLD candidate set supports joint use of C-SR and C-UL MU MIMO, the C-BF field indicates whether the target multi-AP MLD candidate set supports C-BF, the single-user J-TX field indicates whether the target multi-AP MLD candidate set supports joint transmission for a same user, the multi-user J-TX field indicates whether the target multi-AP MLD candidate set supports joint transmission for multiple users, the diversity J-TX field indicates whether the target multi-AP MLD candidate set supports diversity-based joint transmission, the multiplexing J-TX field indicates whether the target multi-AP MLD candidate set supports multiplexing-based joint transmission, the full-bandwidth J-TX field indicates whether the target multi-AP MLD candidate set supports full bandwidth-based joint transmission, the partial-bandwidth J-TX field indicates whether the target multi-AP MLD candidate set supports partial bandwidth-based joint transmission, the detection and discard field indicates whether the target multi-AP MLD candidate set supports, in a C-UL MU MIMO mode, receiving and demodulating data/frames from other users and performing discarding to obtain useful data/frames, and the interference-reduction field indicates whether the target multi-AP MLD candidate set supports, in the C-UL MU MIMO mode, directly treating data from other users as interference and directly receiving and demodulating data/frames from a target user.

108. The method according to claim 107, wherein
in a case where the multi-AP MLD scheme field does not comprise the uplink C-OFDMA field and the downlink C-OFDMA field, the target multi-AP MLD candidate set supports uplink C-OFDMA and downlink C-OFDMA by default.

109. The method according to claim 107, wherein,
in a case where a value of the single-user J-TX field indicates that the target multi-AP MLD candidate set does not support joint transmission for a same user, the multi-AP MLD scheme field does not comprise the multi-user J-TX field, or a value of the multi-user J-TX field indicates that the target multi-AP MLD candidate set does not support joint transmission for multiple users; and/or
in a case where the value of the single-user J-TX field indicates that the target multi-AP MLD candidate set does not support joint transmission for a same user, the multi-AP MLD scheme field does not comprise the diversity J-TX field, or a value of the diversity J-TX field indicates that the target multi-AP MLD candidate set does not support diversity-based joint transmission; and/or
in a case where the value of the single-user J-TX field indicates that the target multi-AP MLD candidate set does not support joint transmission for a same user, the multi-AP MLD scheme field does not comprise the multiplexing J-TX field, or a value of the multiplexing J-TX field indicates that the target multi-AP MLD candidate set does not support multiplexing-based joint transmission; and/or
in a case where the value of the single-user J-TX field indicates that the target multi-AP MLD candidate set does not support joint transmission for a same user, the multi-AP MLD scheme field does not comprise the full-bandwidth J-TX field, or a value of the full-bandwidth J-TX field indicates that the target multi-AP MLD candidate set does not support full bandwidth-based joint transmission; and/or
in a case where the value of the single-user J-TX field indicates that the target multi-AP MLD candidate set does not support joint transmission for a same user, the multi-AP MLD scheme field does not comprise the partial-bandwidth J-TX field, or a value of the partial-bandwidth J-TX field indicates that the target multi-AP MLD candidate set does not support partial bandwidth-based joint transmission.

110. The method according to claim 107, wherein
in a case where a value of the single-user J-TX field indicates that the target multi-AP MLD candidate set supports joint transmission for a same user, the multi-AP MLD scheme field does not comprise the diversity J-TX field and the full-bandwidth J-TX field.

111. The method according to claim 110, wherein
the target multi-AP MLD candidate set supports diversity-based joint transmission by default; and/or
the target multi-AP MLD candidate set supports full bandwidth-based joint transmission by default.

112. The method according to claim 104, wherein
the multi-AP MLD scheme field comprises at least one of: a C-OFDMA support field, a C-SR support field, a C-BF support field, a J-TX support field, or a C-UL MU MIMO support field; or
the multi-AP MLD scheme field comprises at least one of: the C-SR support field, the C-BF support field, the J-TX support field, or the C-UL MU MIMO support field;
wherein the C-OFDMA support field indicates that the target multi-AP MLD candidate set supports C-OFDMA, the C-SR support field indicates that the target multi-AP MLD candidate set supports C-SR, the C-BF support field indicates that the target multi-AP MLD candidate set supports C-BF, the J-TX support field indicates that the target multi-AP MLD candidate set supports J-TX, and the C-UL MU MIMO support field indicates that the target multi-AP MLD candidate set supports C-UL MU MIMO.

113. The method according to claim 112, wherein
in a case where the multi-AP MLD scheme field does not comprise the C-OFDMA support field, the target multi-AP MLD candidate set supports uplink C-OFDMA and downlink C-OFDMA by default.

114. The method according to claim 104, wherein
each AP MLD info field in the multiple AP MLD info fields comprises at least one of: a BSSID field, an AP MLD ID field, an AP MLD roles field, or a basic multi-link element;
wherein the BSSID field indicates a BSSID of an AP MLD indicated by a current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

115. The method according to claim 114, wherein
the AP MLD ID field is directly set by a master AP MLD or a coordinating AP MLD, or the AP MLD ID field is determined based on an order of the AP MLD indicated by the current AP MLD info field in the target multi-AP MLD candidate set.

116. The method according to claim 114 or 115, wherein
the AP MLD roles field comprises at least one of: a coordinating AP MLD role field, a coordinated AP MLD role field, a sharing AP MLD role field, or a shared AP MLD role field;
wherein in a channel sounding phase, a coordinating AP MLD indicated by the coordinating AP MLD role field initiates sounding, and an AP MLD indicated by the coordinated AP MLD role field participates in sounding;
wherein in a preparation phase and/or a transmission phase, an AP MLD indicated by the sharing AP MLD role field shares transmission opportunity (TXOP) resources for the AP MLD indicated by the sharing AP MLD role field with an AP MLD indicated by the shared AP MLD role field to perform coordinated transmission.

117. The method according to any one of claims 104 to 116, wherein
in a case where the candidate set info field does not comprise the basic multi-link element, a basic multi-link field contained in the association response frame further indicates multi-link information of the target multi-AP MLD candidate set.

118. The method according to any one of claims 93 to 117, wherein
relevant information of the first non-AP MLD contained in the association request frame is shared with other AP MLDs in the target multi-AP MLD candidate set via a backhaul link by the first AP MLD.

119. The method according to any one of claims 93 to 118, wherein
a portion or all of AP MLDs in the target multi-AP MLD candidate set jointly form a first virtual AP MLD.

120. The method according to claim 119, wherein
the first virtual AP MLD comprises a virtual MLD media access control (MAC);
wherein the virtual MLD MAC is connected to MLD upper MACs of all the AP MLDs in the first virtual AP MLD, and the virtual MLD MAC is configured to manage and control all the AP MLDs in the first virtual AP MLD.

121. The method according to claim 120, wherein
the virtual MLD MAC is located in any one of all the AP MLDs in the first virtual AP MLD, or is located in a master AP MLD in all the AP MLDs in the first virtual AP MLD, or is located in an independent controller.

122. The method according to any one of claims 119 to 121, wherein
each AP MLD in the first virtual AP MLD comprises an MLD upper MAC, a non-MLD upper MAC, an MLD lower MAC, or a physical layer.

123. The method according to any one of claims 119 to 122, wherein
the virtual MLD MAC of the first virtual AP MLD is configured to manage link assignment for an entire VBSS corresponding to the first virtual AP MLD.

124. The method according to any one of claims 119 to 123, wherein
after the first non-AP MLD successfully associates with the target multi-AP MLD candidate set, a portion of links set up between the first non-AP MLD and the first AP MLD are used to transmit control plane information only and another portion of the links are used to transmit user plane information only, or a portion or all of the links set up between the first non-AP MLD and the first AP MLD are allowed to transmit both control plane information and user plane information.

125. The method according to any one of claims 119 to 124, wherein
after the first non-AP MLD successfully associates with the target multi-AP MLD candidate set, a same affiliated station (STA) of the first non-AP MLD is allowed to set up links with affiliated APs of multiple AP MLDs in the first virtual AP MLD.

126. The method according to any one of claims 119 to 125, wherein
after the first non-AP MLD successfully associates with the target multi-AP MLD candidate set, multiple links corresponding to a same affiliated STA of the first non-AP MLD are used to transmit identical physical layer protocol data units (PPDUs), or multiple links corresponding to a same affiliated STA of the first non-AP MLD are used to transmit different PPDUs.

127. The method according to any one of claims 119 to 124, wherein
in a case where the first non-AP MLD is an extremely high throughput (EHT) non-AP MLD, the first non-AP MLD only supports association with and setup of multiple links with one AP MLD in the first virtual AP MLD, and link IDs for the first non-AP MLD are assigned by a virtual MLD MAC of the first virtual AP MLD.

128. The method according to any one of claims 93 to 118, wherein
affiliated APs of a portion or all of AP MLDs in the target multi-AP MLD candidate set jointly form a second virtual AP MLD.

129. The method according to claim 128, wherein
the second virtual AP MLD comprises a virtual MLD upper MAC;
wherein the virtual MLD upper MAC is connected to MLD lower MACs of all affiliated APs in the second virtual AP MLD, and the virtual MLD upper MAC is configured to manage and control all the affiliated APs in the second virtual AP MLD.

130. The method according to claim 129, wherein
the virtual MLD upper MAC is located in any one of all the affiliated APs in the second virtual AP MLD, or is located in a master AP in all the affiliated APs in the second virtual AP MLD, or is located in an independent controller.

131. The method according to any one of claims 128 to 130, wherein
each affiliated AP in the second virtual AP MLD comprises a non-MLD upper MAC, an MLD lower MAC, and a physical layer.

132. The method according to claim 131, wherein
multiple collocated affiliated APs in the second virtual AP MLD share an MLD upper MAC.

133. The method according to any one of claims 128 to 132, wherein
a virtual MLD upper MAC of the second virtual AP MLD is configured to manage link assignment for an entire VBSS corresponding to the second virtual AP MLD.

134. The method according to any one of claims 128 to 133, wherein
after the first non-AP MLD successfully associates with the target multi-AP MLD candidate set, a portion of links set up between the first non-AP MLD and multiple collocated affiliated APs in the second virtual AP MLD are used to transmit control plane information only and another portion of the links are used to transmit user plane information only, or a portion or all of the links set up between the first non-AP MLD and the multiple collocated affiliated APs in the second virtual AP MLD are allowed to transmit both control plane information and user plane information.

135. The method according to any one of claims 128 to 134, wherein
after the first non-AP MLD successfully associates with the target multi-AP MLD candidate set, a same affiliated STA of the first non-AP MLD is allowed to set up links with multiple non-collocated affiliated APs in the second virtual AP MLD.

136. The method according to any one of claims 128 to 135, wherein
after the first non-AP MLD successfully associates with the target multi-AP MLD candidate set, multiple links corresponding to a same affiliated STA of the first non-AP MLD are used to transmit identical PPDUs, or multiple links corresponding to a same affiliated STA of the first non-AP MLD are used to transmit different PPDUs.

137. The method according to any one of claims 128 to 134, wherein
in a case where the first non-AP MLD is an EHT non-AP MLD, the first non-AP MLD only supports association with and setup of multiple links with a set of collocated affiliated APs in the second virtual AP MLD, and link IDs for the first non-AP MLD are assigned by a virtual MLD MAC of the second virtual AP MLD.

138. The method according to any one of claims 93 to 137, wherein,
before sending, by the first non-AP MLD, the association request frame, the method further comprises:
receiving, by the first non-AP MLD, a first frame sent by the first AP MLD;
wherein the first frame contains coordination capabilities and multi-link information of a multi-AP MLD candidate set to which the first AP MLD belongs, wherein the multi-AP MLD candidate set to which the first AP MLD belongs comprises at least the target multi-AP MLD candidate set.

139. The method according to claim 138, wherein
the first frame contains a multi-AP MLD candidate set info field, wherein the multi-AP MLD candidate set info field indicates the coordination capabilities and multi-link information of the multi-AP MLD candidate set to which the first AP MLD belongs.

140. The method according to claim 139, wherein
the multi-AP MLD candidate set info field in the first frame comprises a number of candidate sets field and at least one candidate set info field;
wherein the number of candidate sets field indicates the number of multi-AP MLD candidate sets to which the first AP MLD belongs, and an *s^{th}* candidate set info field in the at least one candidate set info field indicates coordination capabilities and multi-link information of an *s^{th}* multi-AP MLD candidate set to which the first AP MLD belongs, wherein s is a positive integer.

141. The method according to claim 140, wherein
each candidate set info field in the at least one candidate set info field comprises at least one of: a VBSSID field, a candidate set ID field, a sounding method field, a multi-AP MLD scheme field, a basic multi-link element, a number of AP MLDs field, or multiple AP MLD info fields;
wherein the VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

142. The method according to claim 141, wherein
the sounding method field comprises at least one of: a sequence sounding field or a joint sounding field; or
the sounding method field comprises only the joint sounding field;
wherein the sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

143. The method according to claim 142, wherein
in a case where the sounding method field does not comprise the sequence sounding field, the multi-AP MLD candidate set corresponding to the current candidate set info field supports channel sounding by multiple AP MLDs in sequence by default.

144. The method according to claim 141, wherein
the multi-AP MLD scheme field comprises at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or
the multi-AP MLD scheme field comprises at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, the multiplexing J-TX field, the full-bandwidth J-TX field, the partial-bandwidth J-TX field, the detection and discard field, or the interference- reduction field;
wherein the uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

145. The method according to claim 144, wherein
in a case where the multi-AP MLD scheme field does not comprise the uplink C-OFDMA field and the downlink C-OFDMA field, the multi-AP MLD candidate set corresponding to the current candidate set info field supports both uplink C-OFDMA and downlink C-OFDMA by default.

146. The method according to claim 144, wherein
in a case where a value of the single-user J-TX field indicates that the multi-AP MLD candidate set corresponding to the current candidate set info field does not support joint transmission for a same user, the multi-AP MLD scheme field does not comprise the multi-user J-TX field, or a value of the multi-user J-TX field indicates that the multi-AP MLD candidate set corresponding to the current candidate set info field does not support joint transmission for multiple users; and/or
in a case where the value of the single-user J-TX field indicates that the multi-AP MLD candidate set corresponding to the current candidate set info field does not support joint transmission for a same user, the multi-AP MLD scheme field does not comprise the diversity J-TX field, or a value of the diversity J-TX field indicates that the multi-AP MLD candidate set corresponding to the current candidate set info field does not support diversity-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the multiplexing J-TX field, or a value of the multiplexing J-TX field indicates that the multi-AP MLD candidate set corresponding to the current candidate set info field does not support multiplexing-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the full-bandwidth J-TX field, or a value of the full-bandwidth J-TX field indicates that the multi-AP MLD candidate set corresponding to the current candidate set info field does not support full bandwidth-based joint transmission; and/or
in a case where the value of the single-user J-TX field indicates that the multi-AP MLD candidate set corresponding to the current candidate set info field does not support joint transmission for a same user, the multi-AP MLD scheme field does not comprise the partial-bandwidth J-TX field, or a value of the partial-bandwidth J-TX field indicates that the multi-AP MLD candidate set corresponding to the current candidate set info field does not support partial bandwidth-based joint transmission.

147. The method according to claim 144, wherein
in a case where a value of the single-user J-TX field indicates that the multi-AP MLD candidate set corresponding to the current candidate set info field supports joint transmission for a same user, the multi-AP MLD scheme field does not comprise the diversity J-TX field and the full-bandwidth J-TX field.

148. The method according to claim 147, wherein
the multi-AP MLD candidate set corresponding to the current candidate set info field supports diversity-based joint transmission by default; and/or
the multi-AP MLD candidate set corresponding to the current candidate set info field supports full bandwidth-based joint transmission by default.

149. The method according to claim 141, wherein
the multi-AP MLD scheme field comprises at least one of: a C-OFDMA support field, a C-SR support field, a C-BF support field, a J-TX support field, or a C-UL MU MIMO support field; or
the multi-AP MLD scheme field comprises at least one of: the C-SR support field, the C-BF support field, the J-TX support field, or the C-UL MU MIMO support field;
wherein the C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

150. The method according to claim 149, wherein
in a case where the multi-AP MLD scheme field does not comprise the C-OFDMA support field, the multi-AP MLD candidate set corresponding to the current candidate set info field supports both uplink C-OFDMA and downlink C-OFDMA by default.

151. The method according to claim 141, wherein
each AP MLD info field in the multiple AP MLD info fields comprises at least one of: a BSSID field, an AP MLD ID field, an AP MLD roles field, or a basic multi-link element;
wherein the BSSID field indicates a BSSID of an AP MLD indicated by a current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

152. The method according to claim 151, wherein
the AP MLD ID field is directly set by a master AP MLD or a coordinating AP MLD, or the AP MLD ID field is determined by an order of the AP MLD indicated by the current AP MLD info field in the multi-AP MLD candidate set corresponding to the current candidate set info field.

153. The method according to claim 151 or 152, wherein
the AP MLD roles field comprises at least one of: a coordinating AP MLD role field, a coordinated AP MLD role field, a sharing AP MLD role field, or a shared AP MLD role field;
wherein in a channel sounding phase, a coordinating AP MLD indicated by the coordinating AP MLD role field initiates sounding, and an AP MLD indicated by the coordinated AP MLD role field participates in sounding;
wherein in a preparation phase and/or a transmission phase, an AP MLD indicated by the sharing AP MLD role field shares TXOP resources for the AP MLD indicated by the sharing AP MLD role field with an AP MLD indicated by the shared AP MLD role field to perform coordinated transmission.

154. The method according to any one of claims 138 to 153, wherein
the first frame is one of: a beacon frame, a directional multi-gigabit (DMG) beacon frame, a probe response frame, and a multi-link probe response frame.

155. The method according to any one of claims 138 to 154, wherein
before receiving, by the first non-AP MLD, the first frame, the method further comprises:
sending, by the first non-AP MLD, a second frame to the first non-AP MLD;
wherein the second frame is used to request the coordination capabilities and multi-link information of the multi-AP MLD candidate set.

156. The method according to claim 155, wherein
the second frame comprises at least one of: an SSID field, an SSID list field, or a multi-AP MLD candidate set info request element;
wherein the SSID field and/or the SSID list field indicates an SSID requested by the first non-AP MLD and/or an SSID corresponding to a VBSS, and a multi-AP MLD candidate set info request field in the multi-AP MLD candidate set info request element comprises an info request field, wherein the info request field indicates whether the first non-AP MLD requests to acquire the coordination capabilities and multi-link information of the multi-AP MLD candidate set.

157. The method according to claim 155 or 156, wherein
in a case where the first frame is a probe response frame, the second frame is a probe request frame; or
in a case where the first frame is a multi-link probe response frame, the second frame is a multi-link probe request frame.

158. The method according to claim 157, wherein
in a case where the second frame is a multi-link probe request frame, the second frame further contains a multi-link element, wherein a type field contained in a multi-link control field in the multi-link element indicates that the multi-link element is a probe request multi-link element.

159. The method according to any one of claims 93 to 158, wherein
the first AP MLD is a master AP MLD.

160. A method for wireless communication, comprising:
receiving, by a second access point (AP) multi-link device (MLD), a multi-AP MLD candidate set request frame sent by a first AP MLD;
wherein the multi-AP MLD candidate set request frame contains coordination capabilities and multi-link information of a multi-AP MLD candidate set that the first AP MLD requests to set up.

161. The method according to claim 160, wherein
the multi-AP MLD candidate set request frame contains a multi-AP MLD candidate set request field, wherein the multi-AP MLD candidate set request field indicates the coordination capabilities and multi-link information of the multi-AP MLD candidate set that the first AP MLD requests to set up.

162. The method according to claim 161, wherein
the multi-AP MLD candidate set request field contains a number of candidate sets field and at least one candidate set info field;
wherein the number of candidate sets field indicates the number of multi-AP MLD candidate sets that the first AP MLD requests to set up, and an *n^{th}* candidate set info field in the at least one candidate set info field indicates coordination capabilities and multi-link information of an *n^{th}* multi-AP MLD candidate set that the first AP MLD requests to set up, wherein *n* is a positive integer.

163. The method according to any one of claims 160 to 162, further comprising:
sending, by the second AP MLD, a multi-AP MLD candidate set response frame to the first AP MLD;
wherein a multi-AP MLD candidate set response field in the multi-AP MLD candidate set response frame comprises a response code field;
wherein a value of the response code field indicates at least one of:
the second AP MLD accepts a multi-AP MLD candidate set setup request from the first AP MLD;
the second AP MLD rejects the multi-AP MLD candidate set setup request from the first AP MLD, wherein a rejection reason is that a BSS load of the second AP MLD is high and the second AP MLD is unable to participate in multi-AP MLD coordinated transmission; or
the second AP MLD rejects the multi-AP MLD candidate set setup request from the first AP MLD, wherein a rejection reason is unknown.

164. The method according to claim 163, wherein
in a case where the response code field indicates that the second AP MLD accepts the multi-AP MLD candidate set setup request from the first AP MLD, the multi-AP MLD candidate set response field further comprises a number of associated non-AP MLDs field and multiple non-AP MLD info fields;
wherein the number of associated non-AP MLDs field indicates the number of non-AP MLDs associated with the second AP MLD, and an *x^{th}* non-AP MLD info field in the multiple non-AP MLD info fields indicates multi-AP MLD coordination related information of an *x^{th}* non-AP MLD in the non-AP MLDs associated with the second AP MLD, wherein x is a positive integer.

165. The method according to claim 164, wherein
each non-AP MLD info field in the multiple non-AP MLD info fields comprises at least one of: a non-AP MLD priority field, a multi-AP MLD coordination capabilities of non-AP MLD field, or a basic multi-link element;
wherein the non-AP MLD priority field indicates a priority for a non-AP MLD indicated by a current non-AP MLD info field for participating in multi-AP MLD coordinated transmission, the multi-AP MLD coordination capabilities of non-AP MLD field indicates capabilities information of the non-AP MLD indicated by the current non-AP MLD info field for participating in multi-AP MLD coordination, and the basic multi-link element indicates multi-link information supported by the non-AP MLD indicated by the current non-AP MLD info field.

166. The method according to claim 165, wherein
the multi-AP MLD coordination capabilities of non-AP MLD field comprises at least one of: a coordinated spatial reuse (C-SR) field, a coordinated beamforming (C-BF) field, a coordinated uplink multi-user multiple-input multiple-output (C-UL MU MIMO) field, or a joint transmission (J-TX) field; or the multi-AP MLD coordination capabilities of non-AP MLD field comprises at least one of: the C-SR field or the C-UL MU MIMO field;
wherein the C-SR field indicates whether the non-AP MLD indicated by the current non-AP MLD info field supports C-SR, the C-BF field indicates whether the non-AP MLD indicated by the current non-AP MLD info field supports C-BF, the C-UL MU MIMO field indicates whether the non-AP MLD indicated by the current non-AP MLD info field supports C-UL MU MIMO, and the J-TX field indicates whether the non-AP MLD indicated by the current non-AP MLD info field supports J-TX.

167. The method according to claim 166, wherein
in a case where the multi-AP MLD coordination capabilities of non-AP MLD field does not comprise the C-BF field, the multi-AP MLD coordination capabilities of non-AP MLD field implicitly indicates that the non-AP MLD indicated by the current non-AP MLD info field supports C-BF; and/or
in a case where the multi-AP MLD coordination capabilities of non-AP MLD field does not comprise the J-TX field, the multi-AP MLD coordination capabilities of non-AP MLD field implicitly indicates that the non-AP MLD indicated by the current non-AP MLD info field supports J-TX.

168. The method according to any one of claims 165 to 167, wherein
the multi-AP MLD coordination capabilities of non-AP MLD field implicitly indicates that the non-AP MLD indicated by the current non-AP MLD info field supports both uplink C-OFDMA and downlink C-OFDMA.

169. The method according to any one of claims 160 to 168, further comprising:
receiving, by the first AP MLD, a multi-AP MLD candidate set confirmation frame sent by the first AP MLD;
wherein a multi-AP MLD candidate set confirmation field in the multi-AP MLD candidate set confirmation frame indicates the multi-AP MLD candidate set that the first AP MLD confirms to set up.

170. The method according to claim 169, wherein
the multi-AP MLD candidate set confirmation field comprises a number of candidate sets field and at least one candidate set info field;
wherein the number of candidate sets field indicates the number of multi-AP MLD candidate sets that the first AP MLD confirms to set up, and an *s^{th}* candidate set info field in the at least one candidate set info field indicates coordination capabilities and multi-link information of an *s^{th}* multi-AP MLD candidate set that the first AP MLD confirms to set up, where s is a positive integer.

171. The method according to claim 162 or 170, wherein
each candidate set info field in the at least one candidate set info field comprises at least one of: a virtual basic service set identifier (VBSSID) field, a candidate set identifier (ID) field, a sounding method field, a multi-AP MLD scheme field, a basic multi-link element, a number of AP MLDs field, or multiple AP MLD info fields;
wherein the VBSSID field indicates a VBSSID of a multi-AP MLD candidate set corresponding to a current candidate set info field, the candidate set ID field indicates an ID of the multi-AP MLD candidate set corresponding to the current candidate set info field, the sounding method field indicates a channel sounding method supported by the multi-AP MLD candidate set corresponding to the current candidate set info field, the multi-AP MLD scheme field indicates a multi-AP MLD coordination mode supported by the multi-AP MLD candidate set corresponding to the current candidate set info field, the basic multi-link element indicates multi-link information of the multi-AP MLD candidate set corresponding to the current candidate set info field, the number of AP MLDs field indicates the number of member AP MLDs contained in the multi-AP MLD candidate set corresponding to the current candidate set info field, and an *m^{th}* AP MLD info field in the multiple AP MLD info fields indicates relevant information of an *m^{th}* member AP MLD contained in the multi-AP MLD candidate set corresponding to the current candidate set info field.

172. The method according to claim 171, wherein
the sounding method field comprises at least one of: a sequence sounding field or a joint sounding field; or
the sounding method field comprises only the joint sounding field;
wherein the sequence sounding field indicates whether the multi-AP MLD candidate set corresponding to the current candidate set info field supports channel sounding by multiple AP MLDs in sequence, and the joint sounding field indicates whether the multi-AP MLD candidate set corresponding to the current candidate set info field supports channel sounding by multiple AP MLDs simultaneously and synchronously.

173. The method according to claim 172, wherein
in a case where the sounding method field does not comprise the sequence sounding field, the multi-AP MLD candidate set corresponding to the current candidate set info field supports channel sounding by multiple AP MLDs in sequence by default.

174. The method according to claim 171, wherein
the multi-AP MLD scheme field comprises at least one of: an uplink C-OFDMA field, a downlink C-OFDMA field, a C-SR and C-OFDMA joint field, a C-SR and C-BF joint field, a C-SR and J-TX joint field, a C-SR and C-UL MU MIMO joint field, a C-BF field, a single-user J-TX field, a multi-user J-TX field, a diversity J-TX field, a J-TX field, a full-bandwidth J-TX field, a partial-bandwidth J-TX field, a detection and discard field, or an interference-reduction field; or
the multi-AP MLD scheme field comprises at least one of: the C-SR and C-OFDMA joint field, the C-SR and C-BF joint field, the C-SR and J-TX joint field, the C-SR and C-UL MU MIMO joint field, the C-BF field, the single-user J-TX field, the multi-user J-TX field, the diversity J-TX field, a multiplexing J-TX field, the full-bandwidth J-TX field, the partial-bandwidth J-TX field, the detection and discard field, or the interference- reduction field;
wherein the uplink C-OFDMA field indicates whether the multi-AP MLD candidate set corresponding to the current candidate set info field supports uplink C-OFDMA, the downlink C-OFDMA field indicates whether the multi-AP MLD candidate set corresponding to the current candidate set info field supports downlink C-OFDMA, the C-SR and C-OFDMA joint field indicates whether the multi-AP MLD candidate set corresponding to the current candidate set info field supports joint use of C-SR and C-OFDMA, the C-SR and C-BF joint field indicates whether the multi-AP MLD candidate set corresponding to the current candidate set info field supports joint use of C-SR and C-BF, the C-SR and J-TX joint field indicates whether the multi-AP MLD candidate set corresponding to the current candidate set info field supports joint use of C-SR and J-TX, the C-SR and C-UL MU MIMO joint field indicates whether the multi-AP MLD candidate set corresponding to the current candidate set info field supports joint use of C-SR and C-UL MU MIMO, the C-BF field indicates whether the multi-AP MLD candidate set corresponding to the current candidate set info field supports C-BF, the single-user J-TX field indicates whether the multi-AP MLD candidate set corresponding to the current candidate set info field supports joint transmission for a same user, the multi-user J-TX field indicates whether the multi-AP MLD candidate set corresponding to the current candidate set info field supports joint transmission for multiple users, the diversity J-TX field indicates whether the multi-AP MLD candidate set corresponding to the current candidate set info field supports diversity-based joint transmission, the multiplexing J-TX field indicates whether the multi-AP MLD candidate set corresponding to the current candidate set info field supports multiplexing-based joint transmission, the full-bandwidth J-TX field indicates whether the multi-AP MLD candidate set corresponding to the current candidate set info field supports full bandwidth-based joint transmission, the partial-bandwidth J-TX field indicates whether the multi-AP MLD candidate set corresponding to the current candidate set info field supports partial bandwidth-based joint transmission, the detection and discard field indicates whether the multi-AP MLD candidate set corresponding to the current candidate set info field supports, in a C-UL-MU MIMO mode, receiving and demodulating data/frames from other users and performing discarding to obtain useful data/frames, and the interference-reduction field indicates whether the multi-AP MLD candidate set corresponding to the current candidate set info field supports, in the C-UL-MU MIMO mode, directly treating data from other users as interference and directly receiving and demodulating data/frames from a target user.

175. The method according to claim 174, wherein
in a case where the multi-AP MLD scheme field does not comprise the uplink C-OFDMA field and the downlink C-OFDMA field, the multi-AP MLD candidate set corresponding to the current candidate set info field supports both uplink C-OFDMA and downlink C-OFDMA by default.

176. The method according to claim 174, wherein
in a case where a value of the single-user J-TX field indicates that the multi-AP MLD candidate set corresponding to the current candidate set info field does not support joint transmission for a same user, the multi-AP MLD scheme field does not comprise the multi-user J-TX field, or a value of the multi-user J-TX field indicates that the multi-AP MLD candidate set corresponding to the current candidate set info field does not support joint transmission for multiple users; and/or,
in a case where the value of the single-user J-TX field indicates that the multi-AP MLD candidate set corresponding to the current candidate set info field does not support joint transmission for a same user, the multi-AP MLD scheme field does not comprise the diversity J-TX field, or a value of the diversity J-TX field indicates that the multi-AP MLD candidate set corresponding to the current candidate set info field does not support diversity-based joint transmission; and/or,
in a case where the value of the single-user J-TX field indicates that the multi-AP MLD candidate set corresponding to the current candidate set info field does not support joint transmission for a same user, the multi-AP MLD scheme field does not comprise the multiplexing J-TX field, or a value of the multiplexing J-TX field indicates that the multi-AP MLD candidate set corresponding to the current candidate set info field does not support multiplexing-based joint transmission; and/or,
in a case where the value of the single-user J-TX field indicates that the multi-AP MLD candidate set corresponding to the current candidate set info field does not support joint transmission for a same user, the multi-AP MLD scheme field does not comprise the full-bandwidth J-TX field, or a value of the full-bandwidth J-TX field indicates that the multi-AP MLD candidate set corresponding to the current candidate set info field does not support full bandwidth-based joint transmission; and/or,
in a case where the value of the single-user J-TX field indicates that the multi-AP MLD candidate set corresponding to the current candidate set info field does not support joint transmission for a same user, the multi-AP MLD scheme field does not comprise the partial-bandwidth J-TX field, or a value of the partial-bandwidth J-TX field indicates that the multi-AP MLD candidate set corresponding to the current candidate set info field does not support partial bandwidth-based joint transmission.

177. The method according to claim 174, wherein
in a case where the value of the single-user J-TX field indicates that the multi-AP MLD candidate set corresponding to the current candidate set info field supports joint transmission for a same user, the multi-AP MLD scheme field does not comprise the diversity J-TX field and the full-bandwidth J-TX field.

178. The method according to claim 177, wherein
the multi-AP MLD candidate set corresponding to the current candidate set info field supports diversity-based joint transmission by default; and/or
the multi-AP MLD candidate set corresponding to the current candidate set info field supports full bandwidth-based joint transmission by default.

179. The method according to claim 171, wherein
the multi-AP MLD scheme field comprises at least one of: a C-OFDMA support field, a C-SR support field, a C-BF support field, a J-TX support field, or a C-UL MU MIMO support field; or
the multi-AP MLD scheme field comprises at least one of: the C-SR support field, the C-BF support field, the J-TX support field, or the C-UL MU MIMO support field;
wherein the C-OFDMA support field indicates that the multi-AP MLD candidate set corresponding to the current candidate set info field supports C-OFDMA, the C-SR support field indicates that the multi-AP MLD candidate set corresponding to the current candidate set info field supports C-SR, the C-BF support field indicates that the multi-AP MLD candidate set corresponding to the current candidate set info field supports C-BF, the J-TX support field indicates that the multi-AP MLD candidate set corresponding to the current candidate set info field supports J-TX, and the C-UL MU MIMO support field indicates that the multi-AP MLD candidate set corresponding to the current candidate set info field supports C-UL MU MIMO.

180. The method according to claim 179, wherein
in a case where the multi-AP MLD scheme field does not comprise the C-OFDMA support field, the multi-AP MLD candidate set corresponding to the current candidate set info field supports both uplink C-OFDMA and downlink C-OFDMA by default.

181. The method according to claim 171, wherein
each AP MLD info field in the multiple AP MLD info fields comprises at least one of: a BSSID field, an AP MLD ID field, an AP MLD roles field, or a basic multi-link element;
wherein the BSSID field indicates a BSSID of an AP MLD indicated by the current AP MLD info field, the AP MLD ID field indicates an ID of the AP MLD indicated by the current AP MLD info field, the AP MLD roles field indicates a multi-AP MLD coordination role supported by the AP MLD indicated by the current AP MLD info field, and the basic multi-link element indicates multi-link information of the AP MLD indicated by the current AP MLD info field.

182. The method according to claim 181, wherein
the AP MLD ID field is directly set by a master AP MLD or a coordinating AP MLD, or the AP MLD ID field is determined by an order of the AP MLD indicated by the current AP MLD info field in the multi-AP MLD candidate set corresponding to the current candidate set info field.

183. The method according to claim 181 or 182, wherein
the AP MLD roles field comprises at least one of: a coordinating AP MLD role field, a coordinated AP MLD role field, a sharing AP MLD role field, or a shared AP MLD role field;
wherein in a channel sounding phase, a coordinating AP MLD indicated by the coordinating AP MLD role field initiates sounding, and an AP MLD indicated by the coordinated AP MLD role field participates in sounding;
wherein in a preparation phase and/or a transmission phase, an AP MLD indicated by the sharing AP MLD role field shares transmission opportunity (TXOP) resources for the AP MLD indicated by the sharing AP MLD role field with an AP MLD indicated by the shared AP MLD role field to perform coordinated transmission.

184. The method according to any one of claims 160 to 183, wherein before receiving, by the second AP MLD, the multi-AP MLD candidate set request frame, the method further comprises:
sending, by the second AP MLD, multi-AP MLD coordination capabilities information of the second AP MLD.

185. The method according to claim 184, wherein
the multi-AP MLD coordination capabilities information of the second AP MLD is sent via a third frame;
wherein the third frame contains a multi-link element and a multi-AP MLD coordination capabilities element;
wherein the multi-link element indicates multi-link information of the second AP MLD, and a multi-AP MLD coordination capabilities field in the multi-AP MLD coordination capabilities element indicates the multi-AP MLD coordination capabilities information of the second AP MLD.

186. The method according to claim 185, wherein
the multi-link element comprises at least one of: a multi-link control field, a common info field, or a link info field;
wherein a type field in the multi-link control field indicates that a type of the multi-link element is a basic multi-link element, and a presence bitmap field in the multi-link control field indicates a field present in the common info field;
wherein first *Q₁* bits and last *Q₂* bits of a link ID info field in the common info field jointly indicate a link ID of an affiliated AP of an AP MLD that sends the basic multi-link element during multi-AP MLD coordination, wherein *Q₁* and *Q₂* are both positive integers;
wherein the link info field indicates link-related information of the second AP MLD.

187. The method according to claim 186, wherein the link info field comprises at least one per-station (STA) profile field, and first *Q₃* bits and last *Q₄* bits of an STA control field in each of the at least one per-STA profile field jointly indicate a link ID of a STA reported during multi-AP MLD coordination, where *Q₃* and *Q₄* are both positive integers.

188. The method according to claim 185, wherein
the multi-AP MLD coordination capabilities field comprises at least one of: a multi-AP MLD coordination control field, a common info field, a C-OFDMA specific info field, a C-SR specific info field, a J-TX specific info field, or a C-UL MU MIMO specific info field; or the multi-AP MLD coordination capabilities field comprises at least one of: the multi-AP coordination control field, the common info field, the C-SR specific info field, the J-TX specific info field, or the C-UL MU MIMO specific info field;
wherein the multi-AP MLD coordination control field indicates a multi-AP MLD coordination mode-related field specifically contained in the multi-AP MLD coordination capabilities field; the common info field indicates a multi-AP MLD candidate set setup method, a role supported by the second AP MLD under a multi-AP MLD transmission scheme, and a channel sounding method supported by the second AP MLD; the C-OFDMA specific info field indicates a type of C-OFDMA supported by the second AP MLD; the C-SR specific info field indicates a type of C-SR supported by the second AP MLD; the J-TX specific info field indicates a type of J-TX supported by the second AP MLD; and the C-UL MU MIMO specific info field indicates a type of C-UL MU MIMO supported by the second AP MLD.

189. The method according to claim 188, wherein
the multi-AP MLD coordination control field comprises at least one of: a C-OFDMA present field, a C-SR present field, a C-BF support field, a J-TX present field, or a C-UL MU MIMO present field; or the multi-AP MLD coordination control field comprises at least one of: the C-SR present field, the C-BF support field, the J-TX present field, or the C-UL MU MIMO present field;
wherein the C-OFDMA present field indicates whether the multi-AP MLD coordination capabilities field comprises the C-OFDMA specific info field, and indicates whether the second AP MLD supports C-OFDMA;
the C-SR present field indicates whether the multi-AP MLD coordination capabilities field comprises the C-SR specific info field, and indicates whether the second AP MLD supports C-SR;
the C-BF support field indicates whether the second AP MLD supports C-BF;
the J-TX present field indicates whether the multi-AP MLD coordination capabilities field comprises the J-TX specific info field, and indicates whether the second AP MLD supports J-TX; and
the C-UL MU MIMO present field indicates whether the multi-AP MLD coordination capabilities field comprises the C-UL MU MIMO specific info field, and indicates whether the second AP MLD supports C-UL MU MIMO.

190. The method according to claim 189, wherein
in a case where the multi-AP MLD scheme field does not comprise the C-OFDMA present field, the multi-AP MLD coordination capabilities field implicitly indicates that the second AP MLD supports both uplink C-OFDMA and downlink C-OFDMA.

191. The method according to claim 188, wherein
the C-OFDMA specific info field comprises an uplink C-OFDMA field and a downlink C-OFDMA field;
wherein the uplink C-OFDMA field indicates whether the second AP MLD supports uplink C-OFDMA, and the downlink C-OFDMA field indicates whether the second AP MLD supports downlink C-OFDMA.

192. The method according to claim 188, wherein
the C-SR specific info field includes at least one of: a C-SR and C-OFDMA joint field, a C-SR and C-BF joint field, a C-SR and J-TX joint field, or a C-SR and C-UL MU MIMO joint field;
wherein the C-SR and C-OFDMA joint field indicates whether the second AP MLD supports joint use of C-SR and C-OFDMA, the C-SR and C-BF joint field indicates whether the second AP MLD supports joint use of C-SR and C-BF, the C-SR and J-TX joint field indicates whether the second AP MLD supports joint use of C-SR and J-TX, and the C-SR and C-UL MU MIMO joint field indicates whether the second AP MLD supports joint use of C-SR and C-UL MU MIMO.

193. The method according to claim 192, wherein
in a case where the second AP MLD does not support C-BF, the C-SR specific info field does not comprise the C-SR and C-BF joint field, or a value of the C-SR and C-BF joint field indicates that the second AP MLD does not support joint use of C-SR and C-BF; and/or
in a case where the second AP MLD does not support J-TX, the C-SR specific info field does not comprise the C-SR and J-TX joint field, or a value of the C-SR and J-TX joint field indicates that the second AP MLD does not support joint use of C-SR and J-TX; and/or
in a case where the second AP MLD does not support C-UL MU MIMO, the C-SR specific info field does not comprise the C-SR and C-UL MU MIMO joint field, or a value of the C-SR and C-UL MU MIMO joint field indicates that the second AP MLD does not support joint use of C-SR and C-UL MU MIMO.

194. The method according to claim 188, wherein
the J-TX specific info field comprises at least one of: a single-user J-TX field, a multi-user J-TX field, a diversity J-TX field, a multiplexing J-TX field, a full-bandwidth J-TX field, or a partial-bandwidth J-TX field; or
the J-TX specific info field comprises at least one of: the multi-user J-TX field, the diversity J-TX field, the multiplexing J-TX field, the full-bandwidth J-TX field, or the partial-bandwidth J-TX field; or
the J-TX specific info field comprises at least one of: the single-user J-TX field, the multi-user J-TX field, the multiplexing J-TX field, the full-bandwidth J-TX field, or the partial-bandwidth J-TX field; or
the J-TX specific info field comprises at least one of: the single-user J-TX field, the multi-user J-TX field, the diversity J-TX field, the multiplexing J-TX field, or the partial-bandwidth J-TX field;
wherein the single-user J-TX field indicates whether the second AP MLD supports joint transmission for a same user, the multi-user J-TX field indicates whether the second AP MLD supports joint transmission for multiple users, the diversity J-TX field indicates whether the second AP MLD supports diversity-based joint transmission, the multiplexing J-TX field indicates whether the second AP MLD supports multiplexing-based joint transmission, the full-bandwidth J-TX field indicates whether the second AP MLD supports full bandwidth-based joint transmission, and the partial-bandwidth J-TX field indicates whether the second AP MLD supports partial bandwidth-based joint transmission.

195. The method according to claim 194, wherein
in a case where the J-TX specific info field does not comprise the single-user J-TX field, the second AP MLD supports joint transmission for a single user by default; and/or
in a case where the J-TX specific info field does not comprise the diversity J-TX field, the second AP MLD supports diversity-based joint transmission by default; and/or
in a case where the J-TX specific info field does not comprise the full-bandwidth J-TX field, the second AP MLD supports full bandwidth-based joint transmission by default.

196. The method according to claim 188, wherein
the C-UL MU MIMO specific info field comprises at least one of: a detection and discard field or an interference-reduction field;
wherein the detection and discard field indicates whether the second AP MLD supports, in a C-UL MU MIMO mode, receiving and demodulating data/frames from other users and performing discarding to obtain useful data/frames;
wherein the interference-reduction field indicates whether the second AP MLD supports, in the C-UL MU MIMO mode, directly treating data from other users as interference and directly receiving and demodulating data/frames from a target user.

197. The method according to any one of claims 185 to 196, wherein
the third frame is one of: a beacon frame, a broadcast probe response frame, and a DMG beacon frame.

198. The method according to any one of claims 160 to 197, wherein
the first AP MLD is a master AP MLD.

199. An access point (AP) multiple link device (MLD), the AP MLD being a first AP MLD and comprising:
a communication unit configured to receive an association request frame sent by a first non-AP MLD;
wherein the association request frame is used to request association with a target multi-AP MLD candidate set, and the association request frame contains first multi-link information, wherein the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

200. A non-access point (AP) multiple link device (MLD), the non-AP MLD being a first non-AP MLD and comprising:
a communication unit configured to send an association request frame to a first AP MLD;
wherein the association request frame is used to request association with a target multi-AP MLD candidate set, and the association request frame contains first multi-link information, wherein the first multi-link information indicates information of multiple links that the first non-AP MLD requests to set up between the first non-AP MLD and the first AP MLD, and the target multi-AP MLD candidate set is a multi-AP MLD candidate set to which the first AP MLD belongs.

201. An access point (AP) multiple link device (MLD), the AP MLD being a second AP MLD and comprising:
a communication unit configured to receive a multi-AP MLD candidate set request frame sent by a first AP MLD;
wherein the multi-AP MLD candidate set request frame contains coordination capabilities and multi-link information of a multi-AP MLD candidate set that the first AP MLD requests to set up.

202. An access point (AP) multiple link device (MLD), comprising: a processor and a memory, wherein the memory is configured to store a computer program, and the processor is configured to invoke and execute the computer program stored in the memory, such that the AP MLD performs the method according to any one of claims 1 to 92.

203. A non-access point (AP) multiple link device (MLD), comprising: a processor and a memory, wherein the memory is configured to store a computer program, and the processor is configured to invoke and execute the computer program stored in the memory, such that the non-AP MLD performs the method according to any one of claims 93 to 159.

204. An access point (AP) multiple link device (MLD), comprising: a processor and a memory, wherein the memory is configured to store a computer program, and the processor is configured to invoke and execute the computer program stored in the memory, such that the AP MLD performs the method according to any one of claims 160 to 198.

205. A chip, comprising: a processor configured to invoke and execute a computer program from a memory, such that a device equipped with the chip performs the method according to any one of claims 1 to 92, or performs the method according to any one of claims 93 to 159, or performs the method according to any one of claims 160 to 198.

206. A computer-readable storage medium, configured to store a computer program,
wherein when the computer program is executed, the method according to any one of claims 1 to 92 is performed, or the method according to any one of claims 93 to 159 is performed, or the method according to any one of claims 160 to 198 is performed.

207. A computer program product, comprising computer program instructions, wherein when the computer program instructions are executed, the method according to any one of claims 1 to 92 is performed, or the method according to any one of claims 93 to 159 is performed, or the method according to any one of claims 160 to 198 is performed.

208. A computer program, wherein when the computer program is executed, the method according to any one of claims 1 to 92 is performed, or the method according to any one of claims 93 to 159 is performed, or the method according to any one of claims 160 to 198 is performed.
